# EUROPEAN PATENT APPLICATION

(11) **EP 4 679 059 A1**
(43) Date of publication of application: **14.01.2026**
(21) Application number: 23926410.4
(22) Date of filing: 06.11.2023
(51) Int. Cl.: G01N 15/1409

(54) **BIOPARTICLE SORTING SYSTEM, BIOPARTICLE SORTING METHOD, AND CHIP FOR BIOPARTICLE SORTING**

(30) Priority: 07.03.2023 JP 2023034555
(71) Applicant: Sony Group Corporation, Tokyo 108-0075 (JP)
(72) Inventor: NAKAMURA Masahiko, Tokyo 108-0075 (JP)
(74) Representative: D Young & Co LLP
(86) International application number: PCT/JP2023/039878
(87) International publication number: WO 2024/185202

(57) **Abstract**

An object of the present disclosure is to provide a new technique for fractionating target biological particles highly efficiently.

The present disclosure provides a biological particle fractionation system configured to fractionate a collection-target particle flowing through a flow path into a collection flow path, in which the biological particle fractionation system is configured to be able to execute, as one fractionation operation for fractionating the collection-target particle, a first step to lower a pressure in the collection flow path from a reference pressure and guide the one collection-target particle into the collection flow path, a second step to restore the pressure lowered at the first step to the reference pressure, and a third step to mitigate an excess pressure variation generated as a result of execution of the second step.

## Description

### [Technical Field]

The present disclosure relates to a biological particle fractionation system, a biological particle fractionation method, and a biological particle fractionation chip. More specifically, the present disclosure relates to a biological particle fractionation system configured to fractionate, into a collection flow path, one or more collection-target particles flowing through a flow path, a biological particle fractionation method for fractionating, into a collection flow path, one or more collection-target particles flowing through a flow path, and a biological particle fractionation chip to be used in order to execute the fractionation method.

### [Background Art]

For example, particle groups such as cells, microorganisms, and liposomes are labelled with fluorescent dyes, and characteristics of respective particles in the particle groups are measured by emitting laser beams onto the particles and measuring the intensity and/or patterns of the fluorescence generated from the excited fluorescent dyes. Examples of particle analyzing apparatuses that perform the measurement can include flow cytometers and cell sorters.

For example, a biological particle fractionating apparatus such as a flow cytometer or a cell sorter analyzes a plurality of particles one by one by emitting a laser beam (excitation beam) with a particular wavelength onto particles flowing next to each other in one line in a flow path and sensing the fluorescence and/or scattered light emitted from each particle, and fractionate desired biological particles on the basis of results of the analysis.

Several technologies for executing such biological particle fractionation have been disclosed so far. For example, the following PTL 1 discloses a microparticle fractionating apparatus including a main flow path where a liquid including microparticles is caused to flow, a branch flow path communicating with the main flow path, an actuator that generates negative pressure in the branch flow path, and a driving unit that controls a voltage applied to the actuator and generates pressure changes including a step waveform component and an undershoot waveform component in the branch flow path. PTL 2 mentioned below discloses a microparticle fractionation method including a procedure in which, by generating negative pressure in a branch flow path communicating with a main flow path, microparticles in a liquid flowing through the main flow path are collected into a partial region whose cross-section perpendicular to the flowing direction of the liquid in the branch flow path is formed larger than other portions. PTL 3 mentioned below discloses a microparticle collection method performed in a microparticle fractionation mechanism having a flow path structure including a main flow path where microparticles are caused to flow, a collection flow path where collection-target particles in the microparticles are collected, a connecting flow path connecting the main flow path and the collection flow path, and a liquid supply flow path connected to the connecting flow path such that the liquid supply flow path can supply a liquid to the connecting flow path. The microparticle collection method includes a flow-through step at which first liquid including microparticles is caused to flow through the main flow path, a decision step at which it is decided whether microparticles flowing through the main flow path are collection-target particles, and a collection step at which collection-target particles are collected into the collection flow path. At the collection step, the collection-target particles are collected into second liquid which is in the collection flow path, and is immiscible with the first liquid, in a state where the collection-target particles are included in the first liquid.

### [Citation List]

### [Patent Literature]

[PTL 1]
   PCT Patent Publication No. WO2014/013802
[PTL 2]
   Japanese Patent Laid-open No. 2014-039534
[PTL 3]
   PCT Patent Publication No. WO 2021/084814

### [Summary]

### [Technical Problem]

Efficient fractionation of target biological particles is demanded. Particularly, rapid and stable fractionation of biological particle is demanded. For example, rapid and stable biological particle fractionation is considered to contribute to further acceleration and enhanced precision of analyses.

In view of this, an object of the present disclosure is to provide a new technique for fractionating target biological particles highly efficiently.

### [Solution to Problem]

The present disclosure provides a biological particle fractionation system configured to fractionate a collection-target particle flowing through a flow path into a collection flow path, in which the biological particle fractionation system is configured to be able to execute, as one fractionation operation for fractionating the collection-target particle, a first step to lower a pressure in the collection flow path from a reference pressure and guide the collection-target particle into the collection flow path, a second step to restore the pressure lowered at the first step to the reference pressure, and a third step to mitigate an excess pressure variation generated as a result of execution of the second step.

The biological particle fractionation system may be configured to change the pressure in the collection flow path by deforming the collection flow path.

The biological particle fractionation system may be configured to apply a pulse voltage to an actuator for changing the pressure in the collection flow path in the one fractionation operation, and a drive waveform of the pulse voltage may be configured such that the actuator executes the first step, the second step, and the third step.

The drive waveform of the pulse voltage may have a first falling edge section for executing the first step, a rising edge section for executing the second step, and a second falling edge section for executing the third step.

The biological particle fractionation system may have an information processing unit that executes a decision process based on an interval between a collection-target particle and a subsequent biological particle, and the decision process may be a process of deciding which fractionation operation to apply for fractionating the one collection-target particle on a basis of whether the interval is in a predetermined numerical value range.

In the decision process, the information processing unit may reference a step counter value related to the number of times fractionation operations are able to be executed.

As the one fractionation operation, the biological particle fractionation system may be configured to be able to execute a fractionation operation (hereinbelow, also called a "first fractionation operation") to execute the first step, the second step, and the third step, or a second fractionation operation to execute the first step and the second step and execute a fourth step to further execute elimination of an offset of the collection flow path generated by execution of the third step in a case where a predetermined condition is satisfied.

The biological particle fractionation system may have an information processing unit that executes a decision process based on an interval between a collection-target particle and the subsequent biological particle, and the information processing unit can select either the first fractionation operation or the second fractionation operation on a basis of the interval.

The biological particle fractionation system may be configured to increase the pressure by one level or increase the pressure, at a plurality of levels at the fourth step.

In a case where the second fractionation operation is executed, the information processing unit may decide whether to execute the fourth step on a basis of an interval between a completion time of the second step in the second fractionation operation and a time at which the subsequent biological particle is sensed.

The biological particle fractionation system may be configured to apply a pulse voltage to an actuator for changing the pressure in the collection flow path, and a drive waveform of the pulse voltage may be configured such that the actuator executes the first fractionation operation or the second fractionation operation according to an interval between a collection-target particle and the subsequent biological particle.

A drive waveform for executing the first fractionation operation may have a first falling edge section for executing the first step, a rising edge section for executing the second step, and a second falling edge section for executing the third step, and a drive waveform for executing the second fractionation operation may have a first falling edge section for executing the first step, and a rising edge section for executing the second step, and further has a second rising edge section for executing the fourth step in a case where the fourth step is executed.

The biological particle fractionation system may be configured to increase the pressure by one level at the fourth step, and the second rising edge section for executing the fourth step can have a single-step rising edge.

The biological particle fractionation system may be configured to be able to increase the pressure at a plurality of levels at the fourth step, and is configured to be able to change the number of levels at which the pressure is increased.

In the second fractionation operation, a fifth step of preventing a particle reverse flow capable of being generated as a result of execution of the second step may be executed further.

The biological particle fractionation system may be configured as an emulsion producing apparatus, and the emulsion may include an emulsion particle having a fractionated collection-target particle.

In addition, the present disclosure provides also a biological particle fractionation method including fractionating a collection-target particle flowing through a flow path into a collection flow path, in which the biological particle fractionation method includes executing, as one fractionation operation for fractionating the collection-target particle, a first step to lower a pressure in the collection flow path from a reference pressure and guide the collection-target particle into the collection flow path, a second step to restore the pressure lowered at the first step to the reference pressure, and a third step to mitigate an excess pressure variation generated as a result of execution of the second step.

In addition, the present disclosure provides also a biological particle fractionation chip including a collection flow path where a collection-target particle flowing through a flow path is fractionated, in which the biological particle fractionation chip is used for fractionating the collection-target particle by executing a fractionation operation including, as one fractionation operation for fractionating the collection-target particle, a first step to lower a pressure in the collection flow path from a reference pressure and guide the collection-target particle into the collection flow path, a second step to restore the pressure lowered at the first step to the reference pressure, and a third step to mitigate an excess pressure variation generated as a result of execution of the second step.

### [Brief Description of Drawings]

[FIG. 1]

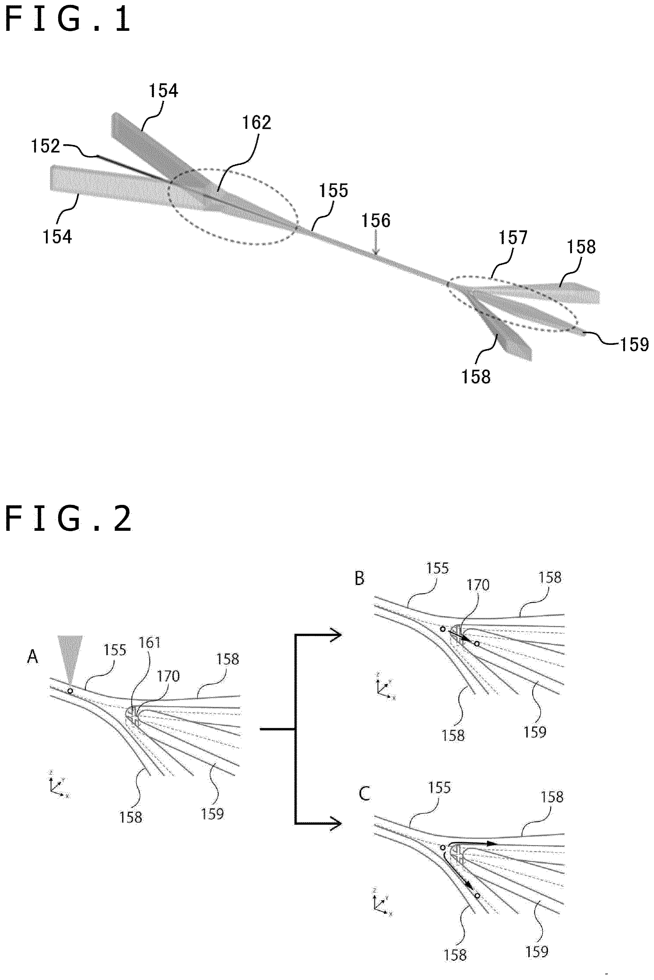

   FIG. 1 is a figure depicting a configuration example of a flow path system of a microfluidic chip where a fractionation operation is executed according to the present disclosure.
[FIG. 2]
   FIG. 2 is a figure depicting an enlarged view of a particle fractionating unit.
[FIG. 3]

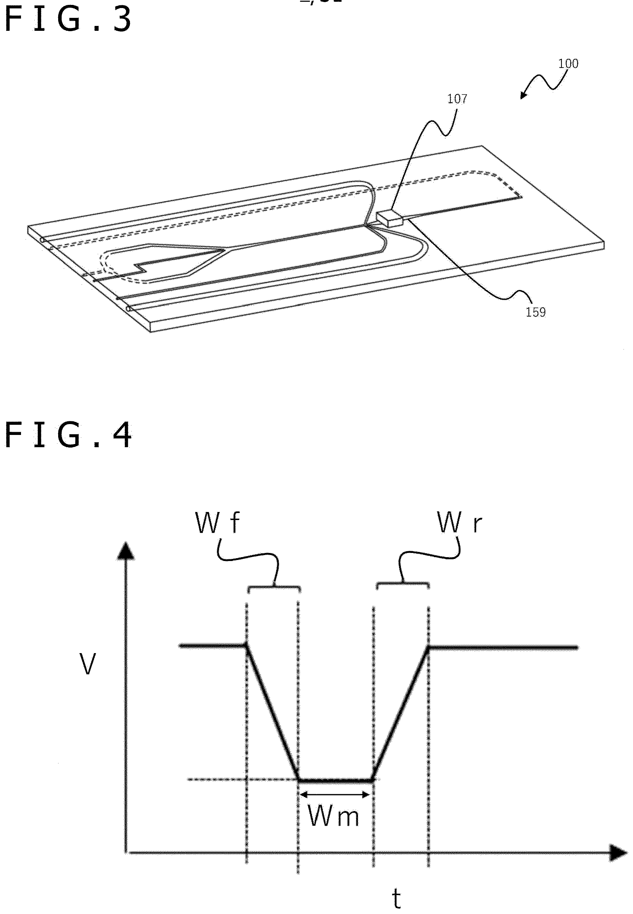

   FIG. 3 is a figure depicting a configuration example of an actuator for generating negative pressure in a pressure chamber.
[FIG. 4]
   FIG. 4 is a figure depicting an example of a basic drive waveform to be applied for fractionating a collection-target particle.
[FIG. 5]

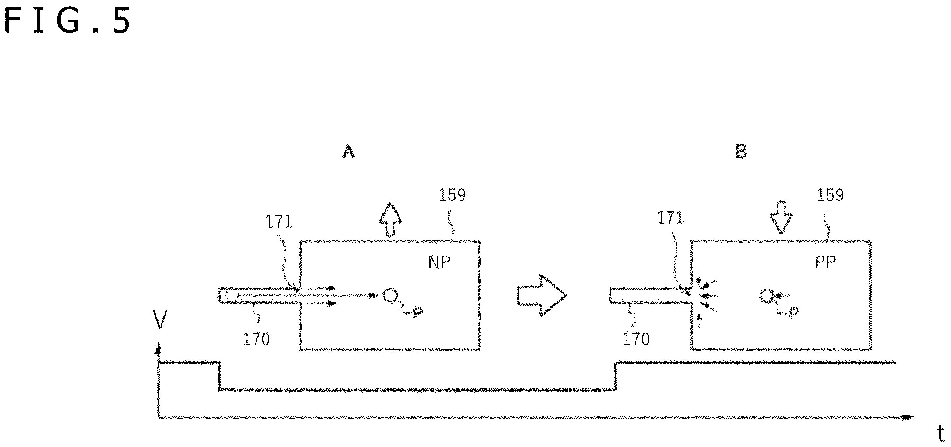

   FIG. 5 is a figure schematically depicting states of a suction operation and a discharge operation.
[FIG. 6]

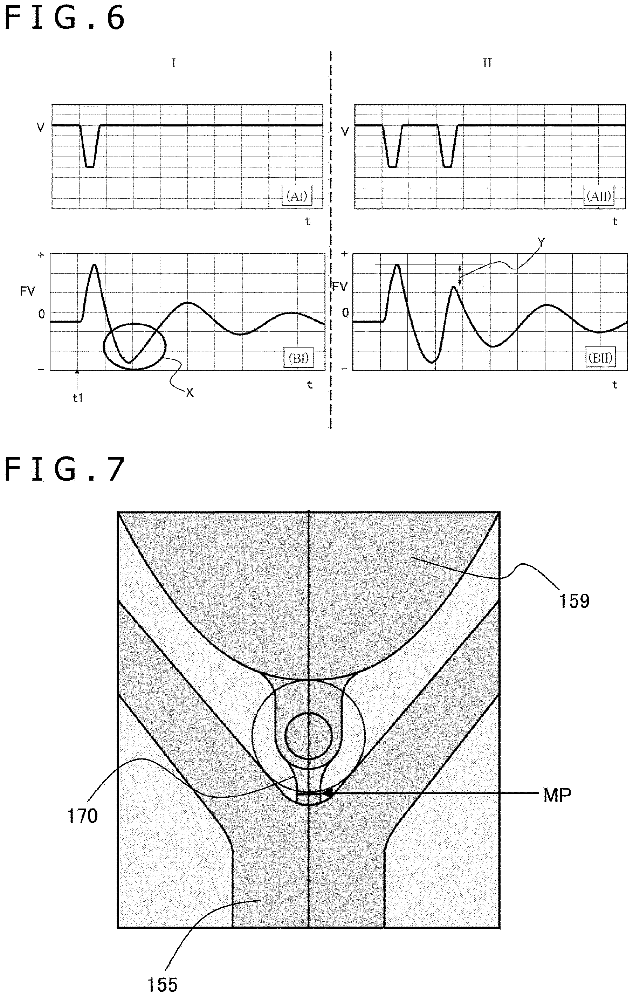

   FIG. 6 is a figure depicting a simulation result of a flow rate in a connecting flow path in a case where a pulse drive waveform according to a conventional technology is applied.
[FIG. 7]
   FIG. 7 is a figure for explaining a position where the flow rate has been simulated.
[FIG. 8]

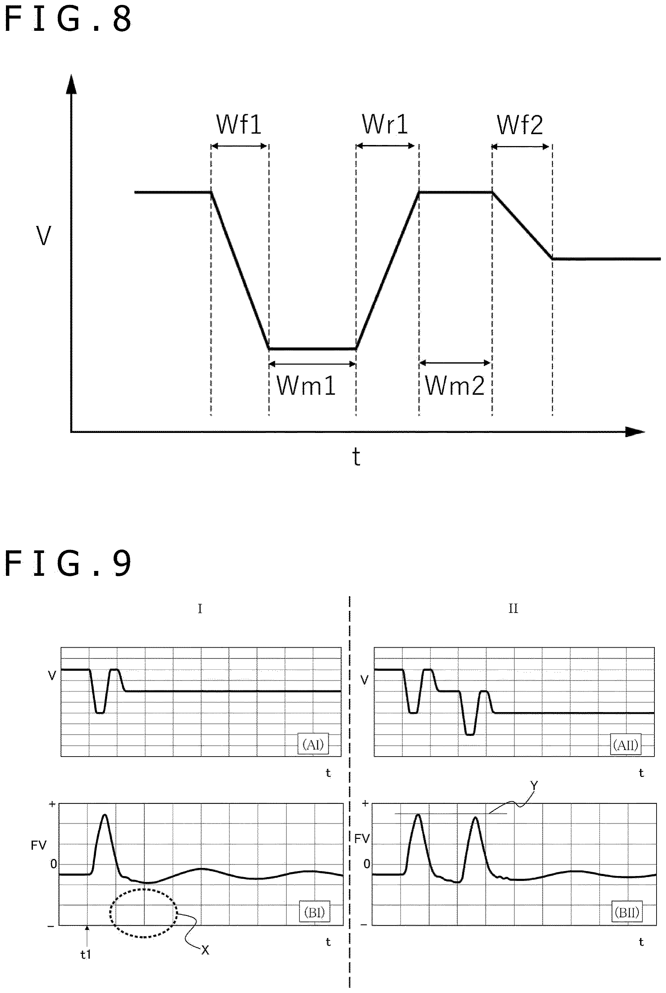

   FIG. 8 is a figure depicting an example of a drive waveform to be applied to a piezo element in order to execute a first fractionation operation.
[FIG. 9]
   FIG. 9 is a figure depicting a simulation result of the flow rate in the connecting flow path.
[FIG. 10]

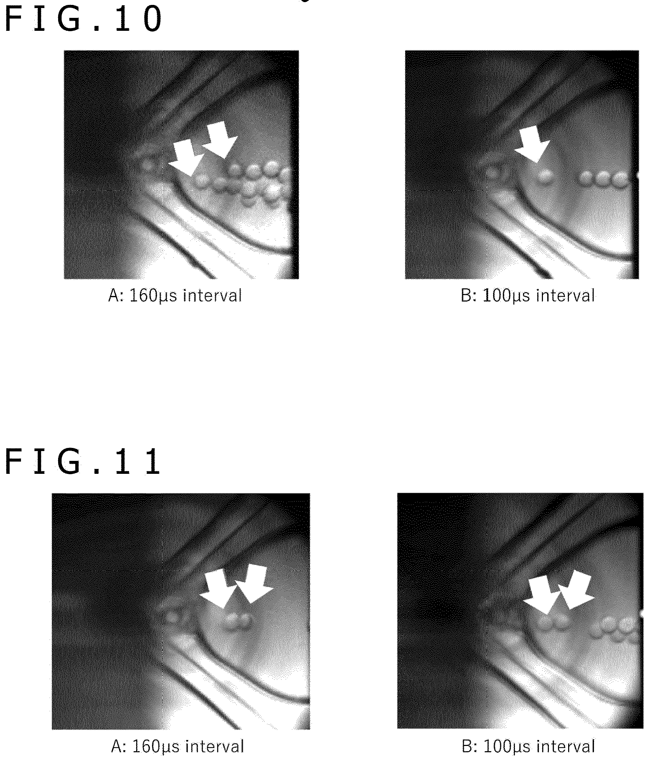

   FIG. 10 is a figure depicting results of an experiment on generation of emulsion particles.
[FIG. 11]
   FIG. 11 is a figure depicting results of an experiment on the generation of emulsion particles.
[FIG. 12]

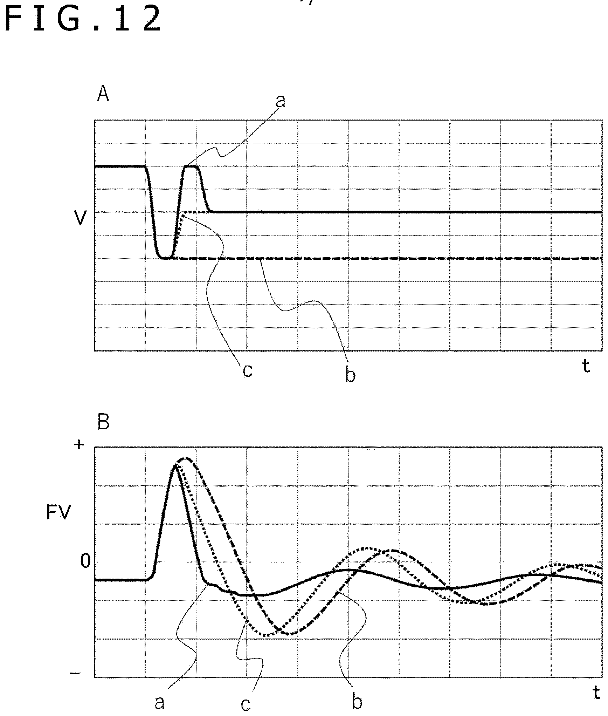

   FIG. 12 is a figure depicting a simulation result of the flow rate in the connecting flow path in a case where a falling-edge-included pulse drive waveform and waveforms other than pulse drive waveforms are used.
[FIG. 13]

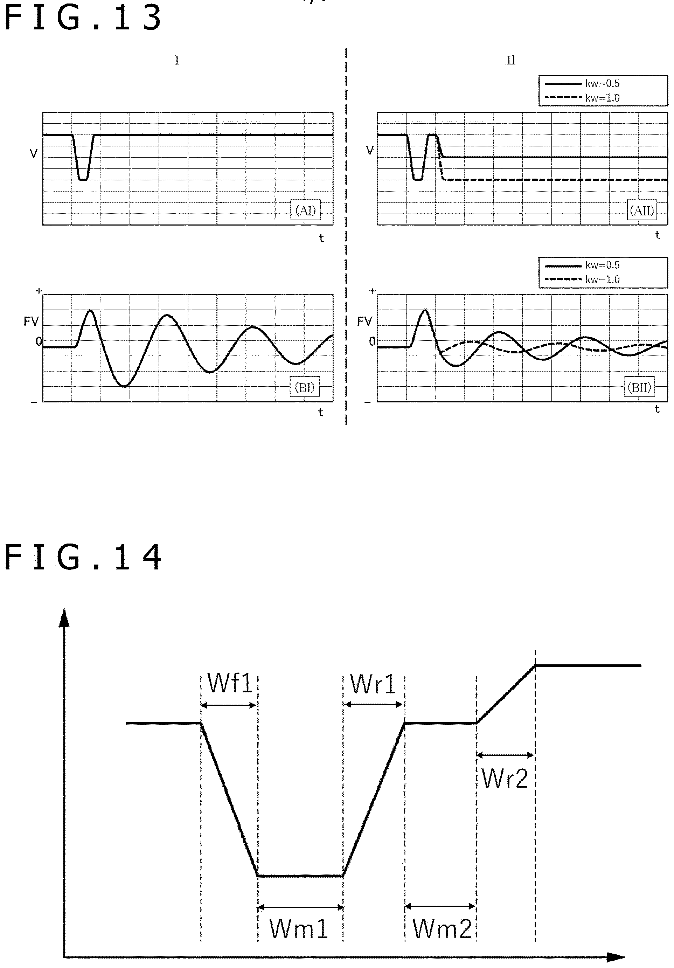

   FIG. 13 is a figure depicting a simulation result of the flow rate in a case where a flow path diameter of the connecting flow path is doubled.
[FIG. 14]
   FIG. 14 is a figure depicting an example of a drive waveform to be applied in a second fractionation operation.
[FIG. 15]

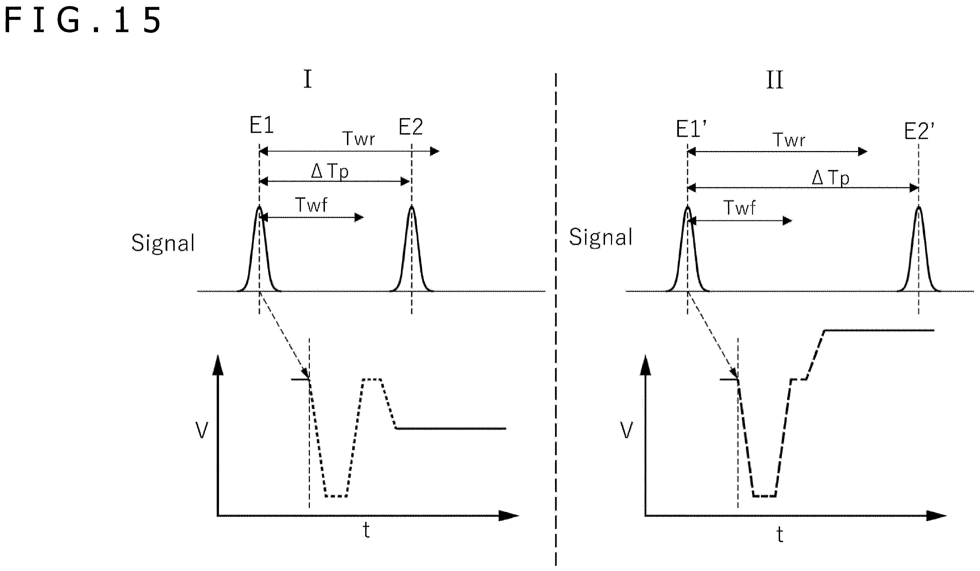

   FIG. 15 is a figure for explaining selection of the fractionation operation.
[FIG. 16]

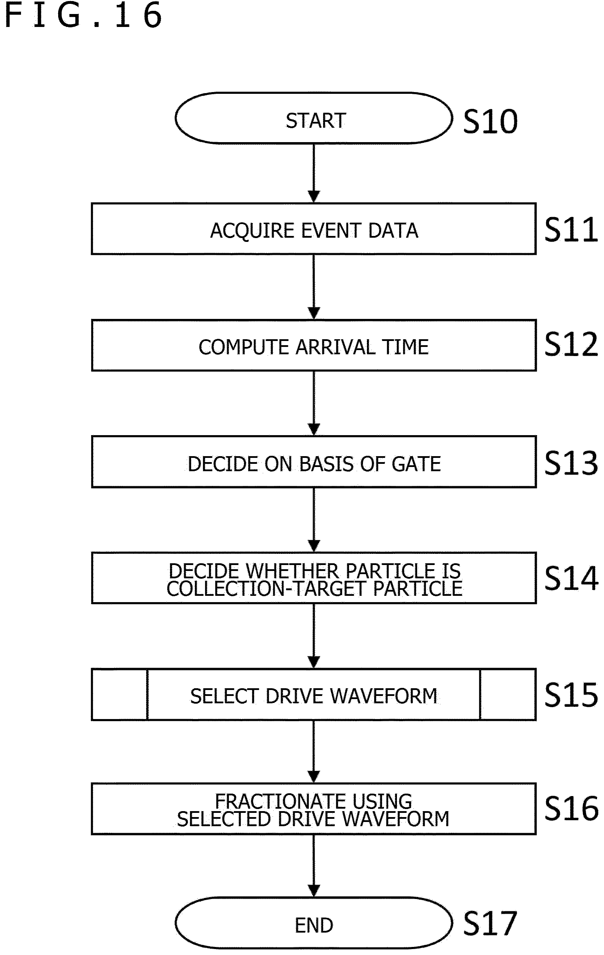

   FIG. 16 is an example of a flow diagram of a fractionation process according to the present disclosure.
[FIG. 17]

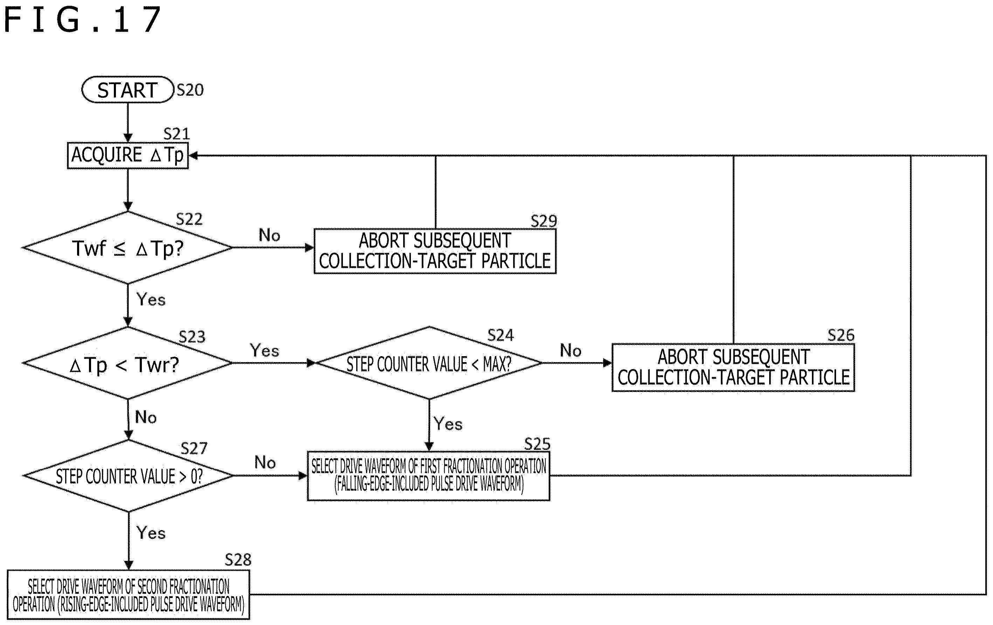

   FIG. 17 is an example of a flow diagram of a waveform selection process according to the present disclosure.
[FIG. 18]

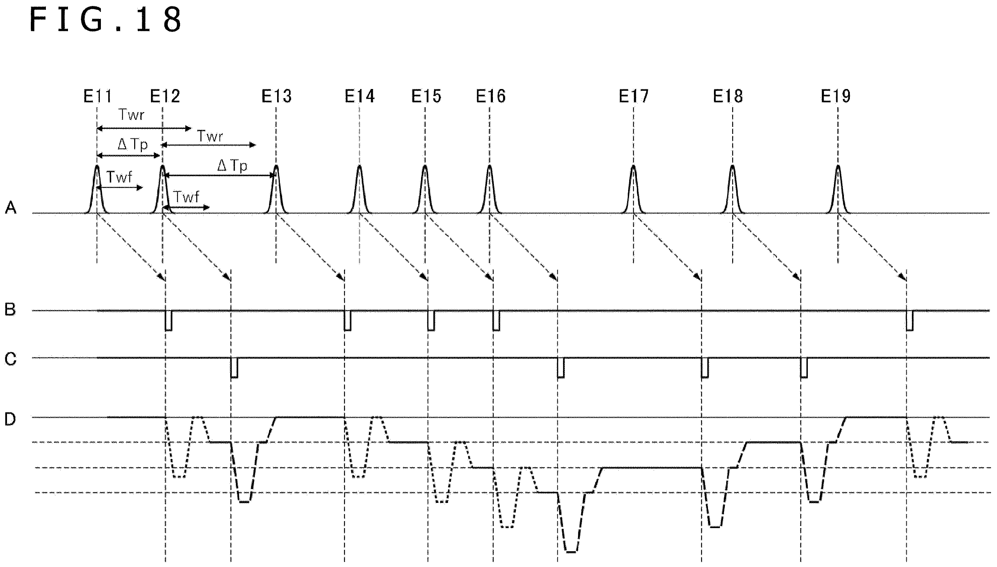

   FIG. 18 is a figure depicting an example of a time chart in a case where the waveform selection process is executed according to the present disclosure.
[FIG. 19]

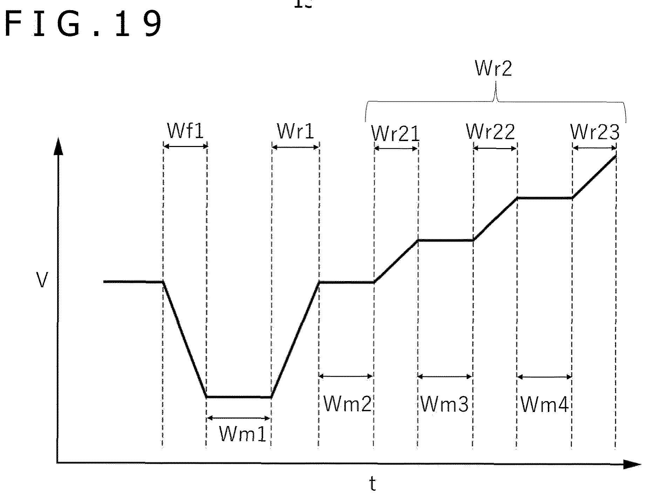

   FIG. 19 is a figure depicting an example of the drive waveform to be applied in the second fractionation operation.
[FIG. 20]

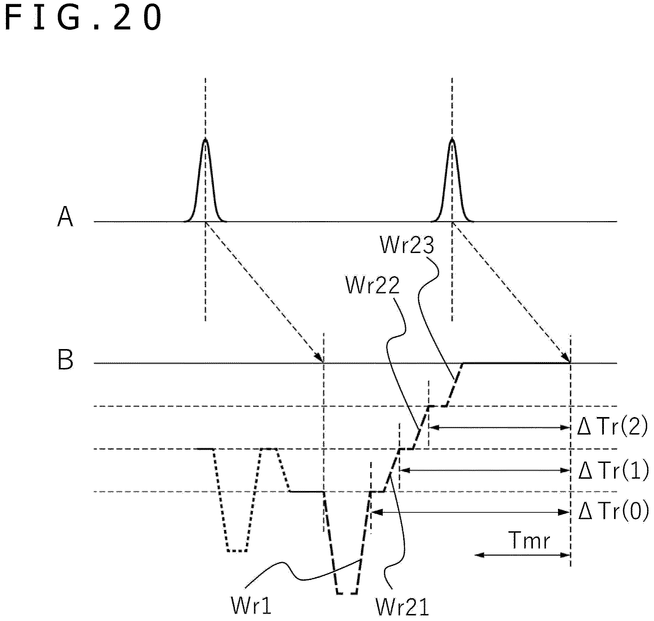

   FIG. 20 is a figure for explaining the number of times of a rising operation.
[FIG. 21]

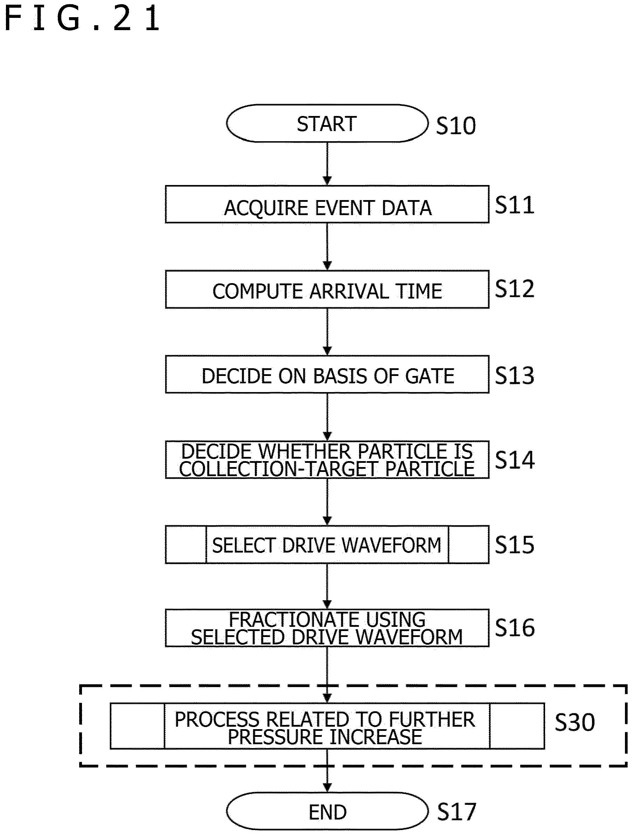

   FIG. 21 is a figure depicting an example of a procedure of a process executed by a biological particle fractionation system according to the present disclosure.
[FIG. 22]

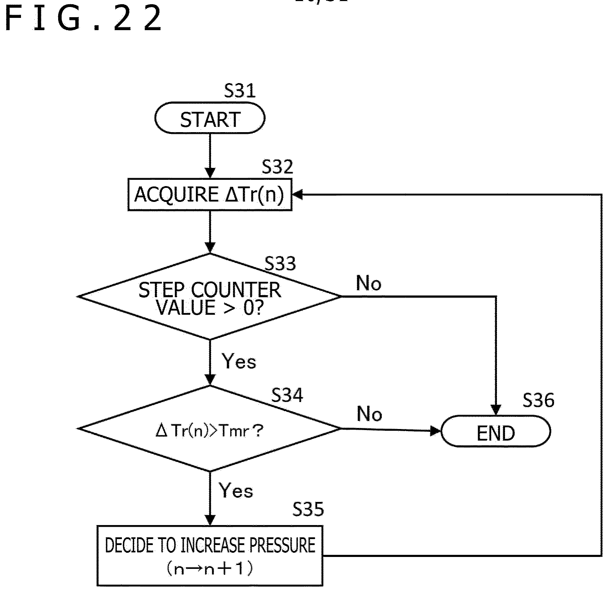

   FIG. 22 is a figure depicting an example of a processing procedure for deciding whether to execute the rising operation.
[FIG. 23]

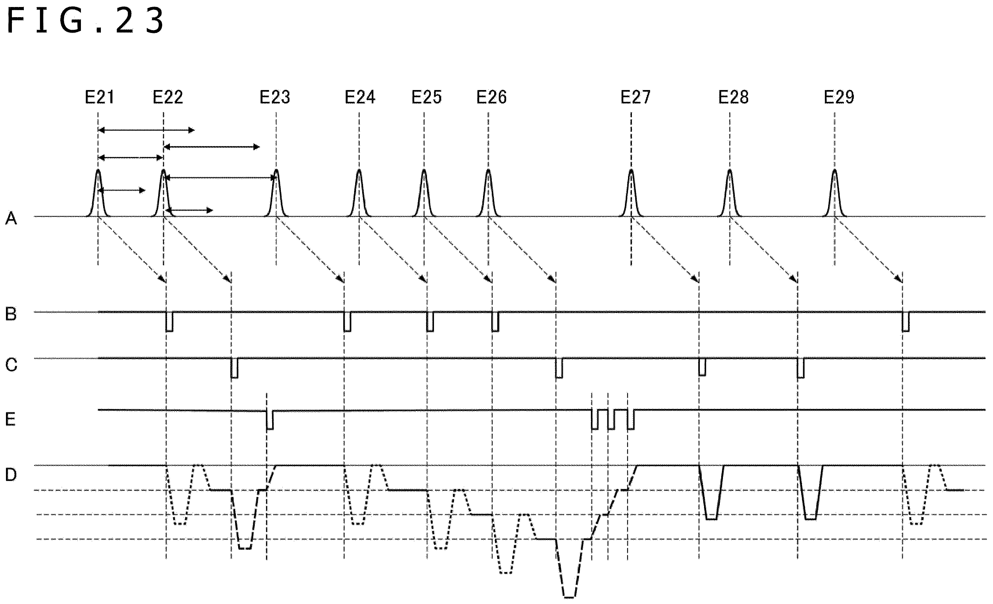

   FIG. 23 is a figure depicting an example of a time chart in a case where the waveform selection process is executed according to the present disclosure.
[FIG. 24]

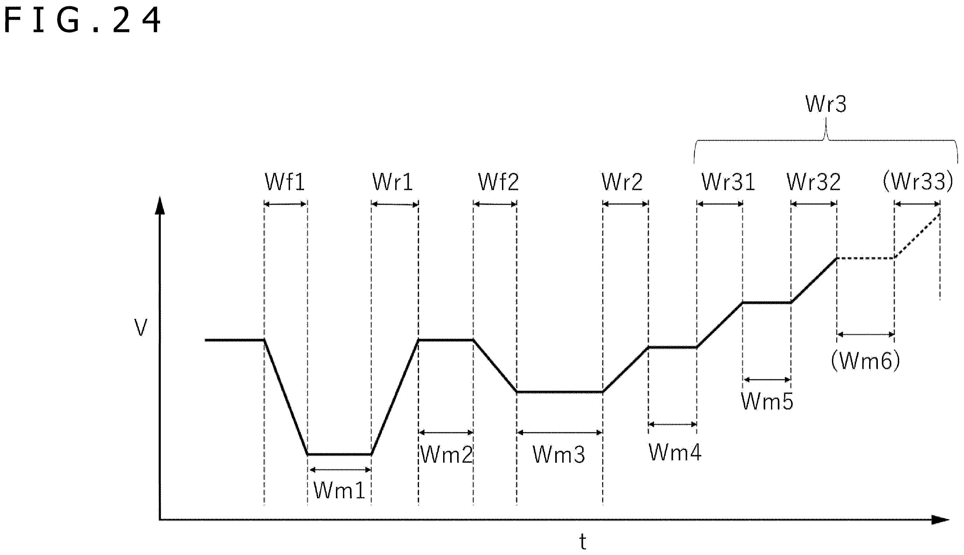

   FIG. 24 is a figure depicting an example of a drive waveform for executing the second fractionation operation including a fifth step.
[FIG. 25]

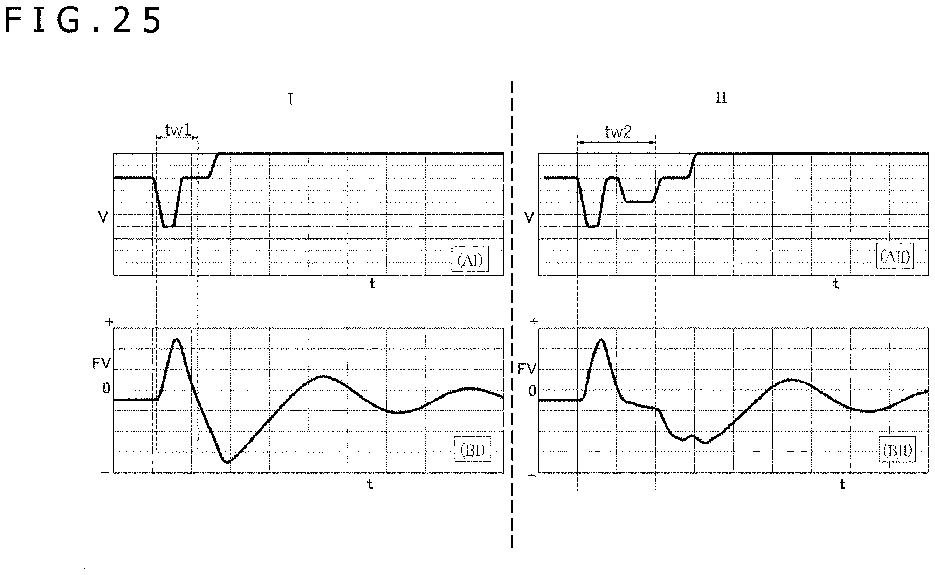

   FIG. 25 is a figure depicting a simulation result of the flow rate in the connecting flow path.
[FIG. 26]

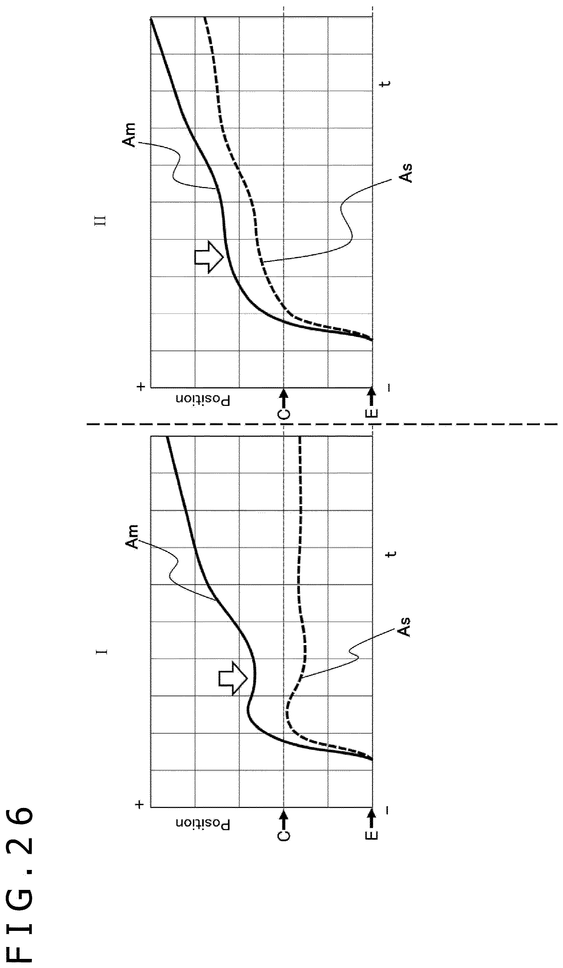

   FIG. 26 is a figure depicting a simulation result of temporal changes of positions of particles in a flowing direction.
[FIG. 27]

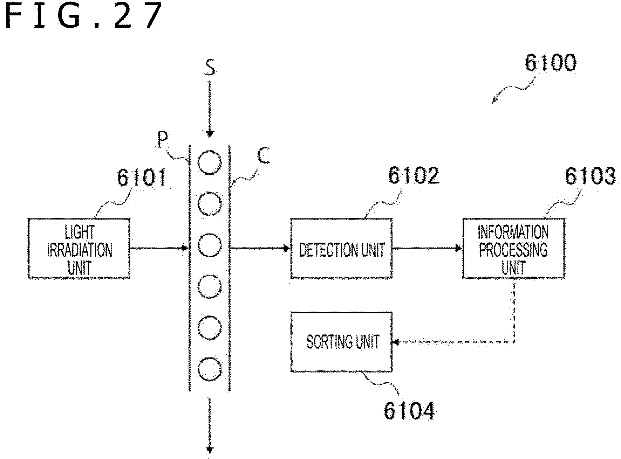

   FIG. 27 is a diagram schematically showing the overall configuration of a biological sample analyzer.
[FIG. 28A]

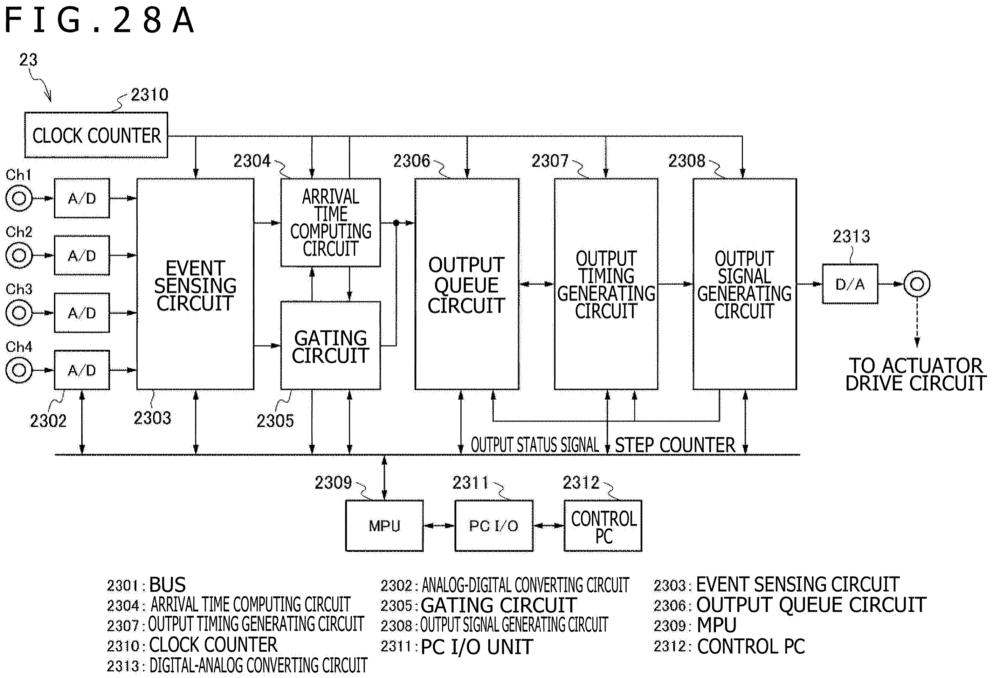

   FIG. 28A is a block diagram depicting a configuration example of an information processing unit.
[FIG. 28B]

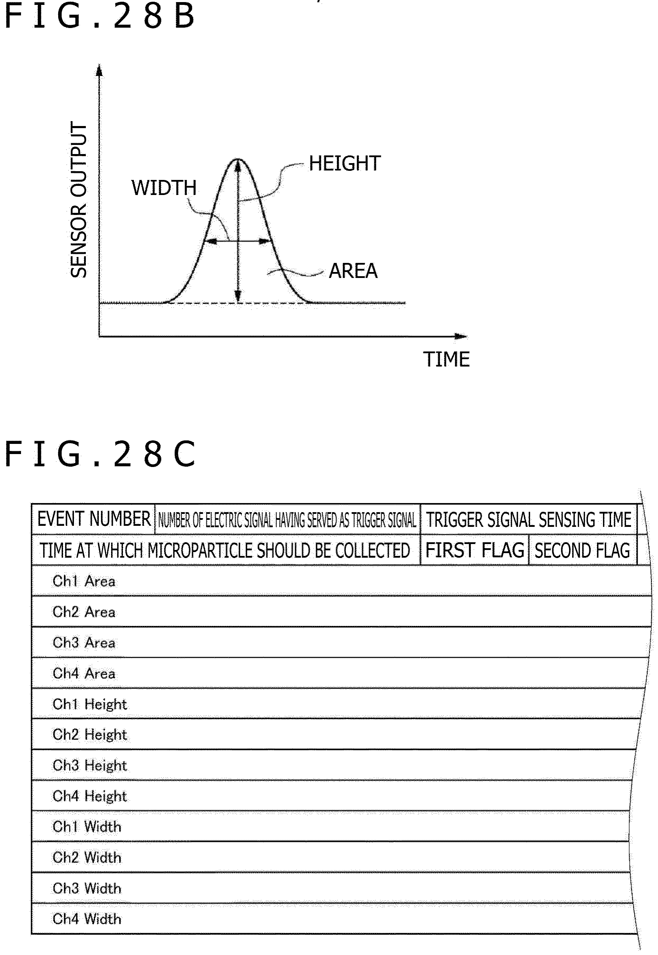

   FIG. 28B is a figure for explaining a waveform of an electric signal read in by an event sensing circuit 2303.
[FIG. 28C]
   FIG. 28C is a conceptual diagram for explaining an event data packet.
[FIG. 28D]

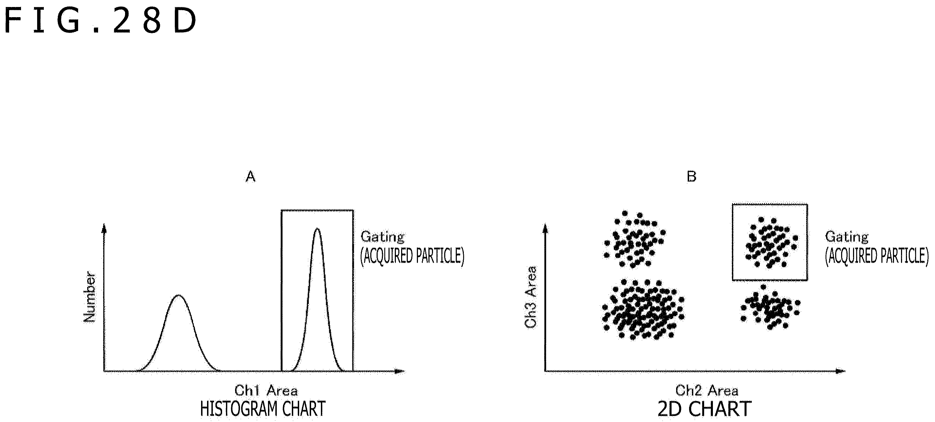

   FIG. 28D is a figure for explaining gating in a histogram chart and a 2D chart.
[FIG. 29]

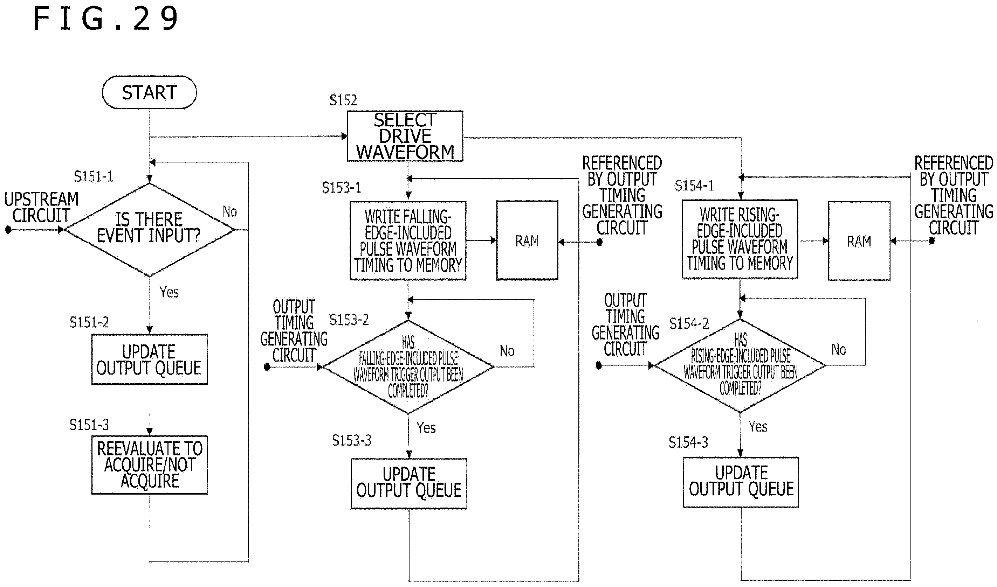

   FIG. 29 is a figure depicting an example of an algorithm executed by the information processing unit.
[FIG. 30]

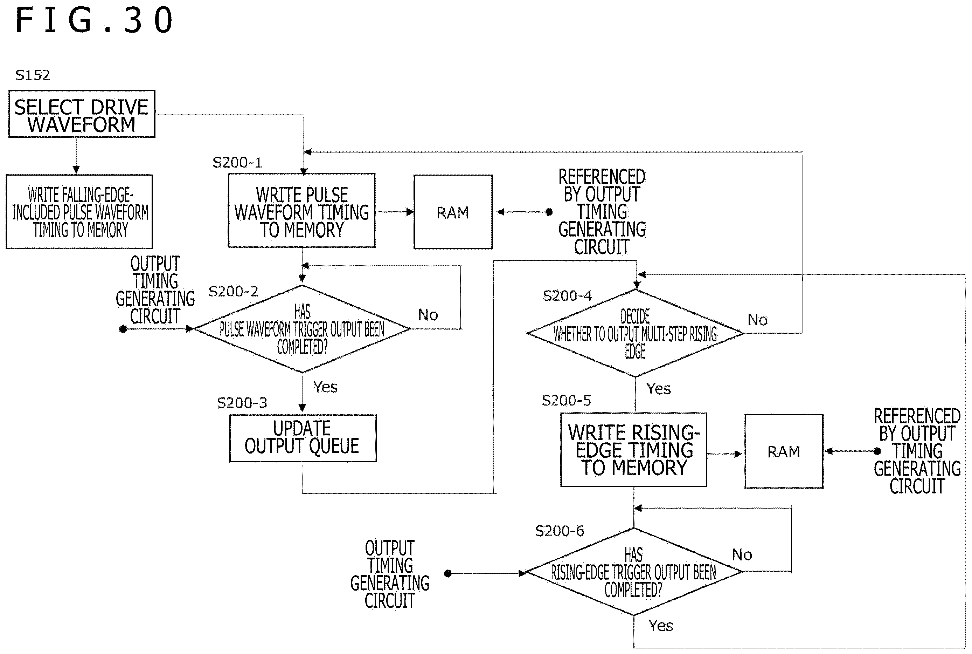

   FIG. 30 is a figure depicting an example of an algorithm executed by the information processing unit.
[FIG. 31A]

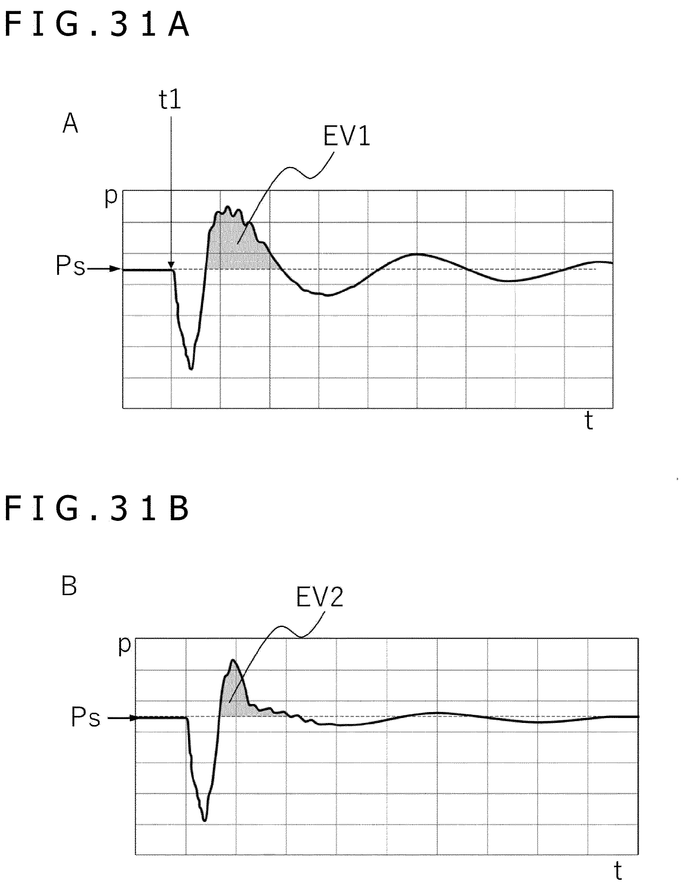

   FIG. 31A is a graph schematically depicting a pressure variation in a collection flow path.
[FIG. 31B]
   FIG. 31B is a graph schematically depicting a pressure variation in the collection flow path.
[FIG. 31C]

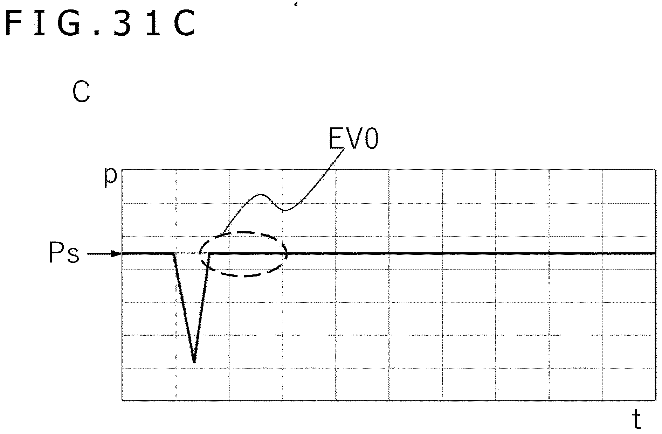

   FIG. 31C is a graph schematically depicting a pressure variation in the collection flow path.
[FIG. 32A]

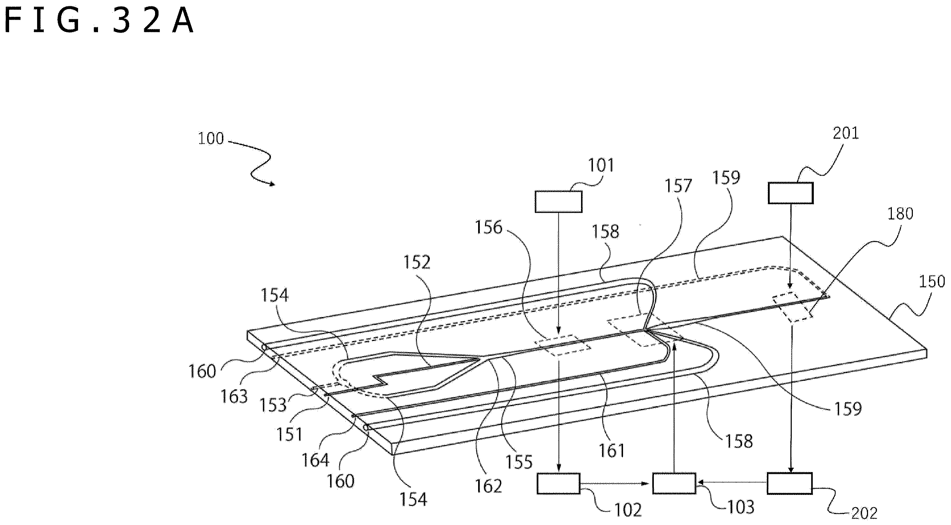

   FIG. 32A is a figure depicting a configuration example of a biological particle fractionation chip according to the present disclosure.
[FIG. 32B]

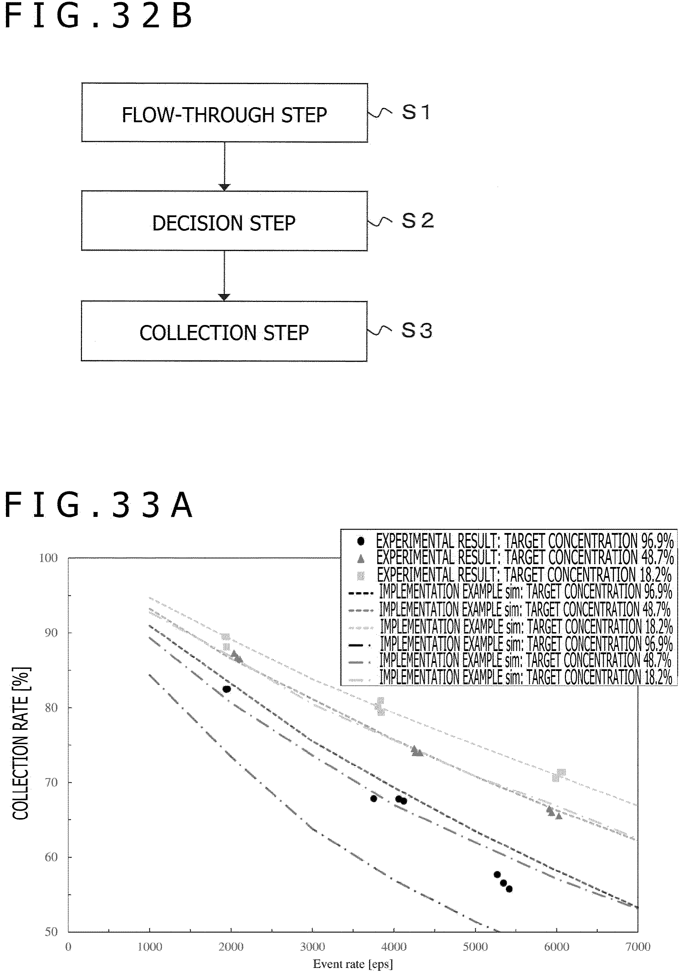

   FIG. 32B is an example of a flow diagram of a biological particle fractionation method according to the present disclosure.
[FIG. 33A]

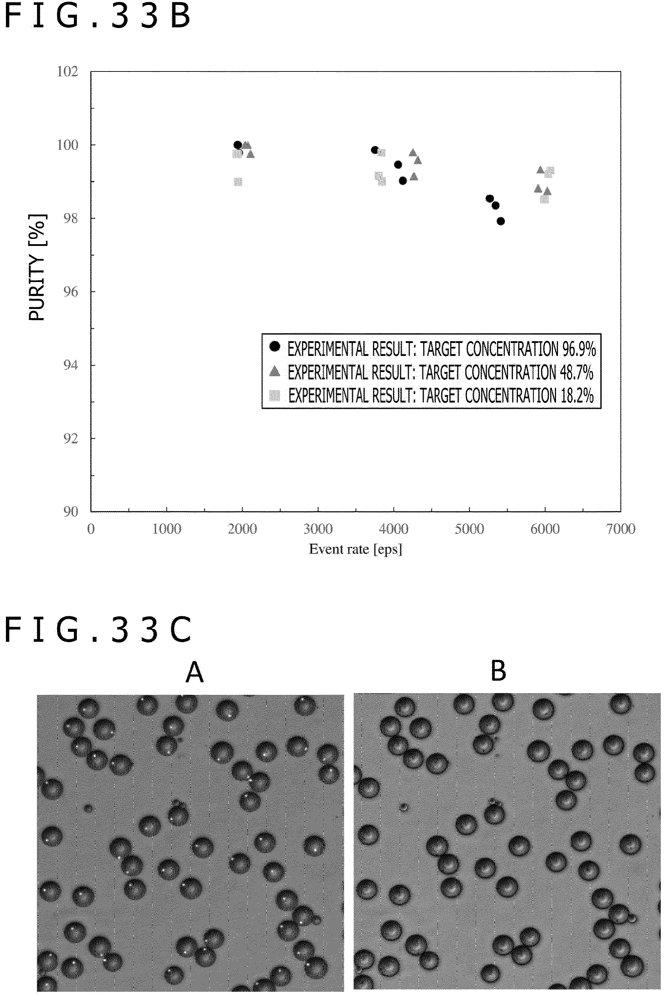

   FIG. 33A is a figure depicting a measurement result and a simulation result of collection rates.
[FIG. 33B]
   FIG. 33B is a figure depicting a measurement result of purity.
[FIG. 33C]
   FIG. 33C is a figure depicting photographs of fractionated emulsions.

### [Description of Embodiments]

Hereinbelow, preferable modes for carrying out the present disclosure are explained. Note that embodiments explained below represent representative embodiments of the present disclosure, and the scope of the present disclosure is not limited only to the embodiments. Note that the explanation of the present disclosure is given in the following order.
1. First Embodiment (Biological Particle Fractionation System)
   (1) Basic Concept
   (2) Configuration Example
   (3) Drive Waveform
   (4) Generation of Emulsion Particles
   (5) Usefulness of Pulse Waveform
   (6) Relation with Flow Path Cross-Sectional Area
   (7) Fractionation Process Example 1
      (7-1) Example 1 of Processing Procedure Performed by Biological Particle Fractionation System
      (7-2) Waveform Selection Process Example
      (7-3) Example of Time Chart
      (7-4) Configuration Example of Fractionating Apparatus
      (7-5) Example of Information Processing Unit and Example of Algorithm Executed by Information Processing Unit
         (7-5-1) Example of Information Processing Unit
         (7-5-2) Example of Algorithm
   (8) Fractionation Process Example 2
      (8-1) Example 1 of Processing Procedure Performed by Biological Particle Fractionation System
      (8-2) Example of Time Chart in Case Where Waveform Selection Process Is Performed
      (8-3) Example of Algorithm
   (9) Fractionation Process Example 3
   (10) Configuration Example of Biological Particle Fractionating Apparatus
   (11) Implementation Example
2. Second Embodiment (Biological Particle Fractionation Method)
3. Third Embodiment (Biological Particle Fractionation Chip)

### 1. First Embodiment (Biological Particle Fractionation System)

### (1) Basic Concept

### (Problem)

For example, a fractionating apparatus for fractionating microparticles such as biological particles is configured to selectively fractionate, into a collection flow path, one or more collection-target particles from a large number of particles flowing through a main flow path. For fractionation of the collection-target particles into the collection flow path, for example, an operation to suction the collection-target particles into the collection flow path can be performed. As a fractionation operation for rapidly fractionating microparticles into the collection flow path by such a suction operation, it is possible to execute a suction operation to form a flow into the collection flow path and a discharge operation for restoring the pressure state caused by the suction operation to its original state prior to the suction operation. That is, as the fractionation operation, the set of the suction operation and the discharge operation can be executed. The suction operation may be an operation to form a flow advancing from the main flow path to the collection flow path, and, for example, can be performed by lowering the pressure in the collection flow path (i.e. generating negative pressure in the collection flow path). In addition, the discharge operation may be an operation to cancel or reduce the flow state generated by the suction operation. The discharge operation may be an operation to form a flow advancing from the collection flow path to the main flow path, but such a flow does not necessarily need to be substantially generated. For example, the discharge operation can be performed by increasing the pressure in the collection flow path.

Since the discharge operation is an operation to form a flow advancing from the collection flow path to the main flow path in the fractionation operation, a flow advancing from the collection flow path to the main flow path (also called a "discharge flow") can be generated between the main flow path and the collection flow path after the discharge operation is performed. In addition, after the discharge operation is performed, unnecessary flow oscillations are also generated between the main flow path and the collection flow path. The unnecessary oscillations are oscillations of the flow rate between the main flow path and the collection flow path. For example, such a problem can occur particularly in a case where the main flow path and the collection flow path are connected via a connecting flow path having a cross-sectional area smaller than the cross-sectional areas of the flow paths.

Accordingly, after a fractionation operation for fractionating a certain collection-target particle is executed, it is necessary to wait until a discharge flow disappears to execute a fractionation operation in order to appropriately fractionate the further next collection-target particle. That is, it is necessary to allow a predetermined length of time between two fractionation operations. Allowing a longer time between the two fractionation operations hinders the rapid fractionation of particles, and can reduce particles to be collected. In contrast, in a case where a length of time is not allowed between the two fractionation operations, the fractionation process cannot be performed stably.

In addition, for example, the abovementioned fractionating apparatus can produce emulsions having only desired particles in emulsion particles. That is, the fractionating apparatus can be utilized also as an emulsion producing apparatus.

The abovementioned problems of a discharge flow and unnecessary oscillations can be problems also in a case where emulsions are produced by the fractionating apparatus. Specifically, in a case where fractionation of microparticles that flow next to certain microparticles is performed in a state where a discharge flow generated after the certain microparticles are fractionated has not sufficiently diminished or in a state where there are unnecessary oscillations generated after the execution of the fractionation, emulsion particles with different sizes can be generated. For example, from the perspective of fractionation performance, the smaller the particle size is, the more likely the fractionation will fail, and the greater the particle size is, the more likely other particles are entrained. Accordingly, emulsions with variations in the sizes of emulsion particles lack stability in some cases. In addition, from the perspective of the influence on analysis, since differences in particle size result in changes in the total amount of a reagent brought into emulsion particles (e.g., the greater the particle size is, the greater the total amount of a reagent is), there is a possibility that variations are created in analysis results. Accordingly, emulsions with great variations in the sizes of emulsion particles lack also suitability for analyses utilizing the emulsions in some cases.

### (Summary of Present Disclosure)

Particular fractionation operations according to the present disclosure can mitigate the abovementioned discharge flow, and further can reduce unnecessary oscillations also. That is, the present disclosure is configured to be able to execute, as one fractionation operation for fractionating a collection-target particle, a first step to lower the pressure in the collection flow path from a reference pressure and guide the one collection-target particle into the collection flow path, a second step to restore the pressure lowered at the first step to the reference pressure, and a third step to mitigate an excess pressure variation generated as a result of the execution of the second step. For example, the pressure in the collection flow path is lowered at the first step, the pressure lowered at the first step is increased at the second step, and then the pressure increased at the second step is lowered again at the third step.

Note that, in the present specification, a fractionation operation having the first step, the second step, and the third step is also called a "first fractionation operation" in order to distinguish the fractionation operation from other fractionation operations.

In addition, the fractionation operation having the first step, the second step, and the third step is preferably executed in a case where the interval between two consecutively flowing collection-target particles satisfies a predetermined condition.

In addition, the collection-target particle fractionated in the one fractionation operation may be one particle or may be a plurality of particles. That is, the collection-target particle means one or more collection-target particles.

In the present specification, the collection-target particle may be a biological particle or may be a non-biological particle. As explained in (7-4) below, the biological particle may be a cell or an acellular biological particle, and an example of the non-biological particle may be a bead. In addition, the non-biological particle may be a particle (hereinbelow, also called a "particle for capturing") configured to be able to capture a particle (particularly, a biological particle). For example, the particle for capturing may be a particle that captures a particle on the inner side (e.g., inner cavity) of the particle, or may be a particle that captures a particle on the outer side (e.g., outer front surface) of the particle. The particle for capturing may have a biological component capturing unit on its inner side or outer side. The biological component capturing unit may be configured to capture a biological particle and/or a secretion released from a biological particle, and, for example, may include a structure that specifically or non-specifically binds to a biological component (e.g., a biological component surface marker, etc.) such as an antibody, an enzyme, a protein, a protein fragment, an aptamer, a nucleic acid, or an oligonucleotide. In one embodiment, the collection-target particle may be a combination of a non-biological particle and a biological particle captured by the non-biological particle. For example, the collection-target particle may be a non-biological particle that has internally or externally captured a biological particle that should be collected. For example, the non-biological particle may be a large-diameter particle of a size capable of internally capturing a biological particle such as a cell.

For example, the size (particularly, the diameter) of the collection-target particle may be 1 nm to 1 mm. In several embodiments, for example, the size of the collection-target particle may be 50 to 500 nm, 50 to 300 nm, or 50 to 200 nm. The size may be applied to the biological particle or may be applied to the non-biological particle.

The fractionation operation may be executed by adjusting the pressure in the flow path. The adjustment of the pressure may be performed by deformation of the collection flow path. That is, the biological particle fractionation system may be configured to change the pressure in the collection flow path by deforming the collection flow path.

The biological particle fractionation system may be configured to change the pressure in the collection flow path by deforming the collection flow path. Particularly, the collection flow path may be a flow path where only collection-target particles are collected from a particle group including non-collection-target particles and collection-target particles.

In one embodiment, the fractionation operation may be executed by an actuator, particularly a piezo actuator, which has been arranged to be able to deform the collection flow path. For example, the actuator may be provided to be in contact with the front surface of a biological particle fractionation chip mentioned later. The collection flow path provided in the chip may be deformed by driving the actuator.

In addition, the deformation of the collection flow path may be executed using pneumatic pressure. For example, the biological particle fractionation system may be configured to collect, into the collection flow path, the collection-target particle using pneumatic pressure. For example, the system may include a pneumatic actuator, and the pneumatic actuator may be provided on the chip so as to execute the deformation of the collection flow path.

In addition, for example, the deformation of the collection flow path may be executed by an apparatus, particularly an electric motor, that performs linear motion such as a motor. The biological particle fractionation system may have the apparatus provided to perform the deformation of the collection flow path.

In this manner, the biological particle fractionation system according to the present disclosure may have a fractionating unit including the actuator or apparatus that deforms the collection flow path as mentioned above.

The deformation of the collection flow path by the fractionating unit may be controlled by an information processing unit. That is, the biological particle fractionation system may have the information processing unit configured to control the deformation of the collection flow path. The information processing unit can drive the fractionating unit such that the fractionation operation according to the present disclosure is executed. In addition, the biological particle fractionation system may be configured to be able to execute another fractionation operation in addition to the fractionation operation having the first step, the second step, and the third step. The biological particle fractionation system may be configured to select a fractionation operation for collecting the collection-target particle into the collection flow path from a plurality of fractionation operations. The information processing unit can make the selection and then drive the fractionating unit such that the selected fractionation operation is executed.

In order to drive the fractionating unit, preferably, a drive voltage having a particular drive waveform is applied to the fractionating unit. Preferably, the drive voltage is a pulse voltage, and the fractionating unit can be driven by the voltage having a pulse waveform.

The drive waveform of the pulse voltage may be configured such that the fractionating unit executes the abovementioned fractionation operation. That is, the pulse voltage having the selected drive waveform is applied to the fractionating unit in order to execute each fractionation operation, and the fractionation operation corresponding to the drive waveform is executed. The selection of a drive waveform and the configuration of a drive waveform are explained in more detail later.

### (Advantages)

Particle fractionation is possible by performing the first step and the second step in one fractionation operation, and the problems of a discharge flow and/or unnecessary oscillations can occur as mentioned above. By executing the third step in addition to the first step and the second step, a discharge flow can be mitigated. Further, unnecessary oscillations can be reduced also. Thereby, target particles can be fractionated stably even if the length of time between two fractionation operations executed for fractionating two consecutively flowing collection-target particles is made shorter. That is, more rapid and more stable particle fractionation is realized. In this manner, the present disclosure can realize highly efficient fractionation.

In order to suction microparticles from the main flow path through the connecting flow path into the collection flow path in a short time in the apparatus, for example, the suction operation and the discharge operation are performed consecutively by driving the actuator. Since positive pressure is generated in a pressure chamber by the discharge operation, after the discharge operation, a large discharge flow is generated between the main flow path and the collection flow path (e.g., in the connecting flow path). In addition, unnecessary flow oscillations are also generated after a discharge flow. The present disclosure can suppress the generation of positive pressure generated by the discharge operation and suppress a discharge flow that is generated in the connecting flow path. In addition, the generation of unnecessary oscillations also can be reduced.

In addition, in a case where the suction operation for another collection-target particle is performed in a state where the discharge flow is being generated after fractionation of a certain collection-target particle, the amount of suction decreases. Accordingly, in order to appropriately fractionate the next collection-target particle after the fractionation operation for a certain collection-target particle, it has been necessary to wait until the discharge flow diminishes. Since the present disclosure can suppress a discharge flow that is generated in the connecting flow path after a fractionation operation, the length of time until the discharge flow diminishes can be made shorter, and thereby the consecutive fractionation interval can be made shorter. Thereby, fractionation of collection-target particles that arrive at a short time interval becomes possible.

In addition, in a case where unnecessary oscillations are being generated after a fractionation operation, variations in the amount of suction are generated, and variations in the size of emulsions are generated. The present disclosure makes it possible to reduce unnecessary flow oscillations and to generate more uniform emulsions.

By executing the fractionation operation having the first step, the second step, and the third step according to the present disclosure, it becomes possible to suppress a discharge flow that is generated after the fractionation operation and make a consecutive fractionation interval shorter, thereby making it possible to fractionate collection-target particles more highly efficiently.

The following explains a configuration example of a flow path system in which the fractionation operation is performed, and explains in more detail the present disclosure with reference to the configuration example.

### (2) Configuration Example

FIG. 1 depicts an example of a flow path system of a microfluidic chip where a fractionation operation is executed according to the present disclosure. The flow path system depicted in the figure has a sample liquid flow path 152 and sheath liquid flow paths 154, and these flow paths have the sheath liquid flow paths 154 that merge at a merging section 162. The flow paths merged at the merging section 162 are called a main flow path 155. A liquid including a plurality of microparticles is caused to flow through the main flow path.

The flow path system further includes a collection flow path 159 into which collection-target particles in the plurality of microparticles are collected. That is, collection-target particles in the particles flowing through the main flow path are fractionated into the collection flow path.

The liquid including a plurality of microparticles is caused to flow through the main flow path. In the liquid flowing through the main flow path, the microparticles may be next to each other in one line, and the liquid may form a laminar flow. In the middle of the main flow path, a particle sensing unit 156 (also called a "sensing region" in the present specification) is provided, and light is emitted onto the particle sensing unit. On the basis of signal information of scattered light and/or fluorescence generated by the light emission, it is assessed whether microparticles are collection-target particles.

FIG. 2 depicts an enlarged view of a particle fractionating unit. In the particle fractionating unit, the main flow path and the collection flow path are connected via a connecting flow path 170, a liquid supply flow path 161 (also called an "introducing flow path" in the present specification) is connected in the up-down direction, and a fluid is caused to flow from the liquid supply flow path. As depicted in C in FIG. 2, a flow in the up-down direction merges in the particle fractionating unit (particularly, in the connecting flow path), and branches into flows in the upstream direction and the downstream direction. The flow generated in the upstream direction blocks non-collection-target microparticles from flowing into the particle fractionating unit.

In contrast, in a case where a collection-target particle flows as depicted in B in FIG. 2, negative pressure is generated in the collection flow path, particularly in a pressure chamber (a region whose volume is varied by an actuator, the cross-sectional area of a plane perpendicular to the advancing direction of the liquid is greater than other portions of the collection flow path) provided in the collection flow path, and the collection-target particle is suctioned. In order to generate the negative pressure, the actuator installed outside the pressure chamber is driven, and the volume of the pressure chamber is varied. Particularly, the actuator is driven such that the volume of the pressure chamber increases, and the pressure inside the pressure chamber is lowered. Due to the pressure lowering, the collection-target particle is collected into the collection flow path.

By using the abovementioned flow path system, it is possible also to form an emulsion having emulsion particles having only collection-target particles. Particularly, the emulsion is formed by fractionating the collection-target particles using, as a liquid supplied from the liquid supply flow path, a liquid (hereinbelow called a "second liquid") which is immiscible with a liquid (hereinbelow called a "first liquid") flowing through the main flow path. The emulsion is an emulsion in which the emulsion particles including the first liquid including the collection-target particles are dispersed in the second liquid. For example, the first liquid may be a hydrophilic liquid (water, an aqueous solution, or an aqueous medium), and the second liquid may be a hydrophobic liquid (an oil-based or oil-based liquid). On the contrary, the first liquid may be a hydrophobic liquid (an oil-based or oil-based liquid), and the second liquid is a hydrophilic liquid (water, an aqueous solution, or an aqueous medium).

A configuration example of the actuator for generating negative pressure in the pressure chamber is depicted in FIG. 3. The figure depicts a configuration example of the microfluidic chip having the flow path system. The configuration example is explained later in detail separately. As depicted in the figure, an actuator 107 is arranged in contact with the collection flow path 159 (particularly, the portion where the pressure chamber is) on the front surface of the microfluidic chip. For example, the actuator may be a piezoelectric element such as a piezo element. The collection of collection-target particles into the collection flow path is performed by the actuator generating negative pressure in the pressure chamber in the collection flow path to suction the collection-target particles into the collection flow path. For the generation of the negative pressure, for example, a voltage that induces piezo contraction is applied to the piezo element. By the voltage application, the pressure chamber is deformed in the direction of increasing the volume of the pressure chamber, and negative pressure is generated.

### (3) Drive Waveform

FIG. 4 depicts an example of a basic drive waveform to be applied for fractionating a collection-target particle. The figure depicts a graph of a drive voltage V applied to the actuator with respect to time t. As depicted in the figure, the drive waveform has a falling edge section Wf and a rising edge section Wr. In addition, there may be a voltage maintaining section Wm where the voltage is maintained between the falling edge section Wf and the rising edge section Wr. The falling edge section Wf corresponds to a suction operation, and is applied in order to deform the pressure chamber (particularly, to enlarge the volume in the pressure chamber) and generate negative pressure. The rising edge section Wr corresponding to a discharge operation is applied to return the deformed pressure chamber to its original state. At this time, positive pressure is generated since the application of the rising edge section is accompanied by a decrease in the volume of the pressure chamber.

FIG. 5 depicts a schematic diagram of the states of a suction operation and a discharge operation. As depicted in A in the figure, negative pressure NP is generated in the collection flow path 159 by the application of the falling edge section in the drive waveform, thereby causing a particle P to be collected into the collection flow path (particularly, into the pressure chamber). Thereafter, as depicted in B in the figure, positive pressure PP is generated in the collection flow path 159 by the application of the rising edge section in the drive waveform. This produces a force to cause the particle P to advance in the direction of the arrow in B in the figure. However, if the particle P flows downstream to a certain extent from a particle intake port 171, the particle P will not return to the main flow path through the connecting flow path 170 again.

This basic drive waveform is called a pulse drive waveform. In the pulse drive waveform, a suction operation and a discharge operation are performed consecutively.

I in FIG. 6 depicts a simulation result of the flow rate in the connecting flow path in a case where a pulse drive waveform according to a conventional technology is applied to a piezo element (drive waveform: falling time - maintaining time - rising time: 15 µs - 10 µs - 15 µs). (AI) in the figure depicts temporal changes of the drive voltage of the piezo element (vertical axis: drive voltage V, horizontal axis: time t), and (BI) in the figure depicts temporal changes of the flow rate in the connecting flow path (vertical axis: flow rate FV, horizontal axis: time t).

As depicted in FIG. 7, the position where the flow rate was simulated is the position represented by an arrow MP in the connecting flow path 170 connecting the main flow path 155 and the collection flow path 159. The cross-sectional average flow rate at this position is the abovementioned flow rate FV. This applies also to other flow rate simulation results.

Regarding the flow rate FV in (BI), the value "0" at the middle means that the flow rate at the position is 0. The flow rate FV means that, as the value moves up from "0" toward "+," the flow advancing from the main flow path to the collection flow path becomes faster. In addition, the flow rate FV means that, as the value moves down from "0" toward "-," the flow in the direction opposite to the flow advancing from the main flow path to the collection flow path (i.e. the flow advancing from the collection flow path to the main flow path) becomes faster.

Before the application of the drive waveform, a flow advancing from the collection flow path to the main flow path is generated.

As depicted in the regions to the left of t1 in AI and BI in I in FIG. 6, before the application of the drive waveform, a flow advancing from the collection flow path to the main flow path is generated. This can prevent unnecessary particles from advancing to the collection flow path.

Next, as depicted in the regions to the right of t1 in AI and BI in FIG. 6, immediately after the application of the drive waveform, a suction operation caused by the application of a falling edge accelerates the fluid rapidly in the direction of the collection flow path, and then a discharge operation caused by the application of a rising edge decelerates the fluid rapidly. By the application of the drive waveform, such a suction operation in a short time is performed. However, after the discharge operation, as represented by an arrow X, a significant flow in the discharge direction is generated in the connecting flow path. In addition, after the discharge flow, oscillations of the flow rate (also called "unnecessary oscillations") are generated, although their magnitude is smaller than the flow rate in the region represented by the arrow X. That is, the flow rate in the connecting flow path is unstable.

II in FIG. 6 depicts a simulation result of the flow rate in the connecting flow path in a case where a pulse drive waveform is applied twice consecutively at a short time interval assuming a condition where collection-target particles arrive consecutively at a short time interval. (Drive waveform: 15 µs - 10 µs - 15 µs, pulse interval: 100 µs)

As depicted in AII and BII in the figure, due to the short pulse driving interval, the drive voltage application of the second drive is performed at a timing at which a discharge flow of the first drive is being generated. In this case, as represented by Y in BII, a flow toward the pressure chamber generated by the application for the second drive is weak compared with the first drive. If the flow toward the pressure chamber becomes weak in this manner, there can be a case where an amount of suction sufficient for suctioning microparticles cannot be secured, and fractionation of microparticles may fail. Accordingly, in order to appropriately suction the next microparticle after a fractionation operation for a microparticle, a waiting time until the discharge flow in the connecting flow path diminishes and the flow stabilizes is necessary. This can be a hindrance to the realization of rapid fractionation or highly efficient fractionation.

In addition, if pulse driving is executed in a state where the abovementioned discharge flow is being generated or in a state where unnecessary oscillations are being generated in a case where the apparatus is used as an apparatus for generating emulsions including emulsion particles having microparticles, the amounts of suction that can be attained during the first drive and the second drive differ, and accordingly emulsions with different sizes are generated.

According to the present disclosure, the abovementioned first fractionation operation is executed. The first fractionation operation is explained below with reference to FIG. 8.

FIG. 8 depicts an example of a drive waveform to be applied to a piezo element in order to execute the first fractionation operation. As depicted in the figure, the pulse drive waveform has a first falling edge section Wf1, a rising edge section Wr1, and a second falling edge section Wf2.

There may be a maintaining time Wm1 between the first falling edge section Wf1 and the rising edge section Wr1. In addition, there may be a maintaining time Wm2 also between the rising edge section Wr1 and the second falling edge section Wf2.

In this manner, the drive waveform for executing the first fractionation operation further has the second falling edge section additionally after the pulse drive waveform explained with reference to FIG. 6 above. That is, a suction operation is performed further after a suction operation and a discharge operation.

Note that, in the present specification, the drive waveform further having the second falling edge in addition to the first falling edge and the rising edge is also called a "falling-edge-included pulse drive waveform."

FIG. 9 depicts a simulation result of the flow rate in the connecting flow path in order to depict advantages of the present disclosure. AI in the figure depicts a falling-edge-included pulse drive waveform to be applied according to the present disclosure (drive waveform: falling time - maintaining time - rising time - maintaining time - falling time: 15 µs - 10 µs - 15 µs - 10 µs - 15 µs, amplitude ratio 0.5). The amplitude ratio is the ratio of the amplitude of the second falling edge section to the amplitude of the first falling edge section.

In this manner, by further adding a suction operation after a suction operation and a discharge operation, as depicted in a flow rate simulation result in BI in the figure, it becomes possible to suppress a discharge flow that is generated after piezo driving. That is, the flow rate in the region represented by the arrow X in BI in FIG. 6 significantly decreases in BI in FIG. 9. In addition, unnecessary flow oscillations in BI in FIG. 6 are also significantly reduced in BI in FIG. 9.

II in FIG. 9 depicts a simulation result of the flow rate in the connecting flow path in a case where a falling-edge-included pulse drive waveform to be applied according to the present disclosure is applied twice consecutively at a short time interval. AII in the figure depicts a falling-edge-included pulse drive waveform to be applied according to the present disclosure (drive waveform: 15 µs - 10 µs - 15 µs - 10 µs - 15 µs, amplitude ratio 0.5, pulse interval 100 µs). As represented by an arrow Y in BII in the figure, since the falling-edge-included pulse drive waveform to be used in the present disclosure suppresses a discharge flow generated after the application of the drive waveform, a flow rate change equivalent to a flow rate change during the first drive is attained during the second drive even if the falling-edge-included pulse drive waveform is applied at a short drive interval. That is, an amount of suction sufficient for suctioning a microparticle can be secured even during the second drive. Further, since a waiting time for waiting a discharge flow to diminish becomes unnecessary or the waiting time can be reduced due to the suppression of the discharge flow, it becomes possible to fractionate microparticles that arrive consecutively at a short time interval as compared with a pulse drive waveform without a second falling edge section, and highly efficient particle fractionation becomes possible.

In addition, in a case where an emulsion including emulsion particles having microparticles is generated using the first fractionation operation, the amounts of suction attained during the first drive and the second drive are equivalent. Accordingly, emulsions with uniform sizes of emulsion particles can be generated.

As explained above, as one fractionation operation for fractionating a collection-target particle, by a first fractionation operation in which a first step to lower the pressure in the collection flow path from a reference pressure and guide the one collection-target particle into the collection flow path, a second step to restore the pressure lowered at the first step to the reference pressure, and a third step to mitigate an excess pressure variation generated as a result of the execution of the second step are executed, efficient particle fractionation becomes possible.

The reference pressure and the excess pressure variation are explained in more detail with reference to FIGS. 31A to 31C.

FIG. 31A is a graph schematically depicting a pressure variation in the collection flow path in a case where the basic drive waveform in FIG. 4 explained above is applied. The horizontal axis of the graph represents time (t), and the vertical axis of the graph represents pressure (p). The pressure before the application is called reference pressure PS. Due to the application of the falling edge section in the drive waveform at a time t1, the pressure in the collection flow path lowers suddenly. Due to this pressure lowering, a particle is collected into the collection flow path. Thereafter, due to the rising edge section, the pressure in the collection flow path is increased toward the original reference pressure PS. However, with the basic drive waveform, the pressure keeps increasing further after the pressure has reached the reference pressure PS. Thereafter, as a predetermined length of time elapses, the pressure in the collection flow path returns to the reference pressure.

In this manner, in the present specification, a pressure variation exceeding the reference pressure PS due to the application of the rising edge section is called an excess pressure variation. In the figure, a region EV1 represented by gray (the region exceeding the reference pressure PS) is equivalent to an excess pressure variation.

By executing the third step according to the present disclosure, the excess pressure variation is mitigated. The mitigated pressure variation is explained with reference to FIG. 31B. The figure is a graph schematically depicting a pressure variation in the collection flow path in a case where the falling-edge-included pulse drive waveform depicted in FIG. 8 explained above is applied. In the figure also, the horizontal axis of the graph represents time (t), and the vertical axis of the graph represents pressure (p). The pressure before the application is called reference pressure PS. Due to the application of the falling edge section in the drive waveform at the time t1, the pressure in the collection flow path lowers suddenly. Due to this pressure lowering, a particle is collected into the collection flow path. Thereafter, due to the rising edge section, the pressure in the collection flow path is increased toward the original reference pressure PS. According to the present disclosure, a falling edge section is applied at the third step. In this case, a region EV2 represented by gray (the region exceeding the reference pressure PS) is smaller than EV1 in FIG. 31A. In this manner, the execution of the third step suppresses an excess pressure variation.

Note that it is ideally desirable that a pressure variation as a result of particle fractionation does not generate an excess pressure variation after the application of an rising edge section as represented by a portion EV 0 represented by a broken line in FIG. 31C. According to the present disclosure, an excess pressure variation can be suppressed, and a pressure variation in the collection flow path can be made more similar to an ideal pressure variation.

In the present disclosure, the third step is executed such that, for example, the ratio (the area value of the region EV2)/(the area value of the region EV1) becomes equal to or lower than 1.0, particularly equal to or lower than 0.9, equal to or lower than 0.8, equal to or lower than 07, equal to or lower than 0.6, and still more preferably equal to or lower than 0.5. Both the area value of the region EV1 and the area value of the region EV2 are obtained by integrating, over the time axis, "(the pressure value that has varied exceeding the reference pressure due to the application of a rising edge section)-(the reference pressure value)." That is, the third step may be executed such that an excess pressure variation in a case where there is the third step becomes smaller than an excess pressure variation in a case where there is not the third step.

For example, a waveform to be applied at the third step may be selected as appropriate by those skilled in the art according to the first step and the second step. In addition, the waveform may be changed as appropriate also depending on the flow path cross-sectional areas or the configuration of the flow path system.

As explained above, in the present disclosure, the biological particle fractionation system may be configured to apply a pulse voltage to the actuator for changing the pressure in the collection flow path in one fractionation operation. The drive waveform of the pulse voltage may be configured such that the actuator executes the first step, the second step, and the third step.

The drive waveform of the pulse voltage may have the first falling edge section configured to execute the first step, the rising edge section configured to execute the second step, and the second falling edge section configured to execute the third step.

In the present disclosure, for example, the amplitude of the first falling edge section for executing the first step may be equal to or greater than 1 V, preferably equal to or greater than 10 V, and more preferably equal to or greater than 30 V. In addition, for example, the amplitude of the first falling edge section may be equal to or lower than 150 V, preferably equal to or lower than 100 V, and more preferably equal to or lower than 50 V.

For example, the duration of the first falling edge section may be equal to or longer than 1 µs, preferably equal to or longer than 5 µs, and more preferably equal to or longer than 15 µs. In addition, for example, the duration of the first falling edge section may be equal to or shorter than 100 µs, preferably equal to or shorter than 60 µs, and more preferably equal to or shorter than 30 µs.

For example, the amplitude of the rising edge section for executing the second step may be equal to or greater than 1 V, preferably equal to or greater than 10 V, and more preferably equal to or greater than 30 V. In addition, for example, the amplitude of the rising edge section may be equal to or lower than 150 V, preferably equal to or lower than 100 V, and more preferably equal to or lower than 50 V.

For example, the duration of the rising edge section may be equal to or longer than 1 µs, preferably equal to or longer than 5 µs, and more preferably equal to or longer than 15 µs. In addition, for example, the duration of the rising edge section may be equal to or shorter than 100 µs, preferably equal to or shorter than 60 µs, and more preferably equal to or shorter than 30 µs.

For example, the amplitude of the second falling edge section for executing the third step may be equal to or greater than 0.1 V, preferably equal to or greater than 1 V, and more preferably equal to or greater than 5 V. In addition, for example, the amplitude of the second falling edge section may be equal to or lower than 150 V, preferably equal to or lower than 100 V, and more preferably equal to or lower than 50 V.

For example, the duration of the second falling edge section may be equal to or longer than 1 µs, preferably equal to or longer than 5 µs, and more preferably equal to or longer than 15 µs. In addition, for example, the duration of the second falling edge section may be equal to or shorter than 100 µs, preferably equal to or shorter than 60 µs, and more preferably equal to or shorter than 30 µs.

For example, the maintaining time between the first falling edge section and the rising edge section may be equal to or longer than 0 µs. In addition, for example, the maintaining time may be equal to or shorter than 150 µs, preferably equal to or shorter than 50 µs, and more preferably equal to or shorter than 10 µs. That is, the maintaining time may be 0 µs, but may be longer than 0 µs.

For example, the maintaining time between the rising edge section and the second falling edge section may be equal to or longer than 0 µs. In addition, for example, the maintaining time may be equal to or shorter than 50 µs, preferably equal to or shorter than 20 µs, and more preferably equal to or shorter than 10 µs. That is, the maintaining time may be 0 µs, but may be longer than 0 µs.

### (4) Generation of Emulsion Particles

FIG. 10 depicts results of an experiment on the generation of emulsion particles in a case where a pulse drive waveform having a falling edge section and a rising edge section, but not having a second falling edge section was driven consecutively twice at a 160-µs interval or a 100-µs interval. In a case where the waveform is consecutively driven at the 160-µs interval, two emulsions were generated with each of the consecutive drives (represented by two arrows in A in the figure). In contrast, in a case where the waveform is consecutively driven at the 100-µs interval, only one emulsion was generated with each of the consecutive drives (represented by one arrow in B in the figure). This is because, in a case where the waveform was driven at the short 100-µs time interval, an amount of suction sufficient for emulsion generation could not be attained with the second pulse due to a discharge flow generated after a discharge operation.

FIG. 11 depicts experimental results in a case where a falling-edge-included pulse drive waveform to be used in the present disclosure was consecutively driven twice at a 160-µs interval or a 100-µs interval. As depicted in the figure, in a case where the falling-edge-included pulse drive waveform was used, two emulsions were generated not only in a case where the waveform was consecutively driven at the 160-µs interval, but also in a case where the waveform was consecutively driven at the 100-µs interval (represented by two arrows in each of A and B in the figure). It can be known from these results that the present disclosure is effective also for the generation of emulsions.

That is, the biological particle fractionation system of the present disclosure may be utilized as an emulsion producing apparatus. The emulsion producing apparatus may produce emulsions having fractionated collection-target particles in emulsion particles.

### (5) Usefulness of Pulse Waveform

FIG. 12 depicts a simulation result of the flow rate in the connecting flow path in a case where the falling-edge-included pulse drive waveform according to the present disclosure and waveforms (a step waveform and an undershoot-included step waveform) other than pulse drive waveforms were used.

A in the figure depicts applied drive waveforms. a in the figure represents the falling-edge-included pulse waveform, b in the figure represents the step waveform, and c in the figure represents the undershoot-included step waveform.

B in the figure depicts a simulation result of the flow rate in the connecting flow path in a case where these three types of waveform were applied. Similarly to A in the figure, a represents a simulation result of the falling-edge-included pulse waveform, b represents a simulation result of the step waveform, and c represents a simulation result of the undershoot-included step waveform.

As represented by these simulation results, when the step waveform and the undershoot-included step waveform were applied, the durations during which the flow rate in the connecting flow path was directed toward the suction direction were long, and also the flows in the discharge direction and unnecessary flow oscillations were significant. In contrast, when the falling-edge-included pulse drive waveform was applied, the duration during which the flow rate in the connecting flow path was directed toward the suction direction was short, and also the discharge flow and unnecessary flow oscillations were small. Therefore, even when compared with the case where the step waveform and the undershoot-included step waveform were applied as piezo drive waveforms, the falling-edge-included pulse drive waveform realizes suction with the shortest duration, and can suppress the flow in the discharge direction and unnecessary flow oscillations. Accordingly, it can be said that the falling-edge-included pulse drive waveform is the most effective drive waveform.

### (6) Relation with Flow Path Cross-Sectional Area

A simulation similar to the simulation explained in (3) was executed, except that the flow path diameter of the connecting flow path was doubled (the cross-sectional area was quadrupled). FIG. 13 depicts a simulation result of the flow rate in the connecting flow path.

As depicted in I in the figure, in a case where a pulse drive waveform of a conventional technology is applied, more significant unnecessary flow oscillations in the connecting flow path are generated due to the increase of the flow path diameter of the connecting flow path.

In contrast, II in the figure depicts a simulation result in a case where the falling-edge-included pulse drive waveform according to the present disclosure was applied. This simulation result corresponds to a case where the amplitude ratio kw between the drive amplitude of the last second falling edge section of the drive waveform and the drive amplitude of the first falling edge section and the rising edge section before the last second falling edge section of the drive waveform was set to 0.5 as in (3) above, and a case where the amplitude ratio kw was set to 1.0.

In a case where the amplitude ratio kw = 0.5, unnecessary oscillations were reduced as compared with I in the figure as compared with the case where the conventional pulse drive waveform was applied. That is, the usefulness of the present disclosure is exhibited with various flow path diameters (flow path cross-sectional areas).

In addition, in a case where amplitude ratio kw = 1.0 with increased drive amplitude of the second falling edge section, as compared with the case where the amplitude ratio kw = 0.5, unnecessary flow oscillations were further reduced. Significant unnecessary oscillations are generated if the flow path diameter of the connecting flow path is increased, but the advantage of suppressing unnecessary flow oscillations can be improved by changing the amplitude ratio. In addition, even if variations in the flow path diameter of the connecting flow path are generated among individual bodies or lots of microchips, the advantage of suppressing unnecessary oscillations can be attained uniformly by adjusting the amplitude ratio between the amplitude of the first falling edge section and the rising edge section and the amplitude of the second falling edge section.

In the present disclosure, in order to appropriately attain the advantage of the third step, for example, the amplitude ratio may be equal to or greater than 0.01, preferably equal to or greater than 0.05, or more preferably equal to or greater than 0.1, and particularly may be equal to or greater than 0.2, equal to or greater than 0.3, equal to or greater than 0.4, or equal to or greater than 0.5. In addition, for example, the amplitude ratio may be equal to or lower than 1.2, equal to or lower than 1.1, or equal to or lower than 1.0.

### (7) Fractionation Process Example 1

As mentioned above, the biological particle fractionation system according to the present disclosure is configured to be able to execute, as one fractionation operation for fractionating a collection-target particle, a first step to lower the pressure in the collection flow path from a reference pressure and guide the one collection-target particle into the collection flow path, a second step to restore the pressure lowered at the first step to the reference pressure, and a third step to mitigate an excess pressure variation generated as a result of the execution of the second step. The biological particle fractionation system may be configured to execute the fractionation operation (also called a "first fractionation operation") having the first step, the second step, and the third step in a case where a predetermined condition is satisfied. In addition, in a case where the predetermined condition is not satisfied (or in a case where another predetermined condition is satisfied), another fractionation operation may be executed. The predetermined condition may be a condition related to the relation (particularly, the temporal relation or the distance relation) with a subsequent collection-target particle that flows next to the collection-target particle.

In one embodiment, in addition to the first fractionation operation, the biological particle fractionation system may be configured to be able to execute, as the one fractionation operation, a second fractionation operation to execute the first step and the second step and execute a fourth step to further execute elimination of an offset of the collection flow path generated by execution of the third step in a case where a predetermined condition is satisfied. In this embodiment, according to the interval (e.g., the time interval or the positional interval) between a collection-target particle and a subsequent biological particle (particularly, a collection-target particle), which one of the two fractionation operations is applied may be selected. For example, the interval may be a time interval ΔTp mentioned later, may be the interval between times at which the two particles are sensed, may be the interval between times at which the two particles arrive at a particular position (a position where the two particles are fractionated), or may be the interval (i.e. the distance) between the positions of the two particles. According to such an interval, a fractionation operation (particularly, a drive waveform) to be used for fractionation of collection-target particles may be changed.

In this manner, with the configuration being able to execute the second fractionation operation in addition to the first fractionation operation, it is possible to restore an offset of a drive output to its original state as mentioned later. The following gives a more detailed explanation of this embodiment also including an algorithm for realizing the fractionation method according to the present disclosure.

For example, the biological particle fractionation system can decide whether to apply the first fractionation operation on the basis of the time interval ΔTp between a collection-target particle and a subsequent biological particle (particularly, a collection-target particle). That is, the biological particle fractionation system may select the first fractionation operation or the second fractionation operation as a fractionation operation to be used for fractionation of collection-target particles according to the time interval ΔTp.

Here, the time interval ΔTp may be the time interval between a time point at which a certain collection-target particle arrives at the fractionating unit (particularly, a position immediately before the connecting flow path) and a time point at which a subsequent collection-target particle flowing next to the certain collection-target particle arrives at the fractionating unit (particularly, the position immediately before the connecting flow path).

Alternatively, the time interval ΔTp may be the time interval between a time point at which the certain collection-target particle is sensed and a time point at which the subsequent collection-target particle is sensed.

For example, the biological particle fractionation system can execute the first fractionation operation in a case where the time interval ΔTp is short. In order to execute the first fractionation operation, a falling-edge-included pulse drive waveform may be applied to the actuator as explained above with reference to FIG. 8, for example.

In addition, the second fractionation operation can be executed in a case where the time interval ΔTp is long. In order to execute the second fractionation operation, for example, as depicted in FIG. 14, a rising-edge-included pulse drive waveform further having a second rising edge section Wr2 in addition to one falling edge section Wf1 and one rising edge section Wr1 may be used. In the present specification, a pulse drive waveform further having a second rising edge section in addition to one falling edge section and one rising edge section like the one depicted in FIG. 14 is also called a "rising-edge-included pulse drive waveform."

Merits of using two types of fractionation operation in this manner are explained below.

The consecutive fractionation interval can be made shorter by the first fractionation operation, but an offset is generated in the drive output if the actuator is driven once by the falling-edge-included pulse drive waveform. Accordingly, the number of times the actuator can be driven consecutively by the falling-edge-included pulse drive waveform is restricted to a predetermined number.

In contrast, since a discharge operation is performed consecutively twice in the second fractionation operation, an offset of the drive output can be restored to its original state, but an interval at which consecutive fractionation can be performed becomes longer. On the basis of this, by using the second fractionation operation in a case where the time interval ΔTp between the two collection-target particles is long, it is possible to restore an offset of the drive output generated in the second fractionation operation to its original state while appropriately fractionating collection-target particles.

In this manner, the drive waveform for executing the second fractionation operation may have the first falling edge section configured to execute the first step, and the rising edge section configured to execute the second step, and may further have the second rising edge section configured to execute the fourth step in a case where the fourth step is executed.

The biological particle fractionation system may be configured to increase the pressure by one level at the fourth step, and the second rising edge section for executing the fourth step may have a single-step rising edge. Note that, as mentioned later, the second rising edge section may have a multi-step rising edge.

For example, as depicted in FIG. 15, which of these two types of fractionation operation is applied may be determined by comparing the time interval ΔTp with predetermined thresholds.

Twf and Twr depicted in the figure are as follows, and these may be used as the predetermined thresholds.

Twf: the minimum time interval at which the first fractionation operation is executed (the minimum time interval at which the actuator is driven with the falling-edge-included pulse drive waveform)

Twr: the minimum time interval at which the second fractionation operation is executed (the minimum time interval at which the actuator is driven with the rising-edge-included pulse drive waveform)

On the basis of the following conditions utilizing these thresholds, a drive waveform is selected.
(a) ΔTp < Twf: a subsequent collection-target particle is aborted since the microparticle interval is too short. Then, a fractionation operation (particularly, a drive waveform) for fractionating a collection-target particle is determined on the basis of the time interval between a second subsequent collection-target particle flowing next to the subsequent collection-target particle and the collection-target particle.
(b) Twf ≤ ΔTp < Twr: the collection-target particle is fractionated by the first fractionation operation (particularly, fractionated with the falling-edge-included pulse drive waveform).
(c) Twr ≤ ΔTp: the collection-target particle is fractionated by the second fractionation operation (particularly, fractionated with the rising-edge-included pulse drive waveform).

FIG. 15 depicts two cases I and II.

In the case I, events E1 and E2 represent that light generated by light emission onto collection-target particles are sensed. The position represented by the middle broken line of each event is the event sensing time of the event. The time interval ΔTp between the time at which the event E1 is sensed and the time at which the event E2 is sensed is equal to or longer than Twf and shorter than Twr. That is, ΔTp satisfies the condition of (b) above. Accordingly, the first fractionation operation is selected as a fractionation operation for fractionating a collection-target particle corresponding to the event E1. Then, the collection-target particle is collected by the selected first fractionation operation.

Regarding the case II, the time interval ΔTp between the time at which an event E1' is sensed and the time at which an event E2' is sensed is equal to or longer than Twf and equal to or longer than Twr. That is, ΔTp satisfies the condition of (c) above. Accordingly, the second fractionation operation is selected as a fractionation operation for fractionating a collection-target particle corresponding to the event E1'. Then, the collection-target particle is collected by the selected second fractionation operation.

In this manner, according to to which of (a), (b), and (c) the time interval ΔTp corresponds, a drive waveform to be applied for fractionating a collection-target particle is selected.

Note that, in the case of (a) ΔTp < Twf, it is decided to abort a subsequent collection-target particle (i.e. not to fractionate the subsequent collection-target particle), and a drive waveform to be applied is selected on the basis of the time interval between a second subsequent collection-target particle flowing further next to the subsequent collection-target particle and the collection-target particle.

In addition, whereas the time interval ΔTp is the time interval between the times at which two collection-target particles are sensed in the example depicted in FIG. 15, the time interval ΔTp may be the time interval between the times at which two collection-target particles arrive at the particle fractionating unit (particularly, a position immediately before the connecting flow path).

For example, these decisions may be executed by the information processing unit of the biological particle fractionation system. That is, the biological particle fractionation system may have the information processing unit that executes a decision process based on the interval between a collection-target particle and a subsequent biological particle. The decision process may be a process of deciding which fractionation operation to apply for fractionating the one collection-target particle on the basis of whether the interval is in a predetermined numerical value range. The configuration of the information processing unit is explained in detail separately.

In addition, an offset of the drive output that is generated for each drive of the falling-edge-included pulse drive waveform may be managed using a step counter. For example, the step counter updates its value by (+1) every time the falling-edge-included pulse drive waveform is applied. In addition, the step counter updates its step counter value by (-1) every time the rising-edge-included pulse drive waveform is applied. The step count value in a state where there is no offset of the drive output is defined as 0 (reference value), the step counter value in a state where there is the maximum offset of the drive output is defined as MAX, and the drive waveform is controlled such that the value of the step counter is within the range from 0 to MAX (the maximum integer value). That is, the step counter value takes any integer within the range from 0 to MAX.

For example, in the process of deciding a fractionation operation, the information processing unit can reference the step counter value related to the number of times fractionation operations can be executed. A fractionation operation to be applied may be selected on the basis of the step counter value.

That is, the information processing unit may be configured to select a fractionation operation to be applied for fractionation of a collection-target particle on the basis of the step counter value and the interval between the collection-target particle and a subsequent biological particle.

A configuration example of a drive waveform for executing the first step, the second step, and the fourth step of the second fractionation operation is explained below.

First, the numerical value ranges for the amplitude, the durations of the first falling edge section for executing the first step and the first rising edge section for executing the second step, and the maintaining time may be as explained with respect to the first fractionation operation (falling-edge-included pulse drive waveform) above, and the explanation applies also to the second fractionation operation.

In addition, for example, the amplitude of the second rising edge section for executing the fourth step may be equal to or greater than 0.1 V, preferably equal to or greater than 1 V, and more preferably equal to or greater than 5 V. In addition, for example, the amplitude of the second rising edge section may be equal to or lower than 150 V, preferably equal to or lower than 100 V, and more preferably equal to or lower than 50 V.

For example, the duration of the second rising edge section may be equal to or longer than 1 µs, preferably equal to or longer than 5 µs, and more preferably equal to or longer than 15 µs. In addition, for example, the duration of the second rising edge section may be equal to or shorter than 100 µs, preferably equal to or shorter than 60 µs, and more preferably equal to or shorter than 30 µs.

For example, the maintaining time between the first rising edge section and the second rising edge section may be equal to or longer than 0 µs. In addition, for example, the maintaining time may be equal to or shorter than 100 µs, preferably equal to or shorter than 50 µs, and more preferably equal to or shorter than 30 µs.

### (7-1) Example 1 of Processing Procedure Performed by Biological Particle Fractionation System

An example of the procedure of a process executed by the biological particle fractionation system according to the present disclosure is explained with reference to FIG. 16 and FIG. 17. The former figure is an example of a flow diagram of a fractionation process executed for each of a plurality of microparticles flowing through a flow path. The latter is an example of a detailed flow diagram of a waveform selection process in the flow diagram.

As depicted in FIG. 16, the biological particle fractionation system may be configured to execute an event data acquisition process S11, an arrival time computation process S12, and a decision process S13 based on a gate. These processes may be executed for each of biological particles flowing in the flow path.

At Step S11, the biological particle fractionation system executes the event data acquisition process. In order to acquire the event data, the biological particle fractionation system acquires data related to light generated by light emission onto biological particles flowing through the flow path. For example, the light emission and the light sensing for acquiring the data related to the light may be executed by a light emitting unit and a sensing unit explained separately in the present specification, respectively. The data related to the light is transmitted from the sensing unit to an information processing unit mentioned later. In this manner, the information processing unit acquires event data of each biological particle.

At Step S12, the biological particle fractionation system (particularly, the information processing unit) computes a time at which a biological particle arrives at a position immediately before the connecting flow path. By executing a fractionation operation when the biological particle arrives at the position, the biological particle is collected into the collection flow path. For example, the time may be calculated on the basis of light sensing time data included in the event data.

The light sensing time data may be a time at which the light is sensed at Step S11. The time can be identified on the basis of a technology known to those skilled in the art. For example, the time may be identified on the basis of the distance between a position where the light emission is performed and the position immediately before the connecting flow path, and the speed of the biological particle. For example, the distance can be identified in advance on the basis of the structure of the flow path or the structure of the chip. In addition, for example, the speed of the biological particle is the speed of the biological particle flowing in the main flow path. For example, the speed can be identified by light emission onto the biological particle at two different locations. That is, the speed can be identified on the basis of the distance between the two locations and the time between two times at which light generated by the light emission at the two locations is sensed.

At Step S13, the biological particle fractionation system (particularly, the information processing unit) executes the decision process based on a gate. In the decision process, the biological particle fractionation system decides whether the biological particle belongs to a preset gate. More specifically, on the basis of the event data (particularly, on the basis of the data related to the light sensed by the light emission onto the biological particle), it is decided whether the biological particle belongs to the gate. The gate may be set as appropriate by those skilled in the art according to the type of biological particles that should be fractionated.

Step S12 and Step S13 may be executed in parallel, or Step S13 may be executed after Step S12 is executed.

At Step S14, the biological particle fractionation system (particularly, the information processing unit) decides whether the biological particle is a collection-target particle. In a case where it is decided that the biological particle belongs to the gate, the biological particle fractionation system can decide that the biological particle is a collection-target particle.

Here, there is a non-collection-target particle before or after the biological particle in some cases, and, by executing a fractionation operation, the non-collection-target particle is also collected into the collection flow path in addition to the biological particle in some cases. Accordingly, in addition to whether the biological particle belongs to or does not belong to the gate, the biological particle fractionation system may decide whether the biological particle is a collection-target particle on the basis of whether or not there is a non-collection-target particle. In a case where collection of a non-collection-target particle into the collection flow path is not tolerated, a purity priority mode may be adopted. In a case where collection of a non-collection-target particle into the collection flow path is tolerated, for example, an acquisition rate priority mode may be adopted. In a case where only an emulsion particle in which there is only one collection-target particle in an emulsion is collected in a case where an emulsion particle is to be fractionated, a single-particle priority mode may be adopted. These modes are explained in more detail below.

In the purity priority mode, the biological particle fractionation system (particularly, the information processing unit) decides that the biological particle is a collection-target particle in a case where it has been decided that the biological particle belongs to the gate and where there are no non-collection-target particles before and after the biological particle.

In addition, the biological particle fractionation system decides that the biological particle is a collection-target particle in a case where it has been decided that the biological particle belongs to the gate and where there is a collection-target particle before or after the biological particle.

In addition, the biological particle fractionation system decides that the biological particle is not a collection-target particle in a case where it has been decided that the biological particle belongs to the gate but where there is a non-collection-target particle before or after the biological particle.

In addition, the biological particle fractionation system decides that the biological particle is not a collection-target particle in a case where it has been decided that the biological particle does not belong to the gate independently of whether there is a non-collection-target particle before or after the biological particle.

In the acquisition rate priority mode, the biological particle fractionation system (particularly, the information processing unit) decides that the biological particle is a collection-target particle in a case where it has been decided that the biological particle belongs to the gate and where there are no non-collection-target particles before and after the biological particle.

In addition, the biological particle fractionation system decides that the biological particle is a collection-target particle also in a case where it has been decided that the biological particle belongs to the gate but where there is a non-collection-target particle before or after the biological particle.

In addition, the biological particle fractionation system decides that the biological particle is not a collection-target particle in a case where it has been decided that the biological particle does not belong to the gate independently of whether there is a non-collection-target particle before or after the biological particle.

In the single-particle priority mode, the biological particle fractionation system (particularly, the information processing unit) decides that the biological particle is a collection-target particle in a case where it has been decided that the biological particle belongs to the gate and where there are no particles before or after the biological particle.

In addition, the biological particle fractionation system decides that the biological particle is not a collection-target particle in a case where it has been decided that the biological particle belongs to the gate but where there is a particle before or after the biological particle. That is, the biological particle fractionation system decides that the biological particle is not a collection-target particle in a case where it has been decided that the biological particle belongs to the gate but where there is a collection-target particle before or after the biological particle, unlike in the case of the purity priority mode.

In addition, the biological particle fractionation system decides that the biological particle is not a collection-target particle in a case where it has been decided that the biological particle does not belong to the gate independently of whether there is a particle before or after the biological particle.

In the abovementioned purity priority mode, in a case where one collection-target particle and a subsequent collection-target particle flowing after the one collection-target particle are close to each other, it is decided to fractionate the one collection-target particle. That is, in one fractionation operation for fractionation of the one collection-target particle, the subsequent collection-target particle is also fractionated together in addition to the one collection-target particle, in some cases. Thereby, the purity of collection-target particles can be enhanced. In contrast, in the single-particle priority mode, in a case where one collection-target particle and a subsequent particle flowing after the one collection-target particle are close to each other, it is decided not to fractionate the one collection-target particle independently of whether the subsequent particle is a collection-target particle or a non-collection-target particle. Thereby, in one fractionation operation, an emulsion particle including only one collection-target particle is formed, and the formation of an emulsion particle including two particles can be prevented.

At Step S15, the biological particle fractionation system (particularly, the information processing unit) selects a drive waveform to be applied to a particle decided as a collection-target particle at Step S14. The drive waveform selection process is executed using the time interval ΔTp between the arrival time calculated at Step S12 with respect to the collection-target particle and the arrival time calculated at Step S12 with respect to a collection-target particle (also called a "subsequent collection-target particle") flowing next to the collection-target particle. A more specific example of the selection process is explained later separately with reference to FIG. 17.

At Step S16, the biological particle fractionation system executes a fractionation operation using the drive waveform selected at Step S15. By the fractionation operation, the collection-target particle is collected into the collection flow path. The fractionation operation may be executed by the fractionating unit explained later. For example, the fractionating unit may be realized using an actuator, more particularly a piezo element, arranged to be able to change the volume in the collection flow path.

### (7-2) Waveform Selection Process Example

The following explains a more specific example of the waveform selection process at the above Step S15 with reference to FIG. 17. The biological particle fractionation system, particularly the information processing unit included in the system, may be configured to execute each step in the waveform selection process.

At Step S20, the information processing unit starts the drive waveform selection process.

At Step S21, the information processing unit calculates the time interval ΔTp between the time at which the collection-target particle arrives at the position immediately before the connecting flow path and the time at which a subsequent collection-target particle flowing next to the collection-target particle arrives at the position immediately before the connecting flow path. Both these two arrival times may be times calculated at the above Step S12. The biological particle fractionation system can utilize the difference between these two arrival times as the time interval ΔTp.

At Step S22, the information processing unit can compare the time interval ΔTp calculated at Step S21 and a predetermined threshold (also called a "first threshold value" in the present specification). The predetermined first threshold value may be the threshold Twf explained above. The first threshold value may be preset by those skilled in the art, and, for example, can be preset on the basis of a region of a liquid collected into the collection flow path in a case where a pulse drive waveform to be applied is applied.

At Step S22, the information processing unit advances the process to Step S23 in a case where the time interval ΔTp is equal to or greater than the first threshold value (e.g., in a case where Twf ≤ ΔTp).

At Step S22, the information processing unit advances the process to Step S29 in a case where the time interval ΔTp is not equal to or greater than the first threshold value (e.g., in a case where ΔTp < Twf).

At Step S23, the information processing unit can compare the time interval ΔTp and a predetermined threshold (also called a "second threshold value" in the present specification). The predetermined second threshold value may be the threshold Twr explained above. The second threshold value may be preset by those skilled in the art, and, for example, can be preset on the basis of the time until a discharge flow that can be generated in a case where a fractionation operation is executed disappears, the time until the amplitude of unnecessary oscillations that can be generated in a case where a fractionation operation is executed becomes equal to or smaller than a predetermined value, and/or the like.

At Step S23, the information processing unit advances the process to Step S24 in a case where the time interval ΔTp is shorter than the second threshold value (e.g., in a case where ΔTp < Twr).

At Step S23, the information processing unit advances the process to Step S27 in a case where the time interval ΔTp is not shorter than the second threshold value (e.g., in a case where Twr ≤ ΔTp).

At Step S24, the information processing unit decides whether a step counter value is smaller than the maximum value. The step counter value may be the value of a step counter related to the number of times of executions of the first fractionation operation. For example, the step counter value may take any integer value, and, in a case where the value has reached a predetermined value, this can mean that the first fractionation operation cannot be executed. For example, in a case where the step counter value is the maximum value, this may mean that the pressure in the collection flow path cannot be lowered further.

At Step S24, the information processing unit advances the process to Step S25 in a case where the step counter value is smaller than the maximum value. In a case where the step counter value is smaller than the maximum value, the first fractionation operation can be executed, and, by executing the first fractionation operation, more efficient fractionation becomes possible.

At Step S24, the information processing unit advances the process to Step S26 in a case where the step counter value is not smaller than the maximum value (e.g., in a case where the step counter value is the maximum value).

At Step S25, the information processing unit selects a pulse drive waveform for executing the first fractionation operation. Particularly, the falling-edge-included pulse drive waveform is selected.

At Step S25, since there is a subsequent collection-target particle at a position relatively close to the collection-target particle (e.g., a position satisfying Twf ≤ ΔTp < Twr), a discharge flow and/or unnecessary oscillations can be suppressed by executing the first fractionation operation, particularly by the second falling edge section in the first fractionation operation, thereby making it possible to stably fractionate the subsequent target particle.

For example, at Step S25, a timing at which a pulse drive waveform for executing the first fractionation operation, particularly the falling-edge-included pulse drive waveform, is applied can be written to a memory.

In addition, after the waveform selection at Step S25 (e.g., after a fractionation operation using the selected pulse drive waveform is executed), the biological particle fractionation system may execute a process of incrementing the step counter value. Since the number of times the first fractionation operation can be executed consecutively is limited to a predetermined number of times by an offset as mentioned above, the number of times of consecutive executions of the first fractionation operation can be managed by increasing the step counter value, and a subsequent fractionation operation can be selected appropriately.

At Step S26, the information processing unit aborts the subsequent collection-target particle. At Step S36, since the step counter value is the maximum value, the first fractionation operation cannot be executed. Accordingly, the subsequent collection-target particle is not treated as a collection target. Then, the biological particle fractionation system executes the waveform selection process on the basis of the relation between a second subsequent collection-target particle flowing next to the subsequent collection-target particle and the collection-target particle (particularly, the time interval ΔTp).

At Step S27, the information processing unit decides whether a step counter value is greater than 0. The step counter value may be the value of the step counter referenced at Step S24.

At Step S27, the information processing unit advances the process to Step S28 in a case where the step counter value is greater than 0 (e.g., in a case where the step counter value is any integer greater than 0 and equal to or smaller than the maximum value. The step counter value which is greater than 0 means that the abovementioned offset has been generated. In view of this, the offset can be eliminated by advancing the process to Step S28 and executing the second fractionation operation. Thereby, the number of times the first fractionation operation can be executed consecutively can be increased. This contributes to efficient fractionation of particles.

At Step S27, the information processing unit advances the process to Step S25 in a case where the step counter value is not greater than 0 (e.g., in a case where the step counter value is 0). The step counter value which is 0 means that the abovementioned offset has not been generated. Accordingly, it is not necessary to execute the second fractionation operation.

At Step S28, the information processing unit selects a pulse drive waveform for executing the second fractionation operation.

At Step S28, since there is a subsequent collection-target particle at a relatively far position from the collection-target particle (e.g., a position satisfying Twr ≤ ΔTp), even if the second fractionation operation is executed, fractionation of the subsequent collection-target particle is not influenced by a discharge flow and/or unnecessary oscillations, or, even if influenced, the influence is within a tolerable range for stable fractionation. In addition, the abovementioned offset can be eliminated by executing the second fractionation operation. Thereby, the number of times the first fractionation operation can be executed consecutively can be increased. This contributes to efficient fractionation of particles.

For example, at Step S28, a timing at which a pulse drive waveform for executing the second fractionation operation, particularly the rising-edge-included pulse drive waveform, is applied can be written to the memory.

In addition, after the waveform selection at Step S28 (e.g., after a fractionation operation using the selected pulse drive waveform is executed), the information processing unit may execute a process of decrementing the step counter value. Since the number of times the first fractionation operation can be executed consecutively is limited to a predetermined number of times by an offset as mentioned above, that the number of times of consecutive executions of the first fractionation operation has increased is recorded by decreasing the step counter value, and a subsequent fractionation operation can be selected appropriately.

At Step S29, the information processing unit aborts the subsequent collection-target particle. The aborting may mean changing the decision that the subsequent collection-target particle having been decided as a collection target to a decision that the subsequent collection-target particle is a non-collection target. That is, the aborting makes the subsequent collection-target particle a non-collection target.

At Step S22 before Step S29, it is decided that the interval between the subsequent collection-target particle and the collection-target particle is too short (ΔTp < Twf), and, if a fractionation operation treating the subsequent collection-target particle as a collection target is executed in this case, the subsequent collection-target particle cannot be fractionated appropriately. In addition, if a fractionation operation for generating an emulsion particle is executed in this case, there is a high likelihood that the size of the generated emulsion particle becomes significantly different from other emulsion particles. Accordingly, by the aborting process, biological particle fractionation can be executed stably.

In a case where the aborting process is executed, the information processing unit returns the process to Step S20, and the waveform selection process depicted in the figure may be executed on the basis of the interval between the collection-target particle and a second subsequent collection-target particle flowing next to the subsequent collection-target particle. Thereby, efficient particle fractionation becomes possible.

By the waveform selection process as mentioned above, an appropriate drive waveform can be selected according to the interval between a collection-target particle and a subsequent collection-target particle. In addition, the first fractionation operation can be executed at an appropriate timing, and this contributes to the realization of efficient particle fractionation. In addition, the second fractionation operation can be executed at an appropriate timing, and the pressure in the collection flow path can be controlled appropriately.

In this manner, the biological particle fractionation system according to the present disclosure may be configured to be able to execute the first fractionation operation or the second fractionation operation as the one fractionation operation. Further, the biological particle fractionation system may have the information processing unit that executes a decision process based on the interval between one collection-target particle and the subsequent biological particle, and the information processing unit can select either the first fractionation operation or the second fractionation operation on the basis of the interval.

In one embodiment, the biological particle fractionation system may be configured to apply a pulse voltage to the actuator for changing the pressure in the collection flow path. Then, the drive waveform of the pulse voltage can be configured such that the actuator executes the first fractionation operation or the second fractionation operation according to the interval.

### (7-3) Example of Time Chart

An example of a time chart of the execution of the waveform selection process explained above is explained with reference to FIG. 18. The figure is an example of the time chart, and the time chart depicts events E11 to E19 in which collection-target particles are sensed. A in the figure represents event sensing times, B in the figure represents application timings of the falling-edge-included pulse drive waveform, C in the figure represents application timings of the rising-edge-included pulse drive waveform, and D represents a drive signal.

A waveform selection process performed for each event is explained below.

Regarding the collection-target particle of the event E11, the information processing unit calculates ΔTp at Step S21. More specifically, the information processing unit calculates the time interval ΔTp between the collection-target particle of the event E11 and the collection-target particle of the event E12 (which is the subsequent collection-target particle flowing next to the collection-target particle of the event E11).

The calculated ΔTp is longer than Twf and shorter than Twr as depicted in the figure. Accordingly, as a result of the decision processes at Steps S22 and S23, the information processing unit advances the process to Step S24.

At Step S24, the information processing unit references the step counter value. The step counter value is 0. Accordingly, the information processing unit advances the process to Step S25. At Step S25, the information processing unit selects the first fractionation operation as a fractionation operation to be applied for fractionation of the collection-target particle. That is, the falling-edge-included pulse drive waveform is selected.

In response to the selection of the first fractionation operation, as depicted in the figure, the information processing unit increments the step counter value by 1, that is, changes the step counter value from "0" to "1." Thereby, that an offset has been generated in the collection flow path (or the drive voltage) is managed.

Regarding the collection-target particle of the event E12, the information processing unit calculates ΔTp at Step S21. More specifically, the information processing unit calculates the time interval ΔTp between the collection-target particle of the event E12 and the collection-target particle of the event E13 (which is the subsequent collection-target particle flowing next to the collection-target particle of the event E12).

The calculated ΔTp is longer than Twf and, furthermore, longer than Twr as depicted in the figure. Accordingly, as a result of the decision processes at Steps S22 and S23, the information processing unit advances the process to Step S27.

At Step S27, the information processing unit references the step counter value. The step counter value is 1. Accordingly, the information processing unit advances the process to Step S28. At Step S28, the information processing unit selects the second fractionation operation as a fractionation operation to be applied for fractionation of the collection-target particle. That is, the rising-edge-included pulse drive waveform is selected.

In response to the selection of the second fractionation operation, as depicted in the figure, the information processing unit decrements the step counter value by 1, that is, changes the step counter value from "1" to "0." Thereby, that an offset in the collection flow path (or the drive voltage) has been eliminated is managed.

Regarding the collection-target particle of the event E13, the same process as that for the collection-target particle of the event E1 is executed, and the information processing unit selects the first fractionation operation as a fractionation operation to be applied for fractionation of the collection-target particle. That is, the falling-edge-included pulse drive waveform is selected.

Regarding the events E14 and E15 also, similar processes are executed, and the information processing unit selects the first fractionation operation as a fractionation operation to be applied for fractionation of the collection-target particle. That is, the falling-edge-included pulse drive waveform is selected. Note that, as a result of the consecutive executions for the events E13, E14, and E15, the step counter value is changed stepwise from "0" to "3 (maximum value) ."

Regarding the collection-target particle of the event E16, the information processing unit calculates ΔTp at Step S21. More specifically, the information processing unit calculates the time interval ΔTp between the collection-target particle of the event E16 and the collection-target particle of the event E17 (which is the subsequent collection-target particle flowing next to the collection-target particle of the event E16).

The calculated ΔTp is longer than Twf and, furthermore, longer than Twr as depicted in the figure. Accordingly, as a result of the decision processes at Steps S22 and S23, the information processing unit advances the process to Step S27.

At Step S27, the information processing unit references the step counter value. The step counter value is the maximum value, which is 3. Accordingly, the information processing unit advances the process to Step S28. At Step S28, the information processing unit selects the second fractionation operation as a fractionation operation to be applied for fractionation of the collection-target particle. That is, the rising-edge-included pulse drive waveform is selected.

In response to the selection of the second fractionation operation, as depicted in the figure, the information processing unit decrements the step counter value by 1, that is, changes the step counter value from "3" to "2."

Regarding the collection-target particles of the events E17 and E18 also, similar processes are executed, and the information processing unit selects the second fractionation operation as a fractionation operation to be applied for fractionation of the collection-target particle. That is, the rising-edge-included pulse drive waveform is selected. Note that, as a result of the consecutive executions for the events E16, E17, and E18, the step counter value is changed stepwise from "3 (maximum value)" to "0."

Regarding the collection-target particle of the event E19, the same process as that for the collection-target particle of the event E11 is executed, and the information processing unit selects the first fractionation operation as a fractionation operation to be applied for fractionation of the collection-target particle. That is, the falling-edge-included pulse drive waveform is selected.

By executing the drive waveform selection process as mentioned above, the first fractionation operation is applied in a case where the interval between two consecutive collection-target particles is short, thereby making it possible to enhance the fractionation efficiency. In addition, an offset generated by the execution of the first fractionation operation is eliminated at an appropriate timing.

### (7-4) Configuration Example of Fractionating Apparatus

For example, the biological particle fractionation system according to the present disclosure may have a light emitting unit, a sensing unit, an information processing unit, and a fractionating unit explained below. The light emitting unit, the sensing unit, the information processing unit, and the fractionating unit may be as explained with respect to a biosample analyzing apparatus below, and the explanation is also applicable to biological particle fractionation of the present disclosure. The light emitting unit, the sensing unit, the information processing unit, and the fractionating unit may exist in one apparatus, or may be mounted distributedly in a plurality of apparatuses.

FIG. 27 shows an example configuration of a biological sample analyzer of the present disclosure. A biological sample analyzer 6100 shown in FIG. 27 includes: a light irradiation unit 6101 that irradiates a biological sample S flowing in a flow channel C with light; a detection unit 6102 that detects light generated by irradiating the biological sample S with light; and an information processing unit 6103 that processes information about the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

### (Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

### (Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 µm and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

### (Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

### (Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

### (Information Processing Unit)

The information processing unit 6103 includes a processing unit that performs processing of various kinds of data (light data, for example), and a storage unit that stores various kinds of data, for example. In a case where the processing unit acquires the light data corresponding to a fluorescent dye from the detection unit 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye. The fluorescence separation process may be performed by an unmixing method disclosed in JP 2011-232259 A, for example. In a case where the detection unit 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating process on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

### (Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

### (7-5) Example of Information Processing Unit and Example of Algorithm Executed by Information Processing Unit

### (7-5-1) Example of Information Processing Unit

A more specific configuration example of the information processing unit and an example of an algorithm of a fractionation process executed by the information processing unit are explained below.

### [Overall Configuration of Information Processing Unit]

FIG. 28A is a block diagram depicting the configuration example of the information processing unit. An information processing unit 23 depicted in the figure has a plurality of circuits 2302 to 2309 each connected to a bus 2301. Note that the information processing unit can also be called a driving unit or a control unit.

Specifically, circuits denoted with a reference sign 2302 in the figure are analog-digital converting circuits 2302. In addition, a circuit denoted with a reference sign 2303 is the event sensing circuit 2303. Further, a circuit denoted with a reference sign 2304 is an arrival time computing circuit 2304. Still further, a circuit denoted with a reference sign 2305 is a gating circuit 2305. In addition, a circuit denoted with a reference sign 2306 is an output queue circuit 2306. Furthermore, a circuit denoted with a reference sign 2307 is an output timing generating circuit 2307. Still furthermore, a circuit denoted with a reference sign 2308 is an output signal generating circuit 2308. In addition, a circuit denoted with a reference sign 2309 is an MPU (microprocessing unit) 2309. Note that the analog-digital converting circuits 2302 are written as "A/D" in the figure.

In addition, as depicted in the figure, the information processing unit 23 has a clock counter 2310. The clock counter 2310 is connected to the event sensing circuit 2303, the arrival time computing circuit 2304, the gating circuit 2305, the output queue circuit 2306, the output timing generating circuit 2307, and the output signal generating circuit 2308.

Further, as depicted in the figure, the information processing unit 23 has a PC I/O unit (an Input/Output Interface circuit for personal computer connection) 2311 connected to the MPU 2309, and a control PC 2312 connected to the PC I/O unit 2311.

Still further, as depicted in the figure, the information processing unit 23 has a digital-analog converting circuit 2313 connected to the output signal generating circuit 2308. Note that the digital-analog converting circuit 2313 is written as "D/A" in the figure.

### [Details of Information Processing Unit]

### [Analog-Digital Converting Circuits]

The analog-digital converting circuits 2302 are circuits located downstream (on the output side) of the detection unit 6102 (see FIG. 27), and are connected with the detection unit 6102. In addition, a plurality of the analog-digital converting circuits 2302 is arranged. Here, the analog-digital converting circuits 2302 may be arranged in the same number as the number of channels of the detection unit 6102 so as to correspond to a plurality of pieces of light (wavelength regions) detected by the detection unit 6102. Alternatively, the analog-digital converting circuits 2302 may be arranged in the same number as the number of sensors of a detection unit 2302.

Each analog-digital converting circuit 2302 receives an input of an electric signal output from the detection unit 6102 and corresponding to the analog-digital converting circuit 2302. The electric signal is an analog signal obtained by photoelectric conversion, by the detection unit 6102, of light (fluorescence and scattered light) detected by the detection unit 6102. Then, each analog-digital converting circuit 2302 converts each input electric signal from an analog signal to an digital signal. Further, each analog-digital converting circuit 2302 outputs an electric signal converted to a digital signal downstream.

### [Event Sensing Circuit]

The event sensing circuit 2303 is a circuit located downstream of each analog-digital converting circuit 2302, and is connected with each analog-digital converting circuit 2302.

The event sensing circuit 2303 receives an input of an electric signal output from each analog-digital converting circuit 2302. Then, the event sensing circuit 2303 uses, as a trigger signal for recognizing a microparticle, a particular signal in respective input electric signals. That is, in a case where the value of the trigger signal satisfies a predetermined condition, the event sensing circuit 2303 recognizes that an electric signal has been detected from a microparticle. Note that the trigger signal may be an electric signal of light (e.g., forward scattered light) with the highest intensity in a plurality of pieces of light detected by the detection unit 6102, but this may not be the sole example.

In addition, as depicted in FIG. 28B, the event sensing circuit 2303 reads in the waveform of each input electric signal, and computes the width, height, and area of the waveform read in. Furthermore, using the respective calculated values and the like of the waveform, as depicted in FIG. 28C, the event sensing circuit 2303 creates an event data packet in which each electric signal is associated with one microparticle corresponding to the respective calculated values and the like. The event data packet is an example of measurement data for one microparticle. Then, the event sensing circuit 2303 outputs the created event data packet downstream.

Here, the event data packet includes items (hereinbelow, called first items) for which data recording is completed at the time of the creation of the packet. In addition, the event data packet includes items (hereinbelow, called second items) that are updated as processes related to an electric signal corresponding to the packet after the creation of the packet are proceeded with.

For example, the first items include the following items.
- The width, height, and area of the waveform of an electric signal
- The number (event number) of a recognized microparticle
- The number of an electric signal having served as a trigger signal
- A trigger signal sensing time

Note that the number of the electric signal having served as the trigger signal may be a channel number. In addition, a signal input from the clock counter 2310 may be used for recording of the trigger signal sensing time. This signal may represent the number of clock signals input to the clock counter 2310 from a clock generating circuit (not illustrated) and counted by the clock counter 2310.

In contrast, for example, the second items include the following items.
- A time at which a microparticle should be collected
- A first flag representing whether or not to collect the microparticle
- A second flag representing whether or not to collect the microparticle

Note that the first flag is a flag set by the gating circuit 2305. In contrast, the second flag is a flag set by the output queue circuit 2306. The first flag and the second flag may be basically set to 1 or 0 and used to determine whether or not to collect the corresponding microparticle. Further details of each flag are mentioned later.

### [Arrival Time Computing Circuit]

As depicted in the figure, the arrival time computing circuit 2304 is a circuit located downstream of the event sensing circuit 2303, and is connected with the event sensing circuit 2303.

The arrival time computing circuit 2304 receives an input of an event data packet output from the event sensing circuit 2303. Then, on the basis of the input event data packet, the arrival time computing circuit 2304 computes an arrival time at which a microparticle (target particle) arrives at a communication port (an entrance of the connecting flow path on the side of the main flow path) as a time at which a microparticle should be collected included in the second items. In the following explanation, the "time at which a microparticle should be collected" is instead referred to as the "arrival time." The arrival time computing circuit 2304 records the arrival time calculated by the computation in the event data packet, and outputs the event data packet after the recording downstream.

The arrival time may be computed by adding required time (delay time) for a target particle in a sensing region to arrive at the communication port to a trigger signal sensing time included in the second items. In addition, the arrival time may be computed using a clock counter value.

### [Gating Circuit]

The gating circuit 2305 is a circuit located downstream of the event sensing circuit 2303, and is connected with the event sensing circuit 2303.

The gating circuit 2305 receives an input of an event data packet output from the event sensing circuit 2303. Then, the gating circuit 2305 sets a first flag in the input event data packet. Further, the gating circuit 2305 outputs the event data packet after the setting of the first flag downstream.

The setting of the first flag may be performed on the basis of a threshold preset for a parameter of each electric signal included in the event data packet. In this case, the threshold may be related to at least one of the width, height, and area of a waveform. Then, in a case where the parameter satisfies the threshold, the value of the first flag may be set to a value (e.g., "1") representing that the microparticle is to be collected. In contrast, in a case where the parameter does not satisfy the threshold, the value of the first flag may be set to a value (e.g., "0") representing that the microparticle is not to be collected.

In addition, the threshold may be a range preset by gating. Here, the gating is a process of designating a range corresponding to a target particle by surrounding the range on a distribution diagram representing the characteristics distribution of microparticles in a microparticle group. The gating is performed before the start of a target particle collecting operation. Note that the distribution diagram may be created by a GUI (graphical user interface) on the control PC 2312. In addition, the gating may be performed by the gating circuit 2305.

Here, A on the left side of FIG. 28D depicts a result of gating on a histogram chart as an example of a distribution diagram. The histogram chart has the horizontal axis representing a parameter, and the vertical axis representing the number of particles. Whereas the parameter in the figure is the area of the waveform of an electric signal corresponding to a channel number 1 (Ch1), parameters other than this may be used. Then, a rectangular frame in the figure is a gate designating a range corresponding to a target particle, and the range may be used as a threshold for the setting of the first flag.

In contrast, B on the right side in FIG. 28D depicts a result of gating on a 2D (two-dimensional) chart as another example of a distribution diagram. In this 2D chart, mutually different parameters are allocated to the horizontal axis and the vertical axis. The parameter of the horizontal axis in the figure is the area of the waveform of an electric signal corresponding to a channel number 2 (Ch2), and the parameter of the vertical axis in the figure is the area of the waveform of an electric signal corresponding to a channel number 3 (Ch3). However, parameters other than the areas of the waveforms of the electric signals may be used. Then, a rectangular frame in the figure is a gate designating a range corresponding to a target particle, and the range may be used as a threshold for the setting of the first flag.

### [Output Queue Circuit]

Returning to FIG. 28A, the output queue circuit 2306 is a circuit located downstream of the arrival time computing circuit 2304 and the gating circuit 2305, and is connected with the arrival time computing circuit 2304 and the gating circuit 2305.

The output queue circuit 2306 receives an input of an event data packet output from the arrival time computing circuit 2304 and an event data packet output from the gating circuit 2305. Then, the output queue circuit 2306 integrates (synthesizes), into one event data packet, event data packets that are included in input event data packets, and represent the same microparticle, that is, have the same event number. This integrated event data packet includes both a delay time and a first flag written in it. Note that the integration of event data packets may be performed by either of the arrival time computing circuit 2304 and the gating circuit 2305 by communication between the circuits 2304 and 2305. In addition, the arrival time computing circuit 2304 and the gating circuit 2305 may be connected in series.

In addition, the output queue circuit 2306 arranges serially-input event data packets of mutually different microparticles in descending order based on the arrival times included in the event data packets. Here, event data packets that have been input to the output queue circuit 2306, and waiting for the output of drive waveforms for collecting corresponding microparticles are defined as an "output queue." The output queue is updated according to the input of a new event data packet to the output queue circuit 2306.

Furthermore, according to whether the fractionation operation mode is the purity priority mode, the acquisition rate priority mode, or the single-particle priority mode, the output queue circuit 2306 determines whether or not to collect a microparticle corresponding to each event data packet. Note that the purity priority mode, the acquisition rate priority mode, and the single-particle priority mode are operation modes of the information processing unit 23 selectively set in advance before the start of a microparticle collecting operation. The mode setting may be performed by the control PC 2312 via various types of user interface.

Here, the purity priority mode is a mode in which, in a case where a target particle and a non-target particle are flowing close to each other and where there is a high likelihood that both the particles are captured together, the target particle is deliberately regarded as a "non-target particle (not to be acquired)," and the purity of captured particles is enhanced. That is, in a case where the purity priority mode is set, a target particle close to a non-target particle is not collected, but is discarded.

In contrast, the acquisition rate priority mode is a mode in which, in a case where a target particle and a non-target particle are flowing close to each other and where there is a high likelihood that both the particles are captured together, both the particles are acquired together, and the number of acquired particles is increased even if the purity of captured particles lowers.

The single-particle priority mode is a fractionation mode which is useful in a case where a target particle is captured as an emulsion particle, for example. The single-particle priority mode is a mode in which, in a case where a certain target particle and another particle (target particle or non-target particle) are flowing close to each other, there is a high likelihood that both the particles are captured together, and a plurality particles are contained in one emulsion particle, the certain target particle is deliberately regarded as a "non-target particle (not to be acquired)," and is not fractionated. That is, the single-particle priority mode can also be said to be a mode that enhances the capturing rate of single-particle emulsions. That is, in a case where the single-particle priority mode is set, a target particle close to a particle is not collected, but is discarded.

Then, the output queue circuit 2306 sets a second flag on the basis of the result of determining whether or not to collect a microparticle according to the set mode. At this time, in a case where it is determined to collect a microparticle, the output queue circuit 2306 may set the second flag to "1." In contrast, in a case where it is determined not to collect a microparticle, the output queue circuit 2306 may set the second flag to "0." Note that such a flag setting mode may not be the sole example.

Still further, the output queue circuit 2306 writes, to a memory, the application timing of a drive waveform that should be applied to the actuator. The memory may be a RAM (random access memory). In addition, the memory may be connected to the bus 2301, or may be built in a circuit of the information processing unit 23 or the control PC 2312. Furthermore, when writing the application timing, the setting values of the first flag and the second flag may be referenced. In this case, in a case where both the flags have been set to values representing an execution of collection, such an application timing that the corresponding microparticle is collected may be written. Still furthermore, the drive waveform may be a drive voltage.

Here, the output queue circuit writes, in the memory, the application timing of the drive waveform to be used. In a case where a pulse drive waveform is applied as the drive waveform, as depicted in FIG. 4 explained above, the pulse waveform includes a falling edge section and a rising edge section. The falling edge section forms the front section of the pulse waveform, and the rising edge section forms the rear section of the pulse waveform. The height (amplitude) of the falling edge section and the height of the rising edge section are made mutually identical.

The falling edge section is applied for deforming the pressure chamber in the direction of increasing the volume of the pressure chamber and generating a pressure change in the negative direction immediately after the application of the falling edge. The falling edge section may generate a force to weaken the pressing pressure in order to increase the volume in the pressure chamber. In a case where the actuator is a piezo element, the falling edge section may have a waveform that reduces a drive voltage being applied to the stretched piezo element and causes the piezo element to contract.

In contrast, the rising edge drive waveform is applied for deforming the pressure chamber so as to reduce the volume of the pressure chamber and generating a pressure change in the positive direction immediately after the application of the drive waveform. The rising edge drive waveform may generate a force to strengthen the pressing pressure in order to reduce the volume in the pressure chamber. In a case where the actuator is a piezo element, the rising edge drive waveform may be a waveform that increases a drive voltage being applied to the contracted piezo element and causes the piezo element to extend.

In a case where the output queue circuit writes, to the memory, the application timing of a pulse drive waveform including a falling edge section and a rising edge section like the one above, the output queue circuit may write an arrival time included in an event data packet as the application timing of the pulse drive waveform.

### [Output Timing Generating Circuit]

As depicted in FIG. 28A, the output timing generating circuit 2307 is connected with the output queue circuit 2306. The output timing generating circuit 2307 reads out, from the RAM, the arrival time of an event data packet arrayed at the beginning of the output queue written to the RAM by the output queue circuit 2306. Then, the output timing generating circuit 2307 compares the arrival time read out with the value of a signal from the clock counter 2310, and generates an output timing signal at the arrival time. Here, the output timing signal is a signal for allocating an output timing of a drive waveform. The output timing generating circuit 2307 outputs the generated output timing signal downstream. Further, the output queue circuit 2307 may transmit a completion signal to the output queue circuit 2306 after outputting the output timing signal and prompt the updating of the output queue.

In a case where the drive waveform is a pulse waveform, the output timing generating circuit 2307 references the memory to which the application timings of a falling edge section and a rising edge section have been written by the output queue circuit 2306. Then, the output timing generating circuit 2307 compares the application timings of the falling edge section and the rising edge section in the memory with the value of a signal from the clock counter 2310, and generates an output timing signal for each waveform section. Further, the output timing generating circuit 2307 outputs the generated output timing signals downstream.

### [Output Signal Generating Circuit]

The output signal generating circuit 2308 is a circuit located downstream of the output timing generating circuit 2307, and is connected with the output timing generating circuit 2307.

The output signal generating circuit 2308 receives an input of output timing signals output from the output timing generating circuit 2307. Then, the output signal generating circuit 2308 generates a drive waveform (output signal) corresponding to the input output timing signals, and outputs the drive waveform downstream. Further, after outputting the drive waveform, the output signal generating circuit 2308 updates a step counter and an output status signal. Note that the output status signal is a signal representing the state where a waveform is being deactivated/is being output (can be output (enable)/cannot be output (disable)).

Here, the step counter represents stepwise output levels of a drive waveform. Stated differently, the step counter represents a variation value from a reference value of drive waveforms that varies stepwise along with an increase of the number of times of the application of drive waveforms. The difference in output of each level difference corresponding to one level of the step counter is constant. The step counter and the output status signal may be input to the output queue circuit 2306 or the output timing generating circuit 2307 and utilized for processes performed by the respective circuits 2306 and 2307.

In a case where the drive waveform is a pulse waveform, the output signal generating circuit 2308 generates and outputs a falling edge section and a rising edge section separately.

### [Digital-Analog Converting Circuit]

The digital-analog converting circuit 2313 receives an input of a drive waveform output from the output signal generating circuit 2308. Then, the digital-analog converting circuit 2313 converts the input drive waveform from a digital signal into an analog signal, and outputs the analog signal to a drive circuit of an actuator 31.

Note that the information processing unit 23 in FIG. 28A may be applied for the application of a drive waveform other than a pulse waveform.

### (7-5-2) Example of Algorithm

An example of an algorithm executed by the information processing unit is depicted in FIG. 29. In a flowchart depicted in the figure, the following first to third processes are performed separately and in parallel.

### [First Process]

In the first process, first, at Step S151-1, it is decided whether or not there is an input of an event (event data packet). In this decision, event data packets input from upstream circuits (e.g., the arrival time computing circuit 2304 and the gating circuit 2305) are utilized. Then, the process is advanced to Step S151-2 in a case where the decision result of Step S151-1 is positive, and Step S151-1 is repeated in a case where the decision result of Step S151-1 is negative.

Next, at Step S151-2, the output queue is updated by adding a new event corresponding to the decision that "there is an input" at Step S151-1 to the output queue.

Last, at Step S151-3, on the basis of the output queue updated at Step S151-2, it is reevaluated whether or not to collect (acquire/not acquire) a microparticle, and the process returns to Step S151-1. Here, the reason why the expression "reevaluate" is used is because the evaluation at this step corresponds to a process of evaluating again an event already in the queue (an event that has already been evaluated and has a second flag having been set therefor). In the case of purity priority, since there is a possibility that an event to be added to the queue later is close to an event that has been added earlier, the process at this step functions effectively.

### [Second Process]

In the second process, at Step S152, a selection is made, regarding an event (collection-target particle) that should be acquired next, whether to acquire the event by the application of a falling-edge-included pulse drive waveform or to acquire the event by a rising-edge-included pulse drive waveform, and an arrival time recorded in the event data packet is written to the memory. The drive waveform selection process may be executed as explained in (7-2) and (7-3) above. Alternatively, the drive waveform selection process may be executed as explained in (8) or (9) below. The pulse drive waveform selected by the selection process is written to the memory.

### [Third Process]

In the third process, in a case where the application of a falling-edge-included pulse drive waveform is selected in the second process, first, at Step S153-1, the application timing of the falling edge section for the event that should be acquired by the application of the falling-edge-included pulse drive waveform is written to the memory. This written application timing is to be referenced by the output timing generating circuit. Next, at Step S153-2, it is decided whether the trigger output of the falling-edge-included pulse drive waveform has been completed. The falling-edge trigger output is the output of the falling-edge-included pulse drive waveform generated by the output timing generating circuit to the output signal generating circuit. Last, at Step S153-3, the output queue is updated by deleting the event for which the falling-edge-included pulse waveform trigger output has been completed from the output queue, and the process returns to Step S153-1.

### [Fourth Process]

In the fourth process, in a case where the application of a rising-edge-included pulse drive waveform is selected in the second process, first, at Step S154-1, the application timing of the rising-edge-included pulse drive waveform for the event that should be acquired by the application of the rising-edge-included pulse drive waveform is written to the memory. This written application timing is to be referenced by the output timing generating circuit. Next, at Step S154-2, it is decided whether the trigger output of the rising-edge-included pulse waveform has been completed. The rising-edge-included pulse waveform trigger output is the output of the rising edge section generated by the output timing generating circuit to the output signal generating circuit. Last, at Step S154-3, the output queue is updated by deleting the event for which the rising-edge-included pulse waveform trigger output has been completed from the output queue, and the process returns to Step S154-1.

### (8) Fractionation Process Example 2

In the second fractionation operation explained in (7) above, the second rising edge section is configured to raise the pressure at one level. That is, single-step offset elimination is performed. For the offset elimination, the second rising edge section has a single-step rising edge.

In one embodiment of the present disclosure, the pressure increase at the fourth step is not limited to a single-step pressure increase and may be a multi-step pressure increase. That is, at the fourth step, offset elimination with one or more levels may be executed. For the offset elimination, the second rising edge section may have a rising edge with one or more steps.

In addition, in this embodiment, the number of levels for offset elimination may be changed. For example, the number may be changed according to the interval between the completion time of the second step and the time at which a subsequent biological particle (e.g., a collection-target particle) is sensed.

In order to increase the pressure at a plurality of levels at the fourth step in this manner, the second rising edge section for executing the fourth step may have a multi-step rising edge. Thereby, the step counter value can be efficiently returned. This contributes to reduction of the frequency at which the step counter value becomes the maximum value, and furthermore can enhance fractionation efficiency also.

In addition, it is not necessary to perform offset elimination in some cases. For example, it is not necessary to return the step counter value in some cases. Accordingly, in the second fractionation operation, the fourth step may not be executed. In view of this, the biological particle fractionation system may be configured to execute the fourth step in a case where a predetermined condition is satisfied. For example, the information processing unit can decide whether to execute the fourth step on the basis of the interval between the completion time of the second step in the second fractionation operation and the time at which the subsequent biological particle is sensed.

This embodiment is explained in more detail below.

As explained with reference to (7) above, when the step counter value is the maximum value, fractionation cannot be performed using a falling-edge-included pulse drive waveform. Accordingly, a subsequent collection-target particle satisfying the condition that the time interval between collection-target particles is short (ΔTp < Twr) is aborted. Therefore, the fractionation efficiency is enhanced by reducing the frequency at which the step counter reaches the maximum value.

In the present embodiment, in a case where the time interval ΔTp between two collection-target particles is long, as depicted in FIG. 19, a multi-step-rising-edge-included pulse drive waveform to which a multi-step rising edge section is added is used. The multi-step-rising-edge-included pulse drive waveform depicted in the figure has the first falling edge section Wf1 and the first rising edge section Wr1, and further has the second rising edge section Wr2. The second rising edge section Wr2 is a rising edge section that includes three rising edge sections Wr21, Wr22, and Wr23, that is, executes multi-step offset elimination.

Note that each of maintaining times Wm1 to Wm4 is provided between adjacent two waveform sections.

In this manner, in a case where ΔTp is long, a greater number of rising operations may be performed. By referencing ΔTp, an appropriate number of times of rising operations can be selected.

In addition, in order to decide whether it is possible or not possible to execute rising operations and to decide the number of times of rising operations, another index related to the time interval between a collection-target particle and a subsequent particle may be referenced. The following explains ΔTr(n), but another time interval may be referenced.

For example, the number of times of execution of rising operations may be selected on the basis of a rising-edge application completion time and an arrival time of a subsequent collection-target particle.

FIG. 20 depicts the relation between the time interval ΔTr(n) between microparticles and a multi-step-rising-edge-included pulse drive waveform. Parameters in the figure have the following meanings.

ΔTr(n): The time interval between a rising-edge application completion time and the arrival time of a subsequent collection-target particle (or a falling-edge application start time for the collection of the subsequent collection-target particle (n: the number of times of application of consecutive rising edges. n ≥ 0.)

Tmr: The minimum time interval at which the next application of a rising edge is permitted

In the embodiment, for example, the time interval ΔTr(n) is computed every time a rising edge is applied.

For example, regarding FIG. 20, in a case where the first rising edge section Wr1 is applied (in the case of n = 0), the time interval ΔTr(0) between the application completion time of the rising edge section Wr1 and the arrival time of a subsequent collection-target particle is computed, the time interval is compared with the minimum time interval Tmr, and then, in a case where ΔTr(0) > Tmr, the next first second rising edge section Wr21 is applied.

Next, in a case where the second rising edge section Wr21 is applied, the time interval ΔTr(1) between the application completion time of the rising edge section Wr21 and the arrival time of the subsequent collection-target particle is computed, the time interval is compared with the minimum time interval Tmr, and then, in a case where ΔTr(1) > Tmr, the next second second rising edge section Wr22 is applied.

Next, in a case where the second second rising edge section Wr22 is applied, the time interval ΔTr(2) between the application completion time of the rising edge section Wr22 and the arrival time of the subsequent collection-target particle is computed, the time interval is compared with the minimum time interval Tmr, and then, in a case where ΔTr(2) > Tmr, the next third second rising edge section Wr23 is applied.

In this manner, the time interval ΔTr(n) is computed every time a rising edge is applied, the time interval is compared with the minimum time interval Tmr, and then, in a case where ΔTr(n) > Tmr, the next rising edge section is applied. Then, after the next rising edge section is applied, the time interval ΔTr(n+1) is computed further, the time interval is compared with the minimum time interval Tmr, and then, in a case where ΔTr(n+1) > Tmr, the further next rising edge section is applied.

In this manner, in the embodiment, it may be decided whether to apply a rising edge section further on the basis of the time interval ΔTr(n).

In addition, in this embodiment, in a case where ΔTr(n) ≤ Tmr as the result of the comparison, it is decided not to apply a rising edge section. This is because, if a rising edge section is applied in this case, fractionation of a subsequent particle can be influenced.

In addition, in this embodiment, in a case where the step counter value is 0, it is decided not to apply a rising edge section. This is because, in this case, the application of a rising edge section is not necessary.

For example, the step counter value becomes 0 by applying the rising edge section Wr2 depicted in FIG. 20. Accordingly, the pressure increasing process ends.

That is, the comparison and the application of a rising edge section may be repeated until ΔTr(n) < Tmr or the step counter value becomes 0.

In this manner, in this embodiment, the biological particle fractionation system can repetitively execute pressure increases in the collection flow path by the application of a rising edge section until the time interval ΔTr(n) computed every time a rising edge section is applied becomes shorter than the predetermined value Tmr.

As explained above, in the embodiment, it may be decided whether to increase the pressure in the collection flow path on the basis of the time interval ΔTr(n). In addition, in this decision, the step counter value may be referenced.

Even in a case where rising operations are executed multiple times at the fourth step of the second fractionation operation, each waveform section may be configured similarly to the case where a rising operation is executed once as mentioned in (7) above.

The numerical value ranges for the amplitude and durations of the first falling edge section for executing the first step and the first rising edge section for executing the second step, and the maintaining time may be as explained with respect to the first fractionation operation (falling-edge-included pulse drive waveform) above, and the explanation applies also to the second fractionation operation in this example.

For example, the amplitude of each of the plurality of rising edge sections corresponding to the fourth step may be equal to or greater than 0.1 V, preferably equal to or greater than 1 V, and more preferably equal to or greater than 5 V. In addition, for example, the amplitude of each of the plurality of rising edge sections may be equal to or lower than 150 V, preferably equal to or lower than 100 V, and more preferably equal to or lower than 50 V.

For example, the duration of each of the plurality of rising edge sections corresponding to the fourth step may be equal to or longer than 1 µs, preferably equal to or longer than 5 µs, and more preferably equal to or longer than 15 µs. In addition, for example, the duration of each of the plurality of rising edge sections may be equal to or shorter than 100 µs, preferably equal to or shorter than 60 µs, and more preferably equal to or shorter than 30 µs.

In addition, for example, the maintaining time between two consecutive rising edge sections may be equal to or greater than 0 µs. In addition, for example, the maintaining time may be equal to or shorter than 100 µs, preferably equal to or shorter than 50 µs, and more preferably equal to or shorter than 30 µs. That is, the maintaining time may be 0 µs, but may be longer than 0 µs.

### (8-1) Example 1 of Processing Procedure Performed by Biological Particle Fractionation System

An example of the procedure of a process executed by the biological particle fractionation system according to the present disclosure is explained with reference to FIG. 21. The figure is the same as the flow diagram in FIG. 16 explained in (7) above except that Step S30 (a step surrounded by a broken line) is added. At Step S30, a process of deciding whether to execute the fourth step and to decide levels at which the pressure is to be increased in a case where the fourth step is executed is executed. These decisions are executed on the basis of the time interval ΔTr(n). Since the process is a process related to further pressure increases, the process is also called an "additional pressure increasing process" in the present specification. By executing Step S30, it is possible to decide whether to eliminate an offset, and further it is possible to execute offset elimination with an appropriate number of levels in a case where the offset is to be eliminated.

Step S30 is executed in a case where the second fractionation operation is selected in the waveform selection process (i.e. in a case where Step S28 has been executed). More specifically, Step S30 is executed in a case where the second fractionation operation has been selected at Step S15 in FIG. 16, and then the second fractionation operation has been executed at Step S16.

In a case where the first fractionation operation has been selected at Step S15, and then the first fractionation operation has been executed at Step S16, Step S30 may not be executed, and the process may be advanced to Step 17.

In this manner, Step S30 may be executed only in a case where the second fractionation operation has been selected.

A more specific example of Step S30 is explained below with reference to FIG. 22. The figure is an example of a flow diagram of the additional pressure increasing process.

At Step S31, the biological particle fractionation system starts the additional pressure increasing process.

At Step S32, the biological particle fractionation system calculates the time interval ΔTr(n). In order to calculate ΔTr(n), a rising-edge application completion time in the second fractionation operation executed at Step S16 is acquired. Then, the time interval ΔTr(n) is calculated on the basis of the rising-edge application completion time and the arrival time of a subsequent collection-target particle.

At Step S33, the biological particle fractionation system decides whether the step counter value is greater than 0. In a case where the step counter value is greater than 0, the biological particle fractionation system advances the process to Step S34. In a case where the step counter value is not greater than 0 (i.e. in a case where the step counter value is 0), the biological particle fractionation system advances the process to Step S36.

At Step S34, the biological particle fractionation system decides whether the time interval ΔTr(n) is longer than Tmr. In a case where ΔTr(n) is longer than Tmr, the biological particle fractionation system advances the process to Step S35. In a case where ΔTr(n) is not longer than Tmr (i.e. in a case where ΔTr(n) is equal to or shorter than Tmr), the biological particle fractionation system advances the process to Step S35.

At Step S35, the biological particle fractionation system decides to further increase the pressure in the collection flow path. According to the decision result, for example, the biological particle fractionation system applies a rising edge section, and eliminates an offset of the collection flow path. By the application of the rising edge section, the collection flow path is deformed, and the volume of the collection flow path decreases. Thereby, the pressure in the collection flow path may be increased further. After the decision, the biological particle fractionation system changes n to n+1, and returns the process to Step S32, and ΔTr(n+1) is calculated. In this manner, Steps S32 to S35 are repeated until the step counter value becomes 0 or ΔTr(n) ≤ Tmr.

At Step S36, the biological particle fractionation system ends the additional pressure increasing process.

As explained above, the biological particle fractionation system may be configured to decide whether to execute the fourth step. In addition, the biological particle fractionation system may be configured to be able to execute the offset elimination process multiple times at the fourth step in a case where the fourth step is to be executed. Furthermore, the biological particle fractionation system may be configured to be able to change the number of times of the offset elimination process to be executed at the fourth step. The number of times the offset elimination process is performed may be decided on the basis of an interval calculated by a predetermined scheme as mentioned above (particularly, an time interval such as ΔTr(n)). These decisions may be executed by the abovementioned information processing unit. Such decision processes contribute to efficiency enhancement or acceleration of particle fractionation.

Further, the offset elimination process may be increasing the pressure in the collection flow path as mentioned above. That is, the biological particle fractionation system may be configured to increase the pressure by one level or increase the pressure at a plurality of levels in a case where the fourth step is to be executed. The levels may be decided on the basis of the interval calculated by the predetermined scheme. These decisions may be executed by the information processing unit. On the basis of the decision results, the information processing unit drives the fractionating unit, and causes the fractionating unit to execute a selected fractionation operation.

### (8-2) Example of Time Chart in Case Where Waveform Selection Process Is Performed

An example of a time chart of the execution of the waveform selection process explained above is explained with reference to FIG. 23. The figure is an example of the time chart, and the time chart depicts events E21 to E29 in which collection-target particles are sensed. A in the figure represents event sensing times, B in the figure represents application timings of the falling-edge-included pulse drive waveform, C in the figure represents application timings of a pulse drive waveform (a rising-edge-unincluded pulse drive waveform or the rising-edge-included pulse drive waveform), and D represents a drive signal. E represents application timings of rising edge sections related to the additional pressure increasing process.

A waveform selection process performed for each event is explained below.

A waveform selection process related to the collection-target particle of the event E21 is the same as the event E11 explained in (7-3) above. Accordingly, the explanation of the event E21 is omitted.

Regarding the collection-target particle of the event E22, a waveform selection process is performed similarly to the event E12 explained in (7-3) above, and, by the waveform selection process, the second fractionation operation is selected as a fractionation operation to be applied for fractionation of the collection-target particle, that is, the rising-edge-included pulse drive waveform is selected. Then, at Step S16, the second fractionation operation is executed, thereby making the step counter value 0.

Next, as explained in (8-1) above, the biological particle fractionation system executes Step S30 as a result of the selection of the second fractionation operation. An example of details of Step S30 may be one depicted in FIG. 22 explained above.

At Step S31 in the figure, the biological particle fractionation system starts the additional pressure increasing process.

The biological particle fractionation system acquires ΔTr(n) at Step S32. Next, at Step S33, the biological particle fractionating apparatus references the step counter value. Since the step counter value is 0, the process is advanced to Step S36, the pressure is not increased, and the process related to a pressure increase is ended.

The events E23 to E25 are the same as the events E13 to E15 explained in (7-3) above. Accordingly, the explanation of these events is omitted.

Regarding the collection-target particle of the event E26, a waveform selection process is performed similarly to the event E16 explained in (7-3) above, and, by the waveform selection process, the second fractionation operation is selected as a fractionation operation to be applied for fractionation of the collection-target particle, that is, the rising-edge-included pulse drive waveform is selected. Then, at Step S16, the second fractionation operation is executed.

Next, as explained in (8-1) above, the biological particle fractionation system executes Step S30 as a result of the selection of the second fractionation operation.

At Step S31 in FIG. 22, the biological particle fractionation system starts the additional pressure increasing process.

At Step S32, the biological particle fractionation system acquires ΔTr(n).

Next, at Step S33, the biological particle fractionation system references the step counter value. Since the step counter value is greater than 0 (i.e. 3 (maximum value)), the process is advanced to Step S34.

At Step S34, the biological particle fractionation system compares ΔTr(n) and Tmr. Here, n is 1. Since ΔTr(1) > Tmr, the biological particle fractionation system advances the process to Step S35.

At Step S35, the biological particle fractionation system decides to increase the pressure. As a result of this, the biological particle fractionation system applies a rising edge section, changes n from 1 to 2, and returns the process to Step S32.

At Step S32, the biological particle fractionation system acquires ΔTr(2), and then executes Steps S33 to S35. At Step S35, the biological particle fractionation system decides to increase the pressure. As a result of this, the biological particle fractionation system applies a rising edge section, changes n from 2 to 3, and returns the process to Step S32.

The biological particle fractionation system acquires ΔTr(3) at Step S32, but, since the step counter value is 0 at Step S33, the process is advanced to Step S36. Thereby, the additional pressure increasing process is ended.

Regarding the collection-target particles of the events E27 and E28, a waveform selection process is performed similarly to the event E16 explained in (7-3) above, and, by the waveform selection process, the second fractionation operation is selected as a fractionation operation to be applied for fractionation of the collection-target particle. As a result of the selection of the second fractionation operation, the biological particle fractionation system executes Step S30.

At Step S31 in FIG. 22, the biological particle fractionation system starts the additional pressure increasing process.

At Step S32, the biological particle fractionation system acquires ΔTr(n).

Next, at Step S33, the biological particle fractionation system references the step counter value. Since the step counter value is 0, the process is advanced to Step S36. Thereby, the additional pressure increasing process is ended.

Regarding the collection-target particle of the event E29, the same process as that for the event E21 is performed.

### (8-3) Example of Algorithm

An example of an algorithm embodying microparticle fractionation according to a modification example of the present disclosure is explained using a flowchart depicted in FIG. 30. Only portions that are changed from FIG. 29 are depicted in FIG. 30. The difference from the previous implementation example is the processing content of the fourth process performed by the output queue circuit. After a pulse drive waveform is output and the output queue is updated at S200-1 to S200-3, processes at S200-4 to S200-6 are performed for outputting a multi-step rising edge. First, at S200-4, it is decided whether to apply a rising edge further after the pulse drive waveform is output. In a case where a rising edge is to be applied consecutively as a result of the decision, the application timing of the rising edge is written to the memory at S200-5. Next, at S200-6, it is decided whether the trigger output of the rising edge has been completed. After the trigger output of the rising edge has been completed, the process returns to S200-4, and it is decided once again whether to apply a rising edge. While the results of decisions as to whether to apply a rising edge remain positive, the output of a falling edge is repeated. In a case where a decision result is negative, the output of a multi-step falling edge is completed.

### (9) Fractionation Process Example 3

The pressure is increased by one level at the fourth step of the second fractionation operation explained in (7) above. In addition, the pressure increasing process with one or more levels is performed at the fourth step of the second fractionation operation explained in (8) above.

In the present disclosure, in the second fractionation operation, a fifth step of preventing a particle reverse flow that can be generated as a result of the execution of the second step may be executed further before the fourth step. For example, at the fifth step, for example, the pressure increased at the second step may be lowered again and raised thereafter again. Then, after the fifth step, the fourth step is executed.

The second fractionation operation in which the fifth step is executed is explained in more detail below with reference to FIG. 24. The figure depicts an example of a pulse drive waveform to be used in order to execute the second fractionation operation in which the fifth step is executed. As depicted in the figure, the pulse drive waveform for executing the second fractionation operation in which the fifth step is executed has the second falling edge section Wf2, the second rising edge section Wr2, and a third rising edge section Wr3 (including a rising edge section Wr31, a rising edge section Wr32, and a rising edge section Wr33) in addition to the first falling edge section Wf1 and the first rising edge section Wr1.

As depicted in the figure, there are the second falling edge section Wf2 and the second rising edge section Wr2 after the first falling edge section Wf1 and the first rising edge section Wr1. The second falling edge section Wf2 and the second rising edge section Wr2 can suppress a discharge flow, and further can also suppress unnecessary oscillations.

In addition, as depicted in the figure, there is the third rising edge section Wr3 after the second rising edge section Wr2. The configuration of the third rising edge section can be changed as appropriate according to a step counter as mentioned later. In addition, the third rising edge section Wr3 may not be provided. Whereas the third rising edge section Wr3 is a multi-step (three-step) rising edge having three rising edge sections, the rising edge section Wr31, the rising edge section Wr32, and the rising edge section Wr33, in the figure, the number of levels may be changed. For example, the rising edge section Wr33 may be omitted, making the number of levels two, or furthermore the rising edge section Wr31 and the rising edge section Wr32 may be omitted, making the number of levels one. Alternatively, a rising edge section may be added further, and the third rising edge section Wr3 may be configured to have a rising edge section with four levels or more levels.

In the present specification, the pulse drive waveform having the second falling edge section and the second rising edge section in addition to the first falling edge section and the first rising edge section is also called a "falling-edge/rising-edge-included pulse drive waveform."

In the present disclosure, in a case where the interval ΔTp between one collection-target particle and a subsequent collection-target particle flowing next to the one collection-target particle is long, the second fractionation operation including the abovementioned fifth step may be used as a fractionation operation for fractionating the one collection-target particle. Thereby, the generation of a discharge flow can be suppressed, and stable particle fractionation becomes possible. The second fractionation operation including the fifth step excels from the perspective of the suppression of a discharge flow over the second fractionation operation explained above.

The suppression of a discharge flow by the second fractionation operation including the fifth step is explained below with reference to FIG. 25.

The figure depicts a simulation result (BI) of the flow rate in the connecting flow path in a case where the actuator is driven with a rising-edge-included pulse drive waveform (AI) in order to execute the second fractionation operation not including the fifth step, and a simulation result (BII) of the flow rate in the connecting flow path in a case where the actuator is driven with a falling-edge/rising-edge-included pulse drive waveform (AII) in order to execute the second fractionation operation including the fifth step.

As depicted in the figure, a significant discharge flow is generated immediately after the driving with the rising-edge-included pulse drive waveform. As depicted in a graph BI, the discharge flow is generated after time tw1 has elapsed since the start of the application of the drive waveform. In contrast, the generation of the discharge flow is delayed by the addition of the second falling edge section in the falling-edge/rising-edge-included pulse drive waveform. As depicted in a graph BII, the discharge flow is generated after time tw2 has elapsed since the start of the application of the drive waveform, and the discharge flow is generated after tw1. The delay in the generation of the discharge flow tolerates a particle collected into the collection flow path to flow further downstream in the collection flow path. Accordingly, even if a discharge flow is generated, it is possible to prevent the collected particle from flowing back from the collection flow path through the connecting flow path (particularly, from returning to the outside of the collection flow path) if the generation of the discharge flow is delayed.

In addition, FIG. 26 depicts a simulation result (I) of temporal changes of the position of a collected particle in the flowing direction in a case where the actuator is driven with a rising-edge-included pulse drive waveform in order to execute the second fractionation operation not including the fifth step, and depicts a simulation result (II) of temporal changes of the position of a collected particle in the flowing direction in a case where the actuator is driven with a falling-edge/rising-edge-included pulse drive waveform in order to execute the second fractionation operation including the fifth step.

In the figure, the vertical axis represents the position of the fractionated particle in the flowing direction. Moving toward "+" means moving toward positions further downstream in the collection flow path, and moving toward "-" means moving closer to the main flow path. "C" is the central position of the liquid supply flow path. "E" is the leading-end position of the connecting flow path, that is, the position of the entrance to the connecting flow path on the side of the main flow path.

Each simulation was conducted under two conditions with different amplitude of a drive waveform (drive amplitude: medium, drive amplitude: small). In the figure, Am denotes simulation results in cases where the drive amplitude is medium, and As denotes simulation results in cases where the drive amplitude is small.

In order to collect a to-be-fractionated particle into the collection flow path, the to-be-fractionated particle needs to have advanced toward the collection flow path past a position C of the liquid supply flow path connected in the connecting flow path.

Under the condition where the drive amplitude is "medium," a particle was transported past the position C in the connecting flow path toward the collection flow path with both the rising-edge-included pulse drive waveform and the falling-edge/rising-edge-included pulse drive waveform, and fractionation was successful.

It should be noted that it can be known that, in a case where fractionation was performed with the rising-edge-included pulse drive waveform, a significant discharge flow was generated immediately after the driving, and accordingly the to-be-fractionated particle remained stagnant at a particular position while the discharge flow was being generated.

In contrast, in a case where fractionation was performed with the falling-edge/rising-edge-included pulse drive waveform, the generation of a discharge flow was delayed, and accordingly a to-be-fractionated particle had been transported further downstream by the same time.

Under the condition where the drive amplitude was "small," in a case where fractionation was performed with the rising-edge-included pulse drive waveform, stagnation due to a discharge flow was generated before the passage through the position C in the liquid supply flow path, and fractionate failed.

In contrast, in a case where fractionation was performed with the falling-edge/rising-edge-included pulse drive waveform, there was a significant temporal difference between the driving and the generation of a discharge flow, accordingly a to-be-fractionated particle could be transported further downstream, and thereby collection of the to-be-fractionated particle was successful.

According to these results, fractionation with a falling-edge/rising-edge-included pulse drive waveform can be performed even with smaller drive amplitude as compared with fractionation with a rising-edge-included pulse drive waveform, and can be more stable microparticle fractionation.

As explained above, in the second fractionation operation, the fifth step of preventing a particle reverse flow that can be generated as a result of the execution of the second step may be executed further. The fifth step may be provided between the second step and the fourth step on the time axis for one fractionation operation.

A waveform applied in order to execute the fifth step may have a falling edge section and a rising edge section (and optionally a maintaining time portion between these two waveform sections).

For example, the amplitude of the falling edge section for executing the fifth step may be equal to or greater than 0.1 V, preferably equal to or greater than 1 V, and more preferably equal to or greater than 5 V. In addition, for example, the amplitude of the falling edge section may be equal to or lower than 150 V, preferably equal to or lower than 100 V, and more preferably equal to or lower than 50 V.

For example, the duration of the falling edge section for executing the fifth step may be equal to or longer than 1 µs, preferably equal to or longer than 5 µs, and more preferably equal to or longer than 15 µs. In addition, for example, the duration of the falling edge section may be equal to or shorter than 100 µs, preferably equal to or shorter than 60 µs, and more preferably equal to or shorter than 30 µs.

For example, the amplitude of the rising edge section for executing the fifth step may be equal to or greater than 0.1 V, preferably equal to or greater than 1 V, and more preferably equal to or greater than 5 V. In addition, for example, the amplitude of the rising edge section may be equal to or lower than 150 V, preferably equal to or lower than 100 V, and more preferably equal to or lower than 50 V.

For example, the duration of the rising edge section for executing the fifth step may be equal to or longer than 1 µs, preferably equal to or longer than 5 µs, and more preferably equal to or longer than 15 µs. In addition, for example, the duration of the rising edge section may be equal to or shorter than 100 µs, preferably equal to or shorter than 60 µs, and more preferably equal to or shorter than 30 µs.

For example, the maintaining time of the fifth step may be equal to or longer than 0 µs, and may preferably be equal to or longer than 10 µs. In addition, for example, the maintaining time may be equal to or shorter than 100 µs, preferably equal to or shorter than 60 µs, and more preferably equal to or shorter than 40 µs. That is, the maintaining time may be 0 µs, but may be longer than 0 µs.

### (10) Configuration Example of Biological Particle Fractionating Apparatus

In one embodiment, the biological particle fractionation system of the present disclosure may be configured as a biological particle fractionating apparatus, and, for example, may be configured as a cell fractionating apparatus. The biological particle fractionating apparatus may be an apparatus that analyzes and/or fractionates biological particles in a microchip without forming droplets. The biological particle fractionating apparatus may be configured to execute the abovementioned checking processes. This embodiment is explained below with reference to FIG. 32A and FIG. 32B.

FIG. 32A depicts a schematic diagram of a configuration example of a biological particle fractionation microchip and a configuration example of a biological particle analyzing apparatus including the microchip. FIG. 32B depicts an example of a flow diagram of a biological particle fractionation operation performed by the biological particle analyzing apparatus.

A biological particle fractionation microchip 150 depicted in FIG. 32A has the sample liquid flow path 152 and the sheath liquid flow paths 154 that merge with the sample liquid flow path 152 at the merging section 162. The biological particle fractionation microchip 150 is provided further with a sample liquid inlet 151 and a sheath liquid inlet 153.

Note that parts of the sheath liquid flow paths 154 are represented by dotted lines in FIG. 32A. The portions represented by the dotted lines are at a position (a position shifted in the light-axis direction mentioned later) lower than the sample liquid flow path 152 represented by solid lines, and, at the position where the flow paths represented by the dotted lines and the flow path represented by the solid lines cross, these flow paths do not communicate with each other. In addition, the sample liquid flow path 152 is depicted as making two turns between the sample liquid inlet 151 and the merging section 162 in FIG. 32A, and this is for making it easier to distinguish the sample liquid flow path 152 from the sheath liquid flow paths 154. The sample liquid flow path 152 may be configured linearly without making turns in this manner between the sample liquid inlet 151 and the merging section 162.

In a biological particle fractionation operation, a sample liquid including biological particles is introduced from the sample liquid inlet 151 into the sample liquid flow path 152, and a sheath liquid not including biological particles is introduced from the sheath liquid inlet 153 into the sheath liquid flow paths 154.

The biological particle fractionation microchip 150 has a merging flow path 155 having the merging section 162 at one end thereof.

The sample liquid and the sheath liquid merge at the merging section 162, and then flow in the merging flow path 155 toward a particle fractionating unit 157. Particularly, the sample liquid and the sheath liquid merge at the merging section 162, and, for example, a laminar flow in which the sample liquid is surrounded by the sheath liquid is formed. Preferably, biological particles are next to each other approximately in one line in the laminar flow. The flow path structure in which the sample liquid flow path 152 and the two sheath liquid flow paths 154 merge at the merging section 162, and the merging flow path 155 having the merging section 162 at the one end thereof is included forms a laminar flow including biological particles that flow next to each other approximately in one line. Thereby, it becomes easier to distinguish light generated by light emission onto one biological particle from light generated by light emission onto another biological particle, in light emission in a sensing region 156 explained below.

The biological particle fractionation microchip 150 further has the particle fractionating unit 157 at the other end of the merging flow path 155. FIG. 12 depicts an enlarged view of the particle fractionating unit 157. As depicted in A in FIG. 12, at the other end, the merging flow path 155 is connected with a biological particle collection flow path 159 via the connecting flow path 170. As depicted in A in FIG. 2, the merging flow path 155, the connecting flow path 170, and the biological particle collection flow path 159 may be coaxial.

In a case where a collection-target particle flows to the particle fractionating unit 157, as depicted in B in FIG. 2, a flow that flows from the merging flow path 155 through the connecting flow path 170 to enter the biological particle collection flow path 159 is formed, and the collection-target particle is collected into the biological particle collection flow path 159. In this manner, the collection-target particle flows through the connecting flow path 170 into the biological particle collection flow path 159.

In a case where a biological particle which is not a collection-target particle flows to the particle fractionating unit 157, the biological particle which is not a collection-target particle flows to branch flow paths 158 as depicted in C in FIG. 2. In this case, a flow that enters the biological particle collection flow path 159 is not formed.

As depicted in FIG. 32A, the biological particle collection flow path 159 is formed to extend linearly from the particle fractionating unit 157, make a U-turn, and then reach the same surface as the surface formed by the sample liquid inlet 151 and the sheath liquid inlet 153. A liquid flowing through the biological particle collection flow path 159 is expelled from a collection flow path terminal end 163 to the outside of the chip.

As depicted in FIG. 32A, the two branch flow paths 158 are also formed to extend linearly from the particle fractionating unit 157, make a U-turn, and then reach the same surface as the surface formed by the sample liquid inlet 151 and the sheath liquid inlet 153. A liquid flowing through the branch flow paths 158 is expelled from branch flow path terminal ends 166 to the outside of the chip.

In FIG. 32A, the representation method of the biological particle collection flow path 159 changes from solid lines to dotted lines at the portion where the biological particle collection flow path 159 makes a U-turn. This change represents that the position in the light-axis direction changes in the middle. By changing the position in the light-axis direction in this manner, the biological particle collection flow path 159 and the branch flow paths 158 do not communicate with each other at the portion where the biological particle collection flow path 159 crosses the branch flow paths 158.

Both the collection flow path terminal end 163 and the two branch flow path terminal ends 166 are formed on a surface where the sample liquid inlet 151 and the sheath liquid inlet 153 are formed. Further, an introducing flow path inlet 164 for introducing a liquid into an introducing flow path 161 is also formed on the surface. In this manner, in the biological particle fractionation microchip 150, all inlets from which liquids are introduced and outlets from which liquids are expelled are formed on the one surface. Thereby, the attachment of the chip to a biological particle analyzing apparatus 100 becomes easier. For example, as compared with a case where inlets and/or outlets are formed on two or more surfaces, the connection between flow paths provided to the biological particle analyzing apparatus 100 and flow paths of the biological particle fractionation microchip 150 becomes easier.

As depicted in FIG. 32A and FIG. 2, the biological particle fractionation microchip 150 has the introducing flow path 161 for introducing a liquid to the connecting flow path 170.

By introducing a liquid from the introducing flow path 161 to the connecting flow path 170, the connecting flow path 170 is filled with the liquid. Thereby, the entrance of non-target biological particles into the biological particle collection flow path 159 can be prevented.

The biological particle fractionation microchip 150 has the two branch flow paths 158 that are connected with the merging flow path 155 at the other end of the merging flow path 155. In this manner, in the biological particle fractionation microchip to be used in the present technology, the merging flow path may branch into the connecting flow path and the at least one branch flow path.

A biological particle other than a collection-target particle flows to either of the two branch flow paths 158 without entering the biological particle collection flow path 159.

In addition, as depicted in FIG. 32A, the biological particle fractionation microchip 150 is included as a part of the biological particle analyzing apparatus 100 including a light emitting unit 101, a detection unit 102, and a control unit 103 in addition to the microchip. The light emitting unit 101, the detection unit 102, and the control unit 103 are equivalent to the light irradiation unit 6101, the detection unit 6102, and the information processing unit 6103, respectively, mentioned in (2) above, and the explanation thereof also applies to the present configuration example. As depicted in FIG. 13, the control unit 103 of the biological particle analyzing apparatus 100 can include a signal processing unit 104, a deciding unit 105, and a fractionation control unit 106.

As depicted in FIG. 32B, a biological particle fractionation operation using the biological particle fractionation microchip 150 explained above includes a flow-through step S101 at which a liquid including biological particles is caused to flow through the merging flow path 155, a decision step S102 at which it is decided whether a biological particle flowing through the merging flow path 155 is a collection-target particle, and a collection step S103 at which a collection-target particle is collected into the biological particle collection flow path 159. Each step is explained below.

### (10-1) Flow-Through Step

At the flow-through step S101, a sample liquid including biological particles and a sheath liquid not including biological particles are introduced from the sample liquid inlet 151 and the sheath liquid inlet 153 and into the sample liquid flow path 152 and the sheath liquid flow paths 154, respectively.

The sample liquid and the sheath liquid merge at the merging section 162, and, for example, a laminar flow in which the sample liquid is surrounded by the sheath liquid is formed. Preferably, biological particles are next to each other approximately in one line in the laminar flow. That is, at the flow-through step S101, a laminar flow including biological particles that flow next to each other in approximately one line can be formed.

In this manner, at the flow-through step S101, the liquid including biological particles is caused to flow in the merging flow path 155 particularly as a laminar flow. The liquid flows in the merging flow path 155 from the merging section 162 toward the particle fractionating unit 157.

### (10-2) Decision Step

At the decision step S102, it is decided whether a biological particle flowing through the merging flow path 155 is a collection-target particle. The decision can be performed by the deciding unit 105. The deciding unit 105 can perform the decision on the basis of light generated by light emission onto a biological particle by the light emitting unit 101.

The signal processing unit 104 included in the control unit 103 can process the waveform of a digital electric signal obtained by the detection unit 102, and generate information (data) regarding characteristics of light to be used for the decision by the deciding unit 105. As the information regarding characteristics of light, the signal processing unit 104 can acquire one, two, or three of the width of the waveform, the height of the waveform, and the area of the waveform from the waveform of the digital electric signal, for example. In addition, the information regarding characteristics of light may include the time at which the light has been sensed, for example. The process performed by the signal processing unit 104 mentioned above can be performed particularly in an embodiment in which the scattered light and/or fluorescence is sensed.

The deciding unit 105 included in the control unit 103 decides whether a biological particle through the flow path is a collection-target particle flowing on the basis of light generated by light emission onto the biological particle.

### (10-3) Collection Step

At the collection step S103, a biological particle decided to be a collection-target particle at the decision step S102 is collected into the biological particle collection flow path 159. The collection step S103 is performed in the particle fractionating unit 157 in the microchip 150. In the particle fractionating unit 157, the laminar flow flowing through the merging flow path 155 flows being branched into the two branch flow paths 158. Whereas the particle fractionating unit 157 depicted in FIG. 10 has the two branch flow paths 158, the number of branch flow paths is not limited to two. For example, the particle fractionating unit 157 can be provided with one or more (e.g., two, three, or four, etc.) branch flow paths. The branch flow paths may be configured to branch in a Y-shape on one plane as in FIG. 10, or may also be configured to branch three-dimensionally.

At the collection step S103, a pressure variation in the biological particle collection flow path 159 causes the collection-target particle to be collected into the biological particle collection flow path through the connecting flow path. For example, the collection may be performed by generating negative pressure in the biological particle collection flow path 159 as mentioned above. For example, the negative pressure can be generated by the actuator 107 (particularly, a piezo actuator) attached outside the microchip 150 deforming a wall defining the biological particle collection flow path 159. The negative pressure can form the flow that enters the biological particle collection flow path 159. In order to generate the negative pressure, for example, the actuator 107 can be attached outside the microchip 150 such that the wall of the biological particle collection flow path 159 can be deformed. The deformation of the wall can change the inner space of the biological particle collection flow path 159, and generate negative pressure. For example, the actuator 107 can be a piezo actuator. When the collection-target particle is sucked into the biological particle collection flow path 159, the sample liquid included in the laminar flow or the sample liquid and the sheath liquid included in the laminar flow also can flow into the biological particle collection flow path 159. In this manner, the collection-target particle is fractionated in the particle fractionating unit 157 and collected into the biological particle collection flow path 159.

In order to prevent a biological particle which is not a collection-target particle entering the biological particle collection flow path 159 through the connecting flow path 170, the connecting flow path 170 is provided with the introducing flow path 161. A liquid is introduced from the introducing flow path 161 into the connecting flow path 170. Due to the introduction of the liquid, the connecting flow path 170 is filled with the liquid. Further, a part of the liquid forms a flow from the connecting flow path 170 toward the merging flow path 155, and this prevents biological particles other than collection-target particles from entering the biological particle collection flow path 159. The liquid forming the flow from the connecting flow path 170 toward the merging flow path 155 does not flow in the merging flow path 155 due to a flow of the liquid that flows through the merging flow path 155 and flows to the branch flow paths 158, and flows through the branch flow paths 158 similarly to the liquid.

Note that the rest of the liquid introduced to the connecting flow path 170 flows to the biological particle collection flow path 159. Thereby, the biological particle collection flow path 159 can be filled with the liquid.

The flow having flowed to the branch flow paths 158 can be discharged to the outside of the microchip through a branch flow path terminal end 160. In addition, the collection-target particle collected into the biological particle collection flow path 159 can be discharged to the outside of the microchip through the collection flow path terminal end 163. The collection flow path terminal end 163 can be connected with a container via a flow path such as a tube. The collection-target particle may be collected in the container.

### (11) Implementation Example

The drive waveform and the fractionation process explained in Fractionation Process Example 3 in (9) above were implemented in the biological particle fractionation system according to the present disclosure, and the fractionation process was executed using the drive waveform. The fractionation process was executed in the single-particle priority mode explained in (7-1) and (7-5) above, and was executed to form an emulsion including a collection-target particle. That is, in the present implementation example, the biological particle fractionation system was configured as an emulsion producing apparatus, and advantages of the present disclosure were checked by evaluating the fractionation performance of the emulsion producing apparatus.

In order to evaluate the fractionation performance, a mixed bead sample including two types of fluorescence bead having mutually different fluorescence characteristics was prepared as a sample including collection-target particles and non-collection-target particles. The mixed bead sample was introduced to the emulsion producing apparatus, and fractionation processes were performed under each of conditions of various target concentrations and event rates. Three concentrations, 96.9%, 48.7%, and 18.2%, were used as the various target concentrations.

In addition, in order to validate the experimental results, a simulation of collection rates in a case where it was supposed that the arrival of particles at the fractionating unit follows a Poisson distribution was performed also. The simulation was performed for each of a case where the drive waveform explained in Fractionation Process Example 3 in (9) above was applied and a case where the abovementioned pulse waveform of AI (the top side of I) in FIG. 6 was applied.

Emulsions were formed by the fractionation process. Further, the collection rates and the purity of collection-target particles were evaluated under each condition. The collection rates, the purity, and the evaluation results are explained below.

The collection rates were calculated by counting log files of the emulsion producing apparatus and collected emulsion particles. FIG. 33A depicts a measurement result of the collection rates. The figure depicts a collection rate measured for each of the cases of the three target concentrations. The collection rates in the cases of 96.9%, 48.7%, and 18.2% are represented by black round markers, dark gray triangle markers, and light gray square markers, respectively.

In addition, a simulation result in a case where the drive waveform explained in Fractionation Process Example 3 in (9) above was applied (an implementation example sim in FIG. 33A), and a simulation result in a case where the abovementioned pulse waveform of AI in FIG. 6 was applied (reference example sim) are also depicted in FIG. 33A. In the figure, a black broken line represents a simulation result in a case where the present disclosure is applied in the case of the target concentration 96.9%, and a black dot-dash line represents a simulation result in a case where a conventional technology is applied in the case of the same target concentration. A dark gray broken line represents a simulation result in a case where the present disclosure is applied in the case of the target concentration 48.7%, and a dark gray dot-dash line represents a simulation result in a case where the conventional technology is applied in the case of the same target concentration. A light gray broken line represents a simulation result in a case where the present disclosure is applied in the case of the target concentration 18.2%, and a light gray dot-dash line represents a simulation result in a case where the conventional technology is applied in the case of the same target concentration.

From a comparison between the collection rates of the experimental result and the simulation results of the implementation example, it can be known that the collection rates of the experimental result closely match the simulation results.

In addition, a comparison between the results of the collection rates in a case where the drive waveform according to the present disclosure was applied and the results of the collection rates of the conventional technology reveals that the values of the results of the former cases are higher than the values of the results of the latter cases under all the conditions of the three target concentrations. For example, under a condition where the target concentration is 48.7% and the event rate is 6000 eps, the experimental results and the simulation results in the cases where the drive waveform according to the present disclosure was applied were approximately 66%, while the simulation results of the conventional technology were lower at approximately 57%. In this manner, it can be known that the present disclosure can enhance the collection rate of target particles.

In addition, as the event rate increases, the difference between the collection rate in a case where the drive waveform according to the present disclosure was applied and the collection rate in a case where the conventional technology was applied increases. This is considered to be because, as the event rate increases, the rate of collection-target particles that arrive at a short time interval increases and accordingly target particles that cannot be collected increased with the conventional technology in which a time interval at which consecutive fractionation is possible is long. That is, it can be also known that the present disclosure enhances a collection rate particularly noticeably in a case where the event rate has increased.

FIG. 33B depicts measurement results of the purity. The purity is defined as the rate of emulsion particles including only single collection target beads to the number of emulsion particles including beads (regardless of bead types and quantity) in collected emulsions. FIG. 33C depicts parts of images obtained by imaging collected emulsions with a fluorescence microscope. A on the left side in FIG. 33C is an image imaged under a condition where only collection target beads generate fluorescence, and a white dot (representing the fluorescence of a collection target bead) in each emulsion particle is a collection target bead. B on the right side in FIG. 33C is an image imaged under a condition where only non-collection-target beads generate fluorescence. It can be known from these photographs that each of the collected emulsion particles includes only one collection target bead. In addition, the experimental results of the purity reveal that, under all the measurement conditions, an emulsion including an emulsion particle including a single collection-target particle was formed at a high purity equal to or higher than approximately 98%. In this manner, it has been revealed that the present disclosure makes it possible to fractionate emulsion particles having collection-target particles at a high purity.

These results confirm that the present disclosure makes it possible to generate emulsions including emulsion particles containing fractionation-target particles at a high purity while realizing a high collection rate compared with the conventional technology.

### 2. Second Embodiment (Biological Particle Fractionation Method)

The present disclosure provides a biological particle fractionation method also. The method includes executing the fractionation process explained in "1. First Embodiment" above. More particularly, the method includes executing the fractionation process explained in "(7) Fractionation Process Example 1," " (8) Fractionation Process Example 2," or "(9) Fractionation Process Example 3" in "1. First Embodiment" above. The explanation in "1. First Embodiment" above related to these fractionation processes applies also to the biological particle fractionation method of the present disclosure.

Particularly, the fractionation operation is the first fractionation operation explained in "1. First Embodiment" above. That is, in one embodiment, the present disclosure provides a biological particle fractionation method including fractionating a collection-target particle flowing through a flow path into a collection flow path. The method may include executing, as one fractionation operation for fractionating the collection-target particle, a first step to lower the pressure in the collection flow path from a reference pressure and guide the collection-target particle into the collection flow path, a second step to restore the pressure lowered at the first step to the reference pressure, and a third step to mitigate an excess pressure variation generated as a result of the execution of the second step.

In addition, the biological particle fractionation method may include executing the second fractionation operation explained in "1. First Embodiment" above in addition to executing the first fractionation operation. That is, the biological particle fractionation method may include executing the first fractionation operation or the second fractionation operation as one fractionation operation for fractionating the collection-target particle.

The biological particle fractionation method (particularly, the first fractionation operation and the second fractionation operation) may be executed by the biological particle fractionation system mentioned in "1. First Embodiment" above, and particularly may be executed by the fractionating unit.

In addition, the biological particle fractionation method may include executing the decision process based on the interval between a collection-target particle and a subsequent biological particle which are explained in "1. First Embodiment" above. For example, the decision process is a process of deciding which fractionation operation to apply for fractionating the one collection-target particle on the basis of whether the interval is in a predetermined numerical value range.

The decision process may be executed by the biological particle fractionation system mentioned in "1. First Embodiment" above, and particularly may be executed by the information processing unit mentioned in "1. First Embodiment" above.

In addition, for example, the biological particle fractionation method may be executed as an emulsion production method. That is, the present disclosure also provides an emulsion production method including execution of the first fractionation operation. In the emulsion production method, the first fractionation operation can be executed as one fractionation operation for fractionating a collection-target particle. In addition, in one embodiment, the first fractionation operation or the second fractionation operation may be executed as one fractionation operation for fractionating a collection-target particle. By these fractionation operations, an emulsion particle including one biological particle is generated. In addition, in the emulsion production method, a process of deciding which fractionation operation to apply for fractionating one collection-target particle may be executed.

In addition, in the emulsion production method, preferably, the single-particle priority mode mentioned in "1. First Embodiment" above may be adopted. By executing the decision process in the single-particle priority mode, it is possible to prevent two or more biological particles from being included in each emulsion particle in an emulsion to be produced.

In addition, the present disclosure also provides a program for causing the biological particle fractionation system (particularly, the biological particle fractionating apparatus or the emulsion producing apparatus, for example, a flow cytometer) to execute the biological particle fractionation method. For example, the program may be stored on the biological particle fractionation system (particularly, the information processing apparatus, and more particularly a storage unit), or may be stored on an information storage medium. For example, the information storage medium may be an SD card, a micro SD card, a CD, a DVD, a flash memory, or a magnetic recording medium.

### 3. Third Embodiment (Biological Particle Fractionation Chip)

The present disclosure also provides a biological particle fractionation chip to be used in order to execute the biological particle fractionation method (particularly, the fractionation process) mentioned in "1. First Embodiment" and "2. Second Embodiment" above. That is, the explanation in "1. First Embodiment" and "2. Second Embodiment" above applies also to the biological particle fractionation chip of the present disclosure. For example, the chip may be one having the flow path system explained in "1. First Embodiment" above. For example, the chip may be the chip explained in (10) in "1. First Embodiment" above, but is not limited to the chip.

That is, in one embodiment, the present disclosure also provides a biological particle fractionation chip that has a collection flow path into which a collection-target particle flowing through a flow path is fractionated and is to be used in order to execute the biological particle fractionation method according to the present disclosure. For example, the biological particle fractionation method may include executing, as one fractionation operation for fractionating a collection-target particle, a fractionation operation including a first step to lower the pressure in the collection flow path from a reference pressure and guide the collection-target particle into the collection flow path, a second step to restore the pressure lowered at the first step to the reference pressure, and a third step to mitigate an excess pressure variation generated as a result of the execution of the second step. By executing the fractionation operation, the collection-target particle is fractionated.

In addition, the biological particle fractionation method may include executing the second fractionation operation explained in "1. First Embodiment" above in addition to executing the first fractionation operation. That is, the biological particle fractionation method may include executing the first fractionation operation or the second fractionation operation as one fractionation operation for fractionating the collection-target particle.

In addition, the present disclosure also provides a biological particle fractionation chip to be used in order to execute the emulsion production method according to the present disclosure. The emulsion production method is as explained in "1. First Embodiment" and "2. Second Embodiment" above. The chip is particularly suited for producing an emulsion including an emulsion particle including one biological particle.

Note that the present disclosure can also adopt configurations like the ones below.
[1] A biological particle fractionation system configured to fractionate a collection-target particle flowing through a flow path into a collection flow path, in which
   the biological particle fractionation system is configured to be able to execute, as one fractionation operation for fractionating the collection-target particle,
   a first step to lower a pressure in the collection flow path from a reference pressure and guide the collection-target particle into the collection flow path,
   a second step to restore the pressure lowered at the first step to the reference pressure, and
   a third step to mitigate an excess pressure variation generated as a result of execution of the second step.
[2] The biological particle fractionation system according to [1], in which
   the biological particle fractionation system is configured to change the pressure in the collection flow path by deforming the collection flow path.
[3] The biological particle fractionation system according to [1] or [2], in which
   the biological particle fractionation system is configured to apply a pulse voltage to an actuator for changing the pressure in the collection flow path in the one fractionation operation, and
   a drive waveform of the pulse voltage is configured such that the actuator executes the first step, the second step, and the third step.
[4] The biological particle fractionation system according to [3], in which
   the drive waveform of the pulse voltage has
   a first falling edge section for executing the first step,
   a rising edge section for executing the second step, and
   a second falling edge section for executing the third step.
[5] The biological particle fractionation system according to any one of [1] to [4], including:
   an information processing unit that executes a decision process based on an interval between a collection-target particle and a subsequent biological particle, in which
   the decision process is a process of deciding which fractionation operation to apply for fractionating the one collection-target particle on the basis of whether the interval is in a predetermined numerical value range.
[6] The biological particle fractionation system according to [5], in which,
   in the decision process, the information processing unit references a step counter value related to the number of times fractionation operations are able to be executed.
[7] The biological particle fractionation system according to any one of [1] to [6], in which,
   as the one fractionation operation, the biological particle fractionation system is configured to be able to execute
   a fractionation operation (hereinbelow, also called a "first fractionation operation") to execute the first step, the second step, and the third step, or
   a second fractionation operation to execute the first step and the second step and execute a fourth step to further execute elimination of an offset of the collection flow path generated by execution of the third step in a case where a predetermined condition is satisfied.
[8] The biological particle fractionation system according to [7], including:
   an information processing unit that executes a decision process based on an interval between a collection-target particle and the subsequent biological particle, in which
   the information processing unit selects either the first fractionation operation or the second fractionation operation on the basis of the interval.
[9] The biological particle fractionation system according to [7] or [8], in which
   the biological particle fractionation system is configured to increase the pressure by one level or increase the pressure at a plurality of levels, at the fourth step.
[10] The biological particle fractionation system according to [8] or [9], in which,
   in a case where the second fractionation operation is executed, the information processing unit decides whether to execute the fourth step on the basis of an interval between a completion time of the second step in the second fractionation operation and a time at which the subsequent biological particle is sensed.
[11] The biological particle fractionation system according to any one of [7] to [10], in which
   the biological particle fractionation system is configured to apply a pulse voltage to an actuator for changing the pressure in the collection flow path, and
   a drive waveform of the pulse voltage is configured such that the actuator executes the first fractionation operation or the second fractionation operation according to an interval between a collection-target particle and the subsequent biological particle.
[12]
   The biological particle fractionation system according to [11], in which
   a drive waveform for executing the first fractionation operation has a first falling edge section for executing the first step, a rising edge section for executing the second step, and a second falling edge section for executing the third step, and
   a drive waveform for executing the second fractionation operation has a first falling edge section for executing the first step and a rising edge section for executing the second step, and further has a second rising edge section for executing the fourth step in a case where the fourth step is executed.
[13] The biological particle fractionation system according to [12], in which
   the biological particle fractionation system is configured to increase the pressure by one level at the fourth step, and
   the second rising edge section for executing the fourth step has a single-step rising edge.
[14] The biological particle fractionation system according to [12] or [13], in which
   the biological particle fractionation system is configured to be able to increase the pressure at a plurality of levels at the fourth step and is configured to be able to change the number of levels at which the pressure is increased.
[15] The biological particle fractionation system according to any one of [7] to [14], in which,
   in the second fractionation operation, a fifth step of preventing a particle reverse flow capable of being generated as a result of execution of the second step is executed further.
[16] The biological particle fractionation system according to any one of [1] to [15], in which
   the biological particle fractionation system is configured as an emulsion producing apparatus, and
   the emulsion includes an emulsion particle having a fractionated collection-target particle.
[17] A biological particle fractionation method including:
   fractionating a collection-target particle flowing through a flow path into a collection flow path, in which
   the biological particle fractionation method includes executing, as one fractionation operation for fractionating the collection-target particle,
      a first step to lower a pressure in the collection flow path from a reference pressure and guide the collection-target particle into the collection flow path,
      a second step to restore the pressure lowered at the first step to the reference pressure, and
      a third step to mitigate an excess pressure variation generated as a result of execution of the second step.
[18] A biological particle fractionation chip including:
   a collection flow path where a collection-target particle flowing through a flow path is fractionated, in which
   the biological particle fractionation chip is used for fractionating the collection-target particle by executing a fractionation operation including, as one fractionation operation for fractionating the collection-target particle,
      a first step to lower a pressure in the collection flow path from a reference pressure and guide the collection-target particle into the collection flow path,
      a second step to restore the pressure lowered at the first step to the reference pressure, and
      a third step to mitigate an excess pressure variation generated as a result of execution of the second step.

### [Reference Signs List]

155: Main flow path
156: Particle sensing unit
159: Collection flow path
161: Liquid supply flow path
170: Connecting flow path
107: Actuator

## Claims

1. A biological particle fractionation system configured to fractionate a collection-target particle flowing through a flow path into a collection flow path, wherein
the biological particle fractionation system is configured to be able to execute, as one fractionation operation for fractionating the collection-target particle,
a first step to lower a pressure in the collection flow path from a reference pressure and guide the collection-target particle into the collection flow path,
a second step to restore the pressure lowered at the first step to the reference pressure, and
a third step to mitigate an excess pressure variation generated as a result of execution of the second step.

2. The biological particle fractionation system according to claim 1, wherein
the biological particle fractionation system is configured to change the pressure in the collection flow path by deforming the collection flow path.

3. The biological particle fractionation system according to claim 1, wherein
the biological particle fractionation system is configured to apply a pulse voltage to an actuator for changing the pressure in the collection flow path in the one fractionation operation, and
a drive waveform of the pulse voltage is configured such that the actuator executes the first step, the second step, and the third step.

4. The biological particle fractionation system according to claim 3, wherein
the drive waveform of the pulse voltage has
a first falling edge section for executing the first step,
a rising edge section for executing the second step, and
a second falling edge section for executing the third step.

5. The biological particle fractionation system according to claim 1, comprising:
an information processing unit that executes a decision process based on an interval between a collection-target particle and a subsequent biological particle, wherein
the decision process is a process of deciding which fractionation operation to apply for fractionating the one collection-target particle on a basis of whether the interval is in a predetermined numerical value range.

6. The biological particle fractionation system according to claim 5, wherein,
in the decision process, the information processing unit references a step counter value related to the number of times fractionation operations are able to be executed.

7. The biological particle fractionation system according to claim 1, wherein,
as the one fractionation operation, the biological particle fractionation system is configured to be able to execute
a fractionation operation (hereinbelow, also called a "first fractionation operation") to execute the first step, the second step, and the third step, or
a second fractionation operation to execute the first step and the second step and execute a fourth step to further execute elimination of an offset of the collection flow path generated by execution of the third step in a case where a predetermined condition is satisfied.

8. The biological particle fractionation system according to claim 7, comprising:
an information processing unit that executes a decision process based on an interval between a collection-target particle and the subsequent biological particle, wherein
the information processing unit selects either the first fractionation operation or the second fractionation operation on a basis of the interval.

9. The biological particle fractionation system according to claim 7, wherein
the biological particle fractionation system is configured to increase the pressure by one level or increase the pressure at a plurality of levels, at the fourth step.

10. The biological particle fractionation system according to claim 8, wherein,
in a case where the second fractionation operation is executed, the information processing unit decides whether to execute the fourth step on a basis of an interval between a completion time of the second step in the second fractionation operation and a time at which the subsequent biological particle is sensed.

11. The biological particle fractionation system according to claim 7, wherein
the biological particle fractionation system is configured to apply a pulse voltage to an actuator for changing the pressure in the collection flow path, and
a drive waveform of the pulse voltage is configured such that the actuator executes the first fractionation operation or the second fractionation operation according to an interval between a collection-target particle and the subsequent biological particle.

12. The biological particle fractionation system according to claim 11, wherein
a drive waveform for executing the first fractionation operation has a first falling edge section for executing the first step, a rising edge section for executing the second step, and a second falling edge section for executing the third step, and
a drive waveform for executing the second fractionation operation has a first falling edge section for executing the first step and a rising edge section for executing the second step, and further has a second rising edge section for executing the fourth step in a case where the fourth step is executed.

13. The biological particle fractionation system according to claim 12, wherein
the biological particle fractionation system is configured to increase the pressure by one level at the fourth step, and
the second rising edge section for executing the fourth step has a single-step rising edge.

14. The biological particle fractionation system according to claim 12, wherein
the biological particle fractionation system is configured to be able to increase the pressure at a plurality of levels at the fourth step and is configured to be able to change the number of levels at which the pressure is increased.

15. The biological particle fractionation system according to claim 7, wherein,
in the second fractionation operation, a fifth step of preventing a particle reverse flow capable of being generated as a result of execution of the second step is executed further.

16. The biological particle fractionation system according to claim 1, wherein
the biological particle fractionation system is configured as an emulsion producing apparatus, and
the emulsion includes an emulsion particle having a fractionated collection-target particle.

17. A biological particle fractionation method comprising:
fractionating a collection-target particle flowing through a flow path into a collection flow path, wherein
the biological particle fractionation method includes executing, as one fractionation operation for fractionating the collection-target particle,
a first step to lower a pressure in the collection flow path from a reference pressure and guide the collection-target particle into the collection flow path,
a second step to restore the pressure lowered at the first step to the reference pressure, and
a third step to mitigate an excess pressure variation generated as a result of execution of the second step.

18. A biological particle fractionation chip comprising:
a collection flow path where a collection-target particle flowing through a flow path is fractionated, wherein
the biological particle fractionation chip is used for fractionating the collection-target particle by executing a fractionation operation including, as one fractionation operation for fractionating the collection-target particle,
a first step to lower a pressure in the collection flow path from a reference pressure and guide the collection-target particle into the collection flow path,
a second step to restore the pressure lowered at the first step to the reference pressure, and
a third step to mitigate an excess pressure variation generated as a result of execution of the second step.
